(19) Europäisches Patentamt
European Patent Office
Office européen des brevets

(11) **EP 2 270 957 A1**

(12) **EUROPEAN PATENT APPLICATION**
published in accordance with Art. 153(4) EPC

(43) Date of publication:
**05.01.2011 Bulletin 2011/01**

(21) Application number: **09722809.2**

(22) Date of filing: **18.03.2009**

(51) Int Cl.:
*H02K 1/27* (2006.01)    *H02K 1/22* (2006.01)
*H02K 21/14* (2006.01)    *H02P 27/06* (2006.01)

(86) International application number:
**PCT/JP2009/055286**

(87) International publication number:
**WO 2009/116572 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **19.03.2008 JP 2008071689**
**19.03.2008 JP 2008071704**

(71) Applicant: **SANYO Electric Co., Ltd.**
**Moriguchi-shi**
**Osaka 570-8677 (JP)**

(72) Inventor: **TOMIGASHI, Yoshio**
**Moriguchi-Shi**
**Osaka 570-8677 (JP)**

(74) Representative: **Glawe, Delfs, Moll**
**Patent- und Rechtsanwälte**
**Postfach 26 01 62**
**D-80058 München (DE)**

(54) **PERMANENT MAGNET SYNCHRONIZATION MOTOR**

(57)    A rotor (20) has a four-pole permanent magnet (31A) embedded in a rotor layered core. A gap (31G) is also arranged together with the permanent magnet between an inner circumferential layered core and an outer circumferential layered core. A permanent magnet of one pole is formed by two permanent magnets (31A and 31B) arranged so as to sandwich a gap (31G). When Tm is the thickness of the permanent magnet in the inter-pole direction, the air gap thickness in the d-axis direction is set to [1/2 x Tm] or below.

FIG.4

EP 2 270 957 A1

**Description**

TECHNICAL FIELD

The present invention relates to a permanent magnet synchronization motor including a rotor with a permanent magnet, and a motor drive system as well as a compressor using the motor.

BACKGROUND ART

When a salient pole machine such as an interior permanent-magnet synchronization motor is driven to rotate at high speed, field-weakening control (flux-weakening control) is used in general so as to suppress excessive increase of induction voltage (electromotive force) generated in the motor due to a permanent magnet.

The field-weakening control is performed by supplying negative d-axis current to an armature winding, and the copper loss in the armature winding increases due to the d-axis current. Therefore, it is desired to provide a method to obtain the necessary field-weakening effect with less d-axis current.

There are already proposed some motor structures aimed at reduction of the d-axis current. For instance, in a certain conventional structure, four permanent magnets are arranged in a relationship of different poles on a circumferential surface of a rotor core, and further a magnetic ring is disposed so as to cover surfaces of the four permanent magnets (see, for example, Patent Document 1 below). However, when such a magnetic ring is disposed, magnetic saturation is apt to occur in the vicinity of boundary between neighboring permanent magnets. If the magnetic saturation occurs, d-axis inductance is decreased. Therefore, it is necessary to increase the d-axis current (because the field-weakening magnetic flux is expressed as a product of the d-axis inductance and the d-axis current as known well). In other words, only small effect of decreasing the d-axis current can be obtained from this conventional structure.

In addition, in another conventional structure, a plurality of permanent magnets are arranged on the circumferential surface of the rotor core, a magnetic member is disposed on the surface of the permanent magnet, and an end ring made of magnetic material is disposed at each end of the rotor core in the axial direction (see, for example, Patent Document 2 below). This end ring is opposed to the permanent magnet and the magnetic member via an air gap. In this structure, however, a magnetic attraction force between the end ring and the permanent magnet is apt to cause a structural strength problem. Therefore, development of other motor structure is requested.

Patent Document 1: JP-A-7-298587
Patent Document 2: JP-A-8-51751

DISCLOSURE OF THE INVENTION

PROBLEM TO BE SOLVED BY THE INVENTION

Therefore, it is an object of the present invention to provide a permanent magnet synchronization motor, a motor drive system and a compressor that will contribute to reduction of d-axis current necessary for field-weakening control (flux-weakening control).

MEANS FOR SOLVING THE PROBLEM

A permanent magnet synchronization motor according to the present invention includes a rotor formed as a combination of a permanent magnet, an inner circumferential core disposed inward of the permanent magnet and an outer circumferential core disposed outward of the permanent magnet. When $T_M$ denotes a thickness of the permanent magnet in an inter-pole direction of the permanent magnet, an air gap having a thickness that is $1/2 \times T_M$ or smaller is disposed between the outer circumferential core and the inner circumferential core of the rotor.

By disposing the above-mentioned air gap between the inner circumferential core and the outer circumferential core of the rotor, permeance in the d-axis direction can be increased effectively, so that d-axis current for obtaining necessary field-weakening magnetic flux can be reduced. In addition, the magnetic flux generated by the d-axis current passes through the air gap side with priority. Therefore, demagnetizing field is hardly added to the permanent magnet itself, so that demagnetization of the permanent magnet can be suppressed.

Specifically, for example, when a d-axis is set to a direction of the magnetic flux generated by the permanent magnet, the thickness of the air gap that is $1/2 \times T_M$ or smaller is a length of the air gap in the d-axis direction.

Further, for example, the thickness of the air gap is $1/5 \times T_M$ or smaller.

In addition, specifically, for example, the permanent magnet forms a permanent magnet of one pole including two permanent magnets, and the air gap is disposed between the two permanent magnets.

Alternatively, for example, the air gap is adjacent to an end surface of the permanent magnet in a direction perpendicular to the inter-pole direction of the permanent magnet.

In addition, for example, the air gap and the permanent magnet are adjacent to each other in a plane direction perpendicular to the rotation axis of the rotor.

Further, for example, the inner circumferential core and the outer circumferential core of the rotor are formed by laminating a plurality of steel sheets in a rotation axis direction of the rotor.

Thus, a magnetic circuit of the magnetic flux from the permanent magnet passing through the air gap is formed in a plane direction of the steel sheet, so that iron loss is reduced compared with the case where the magnetic circuit is formed in the lamination direction of the steel sheets.

In addition, for example, the inner circumferential core and the outer circumferential core of the rotor respectively include an inner circumferential laminated core and an outer circumferential laminated core that are formed by laminating a plurality of steel sheets in the rotation axis direction of the rotor, a protrusion made of magnetic material protruding in the rotation axis direction of the rotor is combined to each of the inner circumferential laminated core and the outer circumferential laminated core, and the air gap is disposed between the protrusion combined to the inner circumferential laminated core and the protrusion combined to the outer circumferential laminated core.

Further, for example, the permanent magnet synchronization motor further includes a field winding portion constituted of a field winding and a field winding yoke. The field winding portion is disposed outside of an end portion in the rotation axis direction of the rotor. When the field winding portion generates a magnetic flux, a combined magnetic flux of the magnetic flux generated by the permanent magnet and the magnetic flux generated by the field winding portion has a linkage with an armature winding of a stator of the permanent magnet synchronization motor.

According to this structure, the field-weakening control can be performed by using the field winding portion.

More specifically, for example, the protrusion and the field winding yoke are formed so that the magnetic flux generated by the field winding portion passes through the protrusion and the air gap, while passing through a magnetic path via the field winding yoke, the inner circumferential core, the outer circumferential core and a core of the stator.

Thus, the magnetic field generated by the field winding portion is not directly applied to the permanent magnet itself, so that there is not risk of demagnetization of the permanent magnet.

A motor drive system according to the present invention includes the above-mentioned permanent magnet synchronization motor, an inverter which supplies armature current to the motor so as to drive the motor, and a motor control device which controls the motor via the inverter.

A compressor according to the present invention uses a drive power source that is a rotation force of the permanent magnet synchronization motor provided to the above-mentioned motor drive system.

EFFECTS OF THE INVENTION

According to the present invention, it is possible to provide a permanent magnet synchronization motor, a motor drive system and a compressor that can contribute to reduction of d-axis current necessary for field-weakening control (flux-weakening control).

Meanings and effects of the present invention will be clarified from the following description of embodiments. However, the embodiments described below are merely examples of the present invention, and meanings of the present invention and terms of individual elements are not limited to those described in the following embodiments.

BRIEF DESCRIPTION OF THE DRAWINGS

FIG 1 is a schematic diagram illustrating a general structure of a motor according to a first embodiment of the present invention.

FIG 2 is an outline plan view illustrating of a stator illustrated in FIG 1 viewed from a rotation axis direction of a rotor illustrated in FIG 1.

FIG 3 is an outline plan view of the rotor viewed from a direction perpendicular to the rotation axis of the rotor illustrated in FIG 1.

FIG 4 is a cross sectional view of the rotor taken along a plane perpendicular to the rotation axis of the rotor illustrated in FIG 1.

FIG 5 is a diagram illustrating arrangement positions of a permanent magnet and an air gap on the cross sectional view illustrated in FIG 4.

FIG 6 is a diagram illustrating widths and thicknesses of the permanent magnet and the air gap according to the first embodiment of the present invention.

FIG 7 is a diagram illustrating a permanent magnet of one pole disposed in the rotor illustrated in FIG 4.

FIG 8 is a diagram illustrating a magnetic path of magnetic flux generated by the d-axis current according to the first embodiment of the present invention.

FIG 9 is a magnetic circuit diagram of the magnetic flux generated by the d-axis current according to the first embodiment of the present invention.

FIG 10 is a graph illustrating air gap thickness ratio dependence of permeance in the d-axis direction according to the first embodiment of the present invention.

FIG 11 is a diagram illustrating a manner in which the magnetic flux from the permanent magnet leaks through an air gap neighboring the permanent magnet.

FIG 12 is a cross sectional view of the rotor adopting a first variation structure according to the first embodiment of the present invention (cross sectional view taken along the plane perpendicular to the rotation axis).

FIG 13 is a cross sectional view of the rotor adopting a second variation structure according to the first embodiment of the present invention (cross sectional view taken along the plane perpendicular to the rotation axis).

FIG 14 is a cross sectional view of the rotor that is a further variation of the rotor structure illustrated in FIG 13 (cross sectional view taken along the plane perpendicular to the rotation axis).

FIG 15 is a cross sectional view of the rotor adopting a third variation structure according to the first embodiment of the present invention (cross sectional view taken along the plane perpendicular to the rotation axis).

FIGS. 16(a) and 16(b) are outline plan views of the rotor adopting a fourth variation structure according to the first embodiment of the present invention viewed from the direction perpendicular to the rotation axis and from the rotation axis direction, respectively.

FIGS. 17(a) and 17(b) are cross sectional views of the rotor according to the fourth variation structure taken along the plane perpendicular to the rotation axis so as to cross the permanent magnet, and taken along the plane parallel to the rotation axis, respectively.

FIG 18 is a cross sectional view of the rotor illustrated in FIG 16 taken along the plane perpendicular to the rotation axis so as to cross the air gap ($A_1$-$A_1$ cross section).

FIG 19 is a diagram illustrating widths and thicknesses of the permanent magnet and the air gap in the rotor of the fourth variation structure.

FIG 20 is a diagram illustrating a manner in which the magnetic flux from the permanent magnet leaks through an air gap neighboring the permanent magnet according to the fourth variation structure.

FIG 21 is a cross sectional view of the rotor adopting a fifth variation structure according to the first embodiment of the present invention (cross sectional view taken along the plane parallel to the rotation axis).

FIG 22 is a chart listing names of structural elements of the motor of the sixth variation structure according to the first embodiment of the present invention.

FIGS. 23(a) and 23(b) are outline plan views of the rotor according to the sixth variation structures viewed from the rotation axis direction of the rotor.

FIGS. 24(a) and 24(b) are cross sectional views taken along the plane perpendicular to the rotation axis of the rotor according to the sixth variation structure.

FIG 25 is a diagram of the sixth variation structure, in which the cross sectional view of the stator and a C-C' cross sectional view of a field winding portion and the rotor are combined.

FIG 26 is a diagram illustrating a cross sectional view of the stator illustrated in FIG 25.

FIGS. 27(a) and 27(b) are outline plan views of the rotor according to the sixth variation structure viewed respectively from a positive side and from a negative side in a Z-axis that is identical to the rotation axis of the rotor.

FIG 28 is a diagram of the sixth variation structure, in which the cross sectional view of the stator and a Y cross sectional view of the rotor and the field winding portion are combined.

FIG 29 is a diagram of the sixth variation structure, in which the cross sectional view of the stator and an X cross sectional view of the rotor and the field winding portion are combined.

FIGS. 30(a) and 30(b) are respectively an outside perspective view and an exploded diagram of a field winding yoke according to the sixth variation structure.

FIG 31 is an outside view of the field winding yoke according to the sixth variation structure viewed from a viewpoint such that the rotation axis direction of the rotor is the right and left direction in the diagram.

FIG 32 is a projection view of the field winding yoke of the sixth variation structure onto the XY coordinate plane.

FIG 33 is a diagram illustrating the magnetic path of the magnetic flux generated in the field winding portion according to the sixth variation structure.

FIG 34 is a schematic diagram illustrating a general structure of a motor according to a second embodiment of the present invention.

FIGS. 35(a) and 35(b) are cross sectional views of the rotor according to the second embodiment taken along the plane perpendicular to the rotation axis so as to cross the permanent magnet, and taken along the plane perpendicular to the rotation axis as to cross the air gap, respectively.

FIG 36 is a cross sectional view of the rotor and the stator illustrated in FIG 34 taken along the plane parallel to the rotation axis.

FIG 37 is a cross sectional view of the rotor and the stator adopting a seventh variation structure according to the second embodiment of the present invention (cross sectional view taken along the plane parallel to the rotation axis).

FIG 38 is a diagram illustrating the rotor structure according to the seventh variation structure, and is an outline plan view of the rotor illustrated in FIG 36 viewed from the direction such that the rotation axis direction is the right and left direction in the diagram.

FIG 39 is a chart listing names of structural elements of the motor of the eighth variation structure according to second embodiment of the present invention.

FIG 40 is a cross sectional view of the rotor according to the eighth variation structure taken along the plane perpendicular to the rotation axis.

FIGS. 41 (a) and 41 (b) are outline plan views of the rotor according to the eighth variation structure viewed from the rotation axis direction of the rotor.

FIG 42 is a diagram of the eighth variation structure, in which the cross sectional view of the stator and a D-D' cross sectional view of the rotor and the field winding portion are combined.

FIGS. 43(a) and 43(b) are outline plan views of the rotor according to the eighth variation structure viewed respectively from a positive side and from a negative side in the Z-axis that is identical to the rotation axis of the rotor.

FIG 44 is a diagram of the eighth variation structure, in which the cross sectional view of the stator and a Y cross sectional view of the rotor and the field winding portion are combined.

FIG 45 is a diagram of the eighth variation structure, in which the cross sectional view of the stator and an X cross sectional view of the rotor and the field winding portion are combined.

FIG 46 is an outside view of the field winding yoke according to the eighth variation structure viewed from a viewpoint such that the rotation axis direction of the rotor is the right and left direction in the diagram.

FIG 47 is a projection view of the field winding yoke of the eighth variation structure onto the XY coordinate plane.

FIG 48 is a diagram illustrating the magnetic path of the magnetic flux generated in the field winding portion according to the eighth variation structure.

FIG 49 is a general block diagram of a motor drive system according to a third embodiment of the present invention.

FIG 50 is an outside view of a compressor equipped with the motor drive system illustrated in FIG 49.

EXPLANATION OF NUMERALS

| | |
|---|---|
| 1, 201 | motor |
| 10, 210 | stator |
| 11, 211 | stator laminated core |
| 12, 212 | slot |
| 13, 213 | teeth |
| 20, 20a-20f, 220, 220a, 220b | rotor |
| 21, 21 a-21f | rotor laminated core |
| 22 | shaft |
| 31A-34A, 31B-34B, 31Aa-34Aa, 31Ba-34Ba, 231-234 | permanent magnet |
| 31G-34G, 31 Ga-34Ga, 260 | air gap |
| 25-28, 25a-28a | non-magnetic member |
| 240 | inner circumferential laminated core |
| 250 | outer circumferential laminated core |
| 500 | compressor |

BEST MODE FOR CARRYING OUT THE INVENTION

Hereinafter, embodiments of the present invention will be described specifically with reference to the attached drawings. In the diagrams to be referred to, the same part is denoted by the same numeral or symbol, so that overlapping description of the same part is omitted as a rule. Further, in the diagram illustrating a structure of a motor, for simple illustration or for convenience sake, a part of exposed portions may be omitted from the illustration.

«First embodiment»

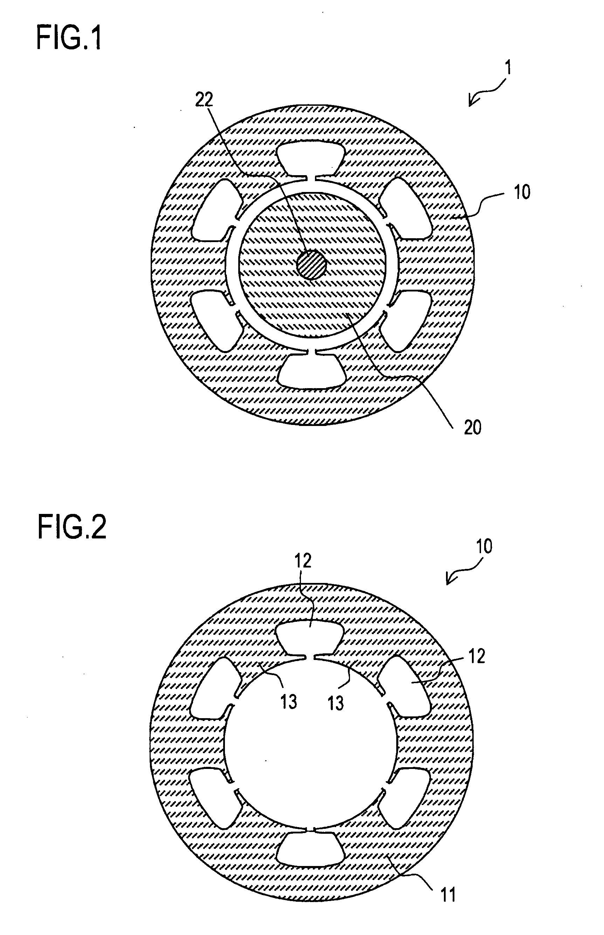

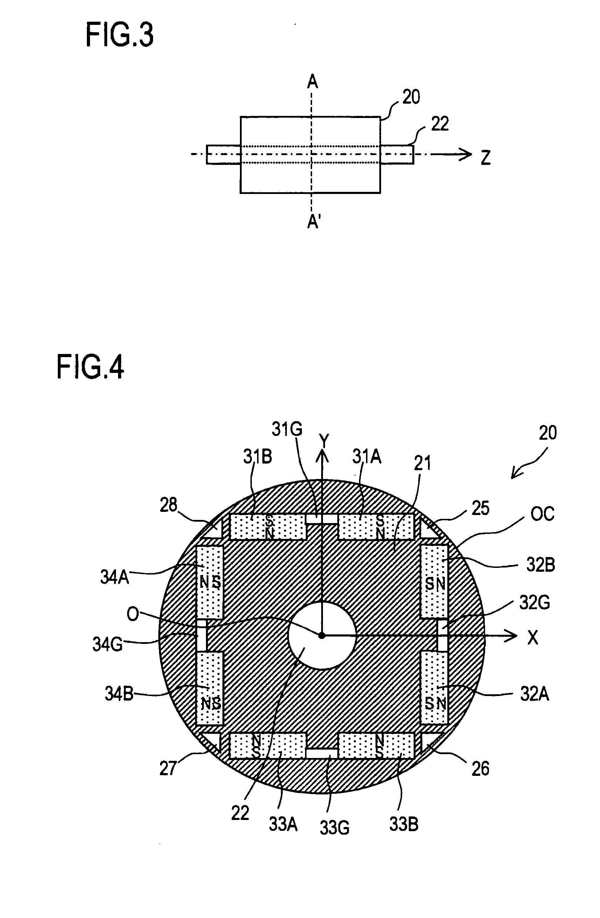

A structure of a motor 1 according to a first embodiment of the present invention will be described. FIG 1 is a schematic diagram illustrating a general structure of the motor 1. The motor 1 is a permanent magnet synchronization motor including a rotor 20 having permanent magnets embedded in a core, and a stator 10 disposed outside of the rotor 20 in a fixed manner. The motor 1 is particularly called an interior permanent-magnet synchronization motor. Since the rotor 20 is disposed inside the stator 10, the rotor 20 is an inner rotor, and the motor 1 is called an inner rotor type motor. FIG 1 is an outline plan view of the motor 1 viewed from a rotation axis direction of the rotor 20, and FIG 2 is an outline plan view of the stator 10 viewed from the rotation axis direction of the rotor 20. In addition, FIG 3 is an outline plan view of the rotor 20 viewed from the direction perpendicular to the rotation axis of the rotor 20.

At the center of the rotor 20, there is disposed a cylindrical shaft 22 extending along the rotation axis direction, so that the rotor 20 rotates together with the shaft 22 inside the stator 10. The shaft 22 can be regarded as a structural element of the rotor 20. Note that in FIGS. 1 and 2, for convenience of illustration, regions where members of the stator 10 and the rotor 20 including the shaft 22 exist are with patterns. Hereinafter, the rotation axis of the rotor 20 is referred to as a Z-axis.

The stator 10 includes a stator laminated core 11 constituted of a plurality of steel sheets (such as silicon steel sheets) as magnetic material (ferromagnetic material) laminated in the rotation axis direction of the rotor 20, and the stator laminated core 11 has six slots 12 and six teeth 13 protruding inward, which are formed alternately. Then, using the slots 12 for arranging coils (not shown in FIG 2), the coil is wound around each of the teeth 13 so that an armature winding of the stator 10 is formed. In other words, the stator 10 is a so-called six-coil concentrated winding stator. Note that the number of the slots, the number of the teeth and the number of the coils may be other than six.

FIG 4 is a cross sectional view of the rotor 20 taken along any plane perpendicular to the Z-axis, i.e., the A-A' cross sectional view of the rotor 20 (see FIG 3). A cross sectional structure of the rotor 20 is not changed when a cross sectional position in the Z-axis direction changes.

The rotor 20 includes a rotor laminated core 21 constituted of a plurality of disk-like steel sheets having the center on the Z-axis laminated via insulator films in the Z-axis direction, the cylindrical shaft 22 having the center axis identical to the Z-axis, plate-like permanent magnets 31A to 34A and 31B to 34B, and non-magnetic members 25 to 28 each of which is disposed between neighboring permanent magnets.

The rotor laminated core 21 is provided with a shaft insertion hole, permanent magnet insertion holes and non-magnetic member insertion holes. The shaft 22, the permanent magnets 31A to 34A and 31B to 34B, and the non-magnetic members 25 to 28 are respectively inserted in the shaft insertion hole, the permanent magnet insertion holes and the non-magnetic member insertion holes, and they are connected to each other to be fixed so that the rotor 20 is formed. Each of the steel sheets forming the rotor laminated core 21 is made of a magnetic material (ferromagnetic material) such as a silicon steel sheet. Each of the steel sheets forming the rotor laminated core 21 is shaped to have a predetermined shape so that the shaft insertion hole, the permanent magnet insertion holes and the non-magnetic member insertion holes are formed.

Here, it is supposed that an origin O exists at the center of the shaft 22 on the cross sectional view illustrated in FIG 4, and a rectangular coordinate system including the X-axis, the Y-axis and the Z-axis is defined on the real space. The X-axis is orthogonal to each of the Y-axis and the Z-axis, and the Y-axis is orthogonal to each of the X-axis and the Z-axis, and the X-axis, the Y-axis and the Z-axis cross each other at the origin O. With respect to the origin O as a boundary, polarity of an X-axis coordinate value of any point is classified into positive or negative, and polarity of a Y-axis coordinate value of any point is classified into positive or negative. In the cross sectional views taken along the XY coordinate plane illustrated in the figures including FIG 4, and FIGS. 6, 11 to 15, 17(a) and 18 that will be referred to later, the right side and the left side respectively correspond to the positive side and the negative side of the X-axis, while the upper side and the lower side respectively correspond to the positive side and the negative side of the Y-axis.

On the XY coordinate plane, a cross sectional shape (contour shape) of the rotor laminated core 21 is a circle and the center of the circle is identical to the origin O, while the cross sectional shape of the shaft 22 is a circle and the center of the circle is identical to the origin O. The outer circumferential circle of the rotor laminated core 21 is denoted by symbol OC.

On the XY coordinate plane, a cross sectional shape of each of the permanent magnets 31A to 34A and 31B to 34B is a rectangle. On the XY coordinate plane, permanent magnets 32B and 31A exist in the first quadrant, permanent magnets 31B and 34A exist in the second quadrant, permanent magnets 34B and 33A exist in the third quadrant, and permanent magnets 33B and 32A exist in the fourth quadrant. Then, an air gap 31 G is disposed between the permanent magnet 31A and 31B, an air gap 32G is disposed between the permanent magnets 32A and 32B, an air gap 33G is disposed between the permanent magnets 33A and 33B, and an air gap 34G is disposed between the permanent magnets 34A and 34B. In other words, no permanent magnet is inserted in some parts of the permanent magnet insertion holes of the rotor laminated core 21, and the parts are filled with air. On the XY coordinate plane, a cross sectional shape of each of the air gaps 31 G to 34G is a rectangle. On the XY coordinate plane, the part of the rotor laminated core 21 inside the outer circumferential circle OC except for the shaft 22, the permanent magnets 31A to 34A and 31B to 34B, the air gaps 31 G to 34G, and the non-magnetic members 25 to 28 is filled with the magnetic material (steel sheet material) forming the rotor laminated core 21.

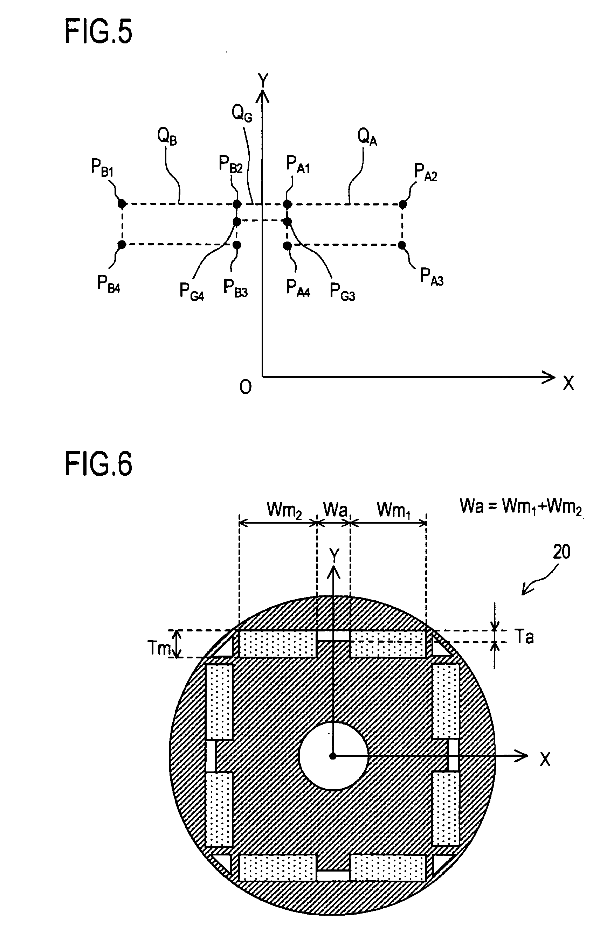

With reference to FIG 5, arrangement positions of the permanent magnets and the air gaps will be described in detail. Here, positions $P_{A1}$ to $P_{A4}$, $P_{B1}$ to $P_{B4}$, $P_{G3}$ and $P_{G4}$ are supposed to be on the XY coordinate plane, and XY coordinate values of the points are defined as follows.

On the XY coordinate plane, points $P_{A1}$ to $P_{A4}$ and $P_{G3}$ are within the first quadrant, points $P_{B1}$ to $P_{B4}$ and $P_{G4}$ are within the second quadrant.

Points $P_{A1}$, $P_{A2}$, $P_{B1}$ and $P_{B2}$ have the same Y coordinate value $y_1$.

Points $P_{G3}$ and $P_{G4}$ have the same Y coordinate value $y_2$.

Points $P_{A3}$, $P_{A4}$, $P_{B3}$ and $P_{B4}$ have the same Y coordinate value $y_3$, and $y_1>y_2>y_3$ holds.

Points $P_{A2}$ and $P_{A3}$ have the same X coordinate value $x_1$.

Points $P_{A1}$, $P_{A4}$ and $P_{G3}$ have the same X coordinate value $x_2$.

Points $P_{B2}$, $P_{B3}$ and $P_{G4}$ have the same X coordinate value $x_3$.

Points $P_{B1}$ and $P_{B4}$ have the same X coordinate value $x_4$, and $x_1>x_2>x_3>x_4$ holds.

A rectangle $Q_A$ having four vertexes of points $P_{A1}$ to $P_{A4}$ and a rectangle $Q_B$ having four vertexes of points $P_{B1}$ to $P_{B4}$ have the same shape and size. The rectangle $Q_A$ and the rectangle $Q_B$ have a relationship of line symmetry with respect to the Y-axis as an axis of symmetry. In addition, a rectangle having points $P_{B2}$, $P_{A1}$, $P_{G3}$ and $P_{G4}$ as four vertexes is denoted by $Q_G$.

On the XY coordinate plane, the permanent magnet 31A, the permanent magnet 31B and the air gap 31G are disposed in the rectangles $Q_A$, $Q_B$ and $Q_G$, respectively. In other words, rectangles as cross sectional shapes of the permanent magnet 31A, the permanent magnet 31B and the air gap 31G correspond to the rectangles $Q_A$, $Q_B$ and $Q_G$, respectively.

The permanent magnets 31A to 34A and 31B to 34B have the same shape and size, while the air gaps 31G to 34G have the same shape and size. Further, the rotor 20 has a structure of line symmetry with respect to the X-axis as an axis of symmetry and has a structure of line symmetry with respect to the Y-axis as an axis of symmetry. In other words,

the permanent magnets 32A and 32B and the air gap 32G are disposed at positions obtained by rotating the arrangement positions of the permanent magnets 31A and 31B and air gap 31G about the Z-axis as a center axis clockwise by 90 degrees on the XY coordinate plane, and

the permanent magnets 33A and 33B and the air gap 33G are disposed at positions obtained by rotating the arrangement position of the permanent magnets 31A and 31B and the air gap 31G about the Z-axis as a center axis clockwise by 180 degrees on the XY coordinate plane, and

the permanent magnets 34A and 34B and the air gap 34G are disposed at positions obtained by rotating the arrangement position of the permanent magnets 31A and 31B and the air gap 31G about the Z-axis as a center axis clockwise by 270 degrees on the XY coordinate plane.

Direction of the magnetic flux generated by each permanent magnet is perpendicular to the Z-axis. Further, on the XY coordinate plane,

the north poles of the permanent magnets 31A and 31B exist on the lower sides thereof,

the north poles of the permanent magnets 32A and 32B exist on the right side thereof,

the north pole of the permanent magnets 33A and 33B exist on the upper side thereof, and

the north pole of the permanent magnets 34A and 34B exist on the left side thereof.

Therefore, the directions of the magnetic fluxes generated by the permanent magnets 31A, 31B, 33A and 33B are parallel to the Y-axis, and the directions of the magnetic fluxes generated by the permanent magnets 32A, 32B, 34A and 34B are parallel to the X-axis.

On the XY coordinate plane, cross sectional shapes of the non-magnetic members 25 to 28 are a triangle or a shape similar to a triangle, and the non-magnetic members 25, 26, 27 and 28 are respectively disposed in the first, the fourth, the third and the second quadrant on the XY coordinate plane. More specifically, on the XY coordinate plane, the non-magnetic member 25 is disposed on the right side of the permanent magnet 31A and on the upper side of the permanent magnet 32B, and a bridge portion as a part of the rotor laminated core 21 exists around the non-magnetic member 25 including between the permanent magnet 31A and the non-magnetic member 25, as well as between the permanent magnet 32B and the non-magnetic member 25, and

the non-magnetic member 26 is disposed on the right side of the permanent magnet 33B and on the lower side of the permanent magnet 32A, and a bridge portion as a part of the rotor laminated core 21 exists around the non-magnetic member 26 including between the permanent magnet 33B and the non-magnetic member 26, as well as between the permanent magnet 32A and the non-magnetic member 26, and

the non-magnetic member 27 is disposed on the left side of the permanent magnet 33A and on the lower side of the permanent magnet 34B, and a bridge portion as a part of the rotor laminated core 21 exists around the non-magnetic member 27 including between the permanent magnet 33A and the non-magnetic member 27, as well as between the permanent magnet 34B and the non-magnetic member 27, and

the non-magnetic member 28 is disposed on the left side of the permanent magnet 31B and on the upper side of the permanent magnet 34A, and a bridge portion as a part of the rotor laminated core 21 exists around the non-magnetic member 28 including between the permanent magnet 31B and the non-magnetic member 28, as well as between the permanent magnet 34A and the non-magnetic member 28.

Note that the arrangement positions of the air gaps 31G to 34G may be moved toward the origin O with respect to the above-mentioned arrangement positions. Specifically, for example, with respect to the above-mentioned arrangement position of the air gap 31G, the arrangement position of the air gap 31G may be moved in parallel a little toward the origin O. In addition, a part of the rotor laminated core 21 may exist between the permanent magnet 31A and the air gap 31G and/or between the permanent magnet 31B and the air gap 31G (the same is true for the permanent magnet 32B and the air gap 32G, and the like).

The rotor laminated core 21 can be divided broadly into an inner circumferential laminated core positioned on the inner side of the permanent magnet, an outer circumferential laminated core positioned on the outer side of the permanent magnet, and the above-mentioned bridge portions. The inner circumferential laminated core means a portion of the rotor laminated core 21 positioned closer to the origin O (Z-axis) than the permanent magnets 31A to 34A and 31B to 34B, and the outer circumferential laminated core means a portion of the rotor laminated core 21 positioned closer to the outer circumferential circle OC than the permanent magnets 31A to 34A and 31B to 34B.

As described above, in the rotor 20 according to this embodiment, the air gap is disposed in a part of one continuous permanent magnet insertion hole between the inner circumferential laminated core and the outer circumferential laminated core. Further, the thickness of the air gap is set to a half or smaller of the thickness of the permanent magnet.

[Meaning of disposing the air gap]

Meaning of disposing the air gap will be described. The two permanent magnets neighboring via the air gap (e.g., 31A and 31B) form the permanent magnet of one pole, and a four-pole permanent magnet is disposed in the motor 1 as a whole (i.e., the number of poles of the motor 1 is four). Here, as illustrated in FIG 6, the widths of two permanent magnets forming the permanent magnet of one pole are denoted by $W_{m1}$ and $W_{m2}$. Then, the total width Wm of the permanent magnet of one pole is expressed by $W_m = W_{m1} + W_{m2}$. Further, the thickness of the permanent magnet is denoted by Tm.

Here, the thickness of the permanent magnet means a length of the permanent magnet in the inter-pole direction of the permanent magnet. The inter-pole direction of the permanent magnet means a direction connecting the north pole and the south pole of the permanent magnet. In this example, the width of the permanent magnet means a length of the permanent magnet in the direction perpendicular to the inter-pole direction of the permanent magnet on the XY coordinate plane.

In addition, the d-axis is assigned to the direction of the magnetic flux generated by the noted permanent magnet of one pole. Then, a length in the d-axis direction of the air gap disposed for the permanent magnet of one pole is referred to as a "thickness of the air gap", which is denoted by Ta. Further, concerning a certain air gap, a length of the air gap in the direction perpendicular to the thickness direction of the air gap on the XY coordinate plane is referred to as a "width of the air gap", which is denoted by Wa.

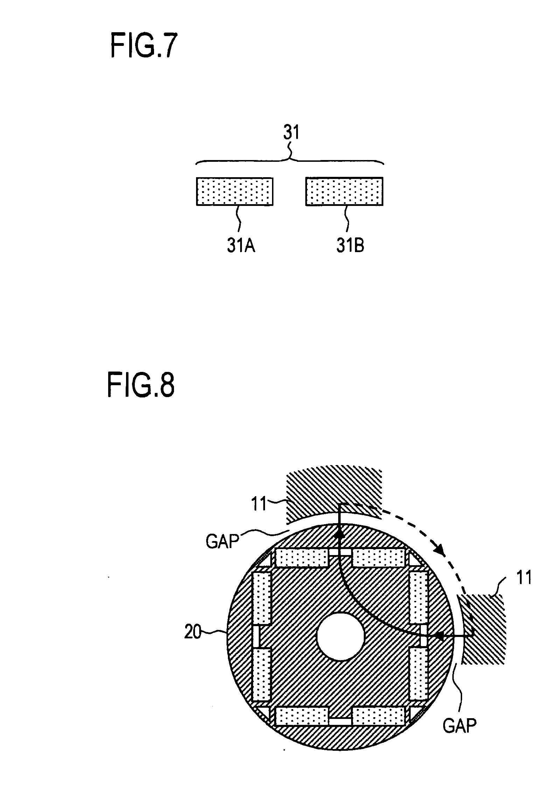

For specific description, the permanent magnet of one pole formed by the permanent magnets 31A and 31B is noted. Then, widths of the permanent magnets 31A and 31B (i.e., lengths in the X-axis direction) are $W_{m1}$ and $W_{m2}$, respectively, and a thickness of each of the permanent magnets 31A and 31B (i.e., a length in the Y-axis direction) is Tm. Further, a width of the air gap 31G (i.e., a length in the X-axis direction) is Wa, and a thickness of the air gap 31G (i.e., a length in the Y-axis direction) is Ta. In addition, the permanent magnet of one pole constituted of the permanent magnets 31A and 31B is referred to as a permanent magnet 31 (see FIG 7).

It is considered that a magnetic circuit of the permanent magnet 31 and its vicinity in the d-axis direction is equivalent to a circuit in which magnetic reluctance Rm of the permanent magnet 31 and magnetic reluctance Ra of the air gap 31G are connected in parallel. Therefore, magnetic reluctance Rd of the permanent magnet 31 and its vicinity in the d-axis direction is expressed by the equation (2) below. The magnetic reluctances Rm and Ra are expressed by the equations (1a) and (1b). Note that the bridge portion between the outer circumferential laminated core and the inner circumferential laminated core (the parts of core around the non-magnetic members 25 and 28 in FIG 4) are considered to be saturated magnetically by the permanent magnet sufficiently, so that magnetic reluctance in the bridge portion is considered to be sufficiently large and is neglected.

[Expression 1]

$$Rm = \frac{Tm}{\mu_0 \cdot Wm \cdot L} \tag{1a}$$

$$Ra = \frac{Ta}{\mu_0 \cdot Wa \cdot L} \tag{1b}$$

[Expression 2]

$$Rd = \frac{Rm \cdot Ra}{Rm + Ra} = \frac{Tm \cdot Ta}{\mu_0 \cdot (Ta \cdot Wm + Tm \cdot Wa) \cdot L} \tag{2}$$

Here, L denotes a length of the rotor 20 in the Z-axis direction. In this example, lengths of the permanent magnets (31A and the like) and the air gap (31G) in the Z-axis direction are also L. Symbol $\mu_0$ denotes magnetic permeability in vacuum. Since relative permeability of air and the permanent magnet is substantially one, magnetic permeability of air in the air gap and magnetic permeability of the permanent magnet are approximated to be $\mu_0$.

When a salient pole machine such as the interior permanent-magnet synchronization motor is driven to rotate at high speed, field-weakening control (flux-weakening control) is used in general so as to suppress excessive increase of induction voltage (in other words, electromotive force) generated in the motor due to a permanent magnet. This field-weakening control is performed by supplying negative d-axis current to the armature winding. The d-axis current means a d-axis component of armature current flowing in the armature winding of the stator 10, and the d-axis current having a negative polarity acts to weaken flux linkage of the armature winding due to the permanent magnet. The d-axis current is denoted by id. In addition, a d-axis component of inductance of the armature winding of the stator 10 is referred to as d-axis inductance, which is denoted by Ld.

The magnetic flux generated when the d-axis current flows in the armature winding is expressed by Ld·id. In addition, the magnetic flux (Ld·id) is regarded as magnetic flux flowing in the magnetic reluctance Rd in the d-axis direction and magnetic reluctance of a gap between the rotor and the stator by the magnetomotive force Fd due to the d-axis current. The gap between the rotor and the stator means a mechanical gap existing between the rotor 20 and the stator 10.

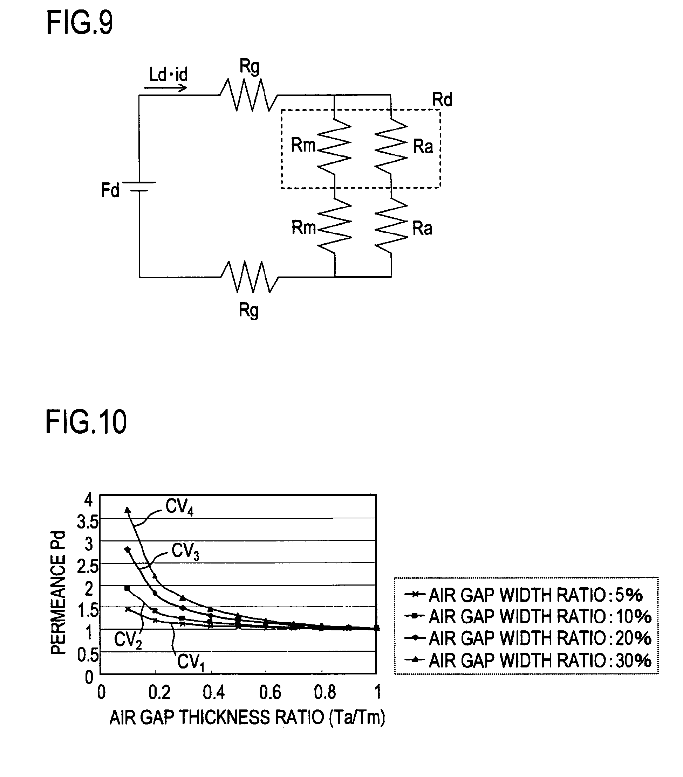

Since the gap between the rotor and the stator exists all around the perimeter of the rotor 20, the magnetic flux generated by the magnetomotive force Fd passes along a magnetic path that go through permanent magnet portions of two poles and two gaps between the rotor and the stator along the d-axis direction, as illustrated in FIG 8. Further, in FIG 8, only one magnetic path going through permanent magnet portions of two poles and two gaps between the rotor and the stator is indicated by a curve with arrows (Actually, four such magnetic paths are formed in total so that they are symmetric horizontally and vertically). Therefore, the magnetic circuit of the magnetic flux Ld·id generated by the magnetomotive force Fd is expressed as illustrated in FIG 9. Here, Rg denotes magnetic reluctance of one gap between the rotor and the stator. Note that relative permeability of the stator laminated core and the rotor laminated core has a sufficiently large value (e.g., a few hundreds to a few tens of thousands) (the same is true for other examples described later), so the magnetic reluctance thereof is regarded to be sufficiently small and is neglected.

From the magnetic circuit illustrated in FIG 9, the following equation (3a) is derived. In addition, generally, the magnetic reluctance Rg is sufficiently smaller than the magnetic reluctance Rd, and therefore the equation (3a) can be approximated to the equation (3b). In other words, it is considered that the magnetic flux Ld·id due to the d-axis current is substantially proportional to the inverse number of Rd. When Pd denotes the inverse number of Rd, Pd is expressed by the equation (4) below. The inverse number of the magnetic reluctance is generally called permeance.

[Expression 3]

$$Ld \cdot id = \frac{Fd}{2 \cdot (Rd + Rg)} \tag{3a}$$

$$Ld \cdot id = \frac{Fd}{2 \cdot (Rd + Rg)} \approx \frac{Fd}{2 \cdot Rd} \qquad \because \quad Rd \gg Rg \tag{3b}$$

[Expression 4]

$$Pd = \frac{1}{Rd} = \frac{\mu_0 \cdot L \cdot (Ta \cdot Wm + Tm \cdot Wa)}{Tm \cdot Ta}$$
$$= \mu_0 \cdot L \cdot (Wm/Tm + Wa/Ta) \tag{4}$$

Hereinafter, a ratio of the air gap width Wa to Wm+Wa (i.e., Wa/(Wm+Wa)) is simply referred to as an air gap width ratio, and a ratio of the air gap thickness Ta to Tm (i.e., Ta/Tm) is simply referred to as an air gap thickness ratio. While changing the air gap width ratio and the air gap thickness ratio variously, the permeance Pd in the d-axis direction is calculated on the basis of the equation (4). The result is shown in FIG 10. In the graph shown in FIG 10, the horizontal axis represents the air gap thickness ratio, and the vertical axis represents the permeance Pd. Curves $CV_1$, $CV_2$, $CV_3$ and $CV_4$ indicate air gap thickness ratio dependence of the permeance Pd when the air gap width ratio is set to 5%, 10%, 20% and 30%, respectively. However, the curves $CV_1$, $CV_2$, $CV_3$ and $CV_4$ are normalized so that the permeance Pd becomes one when Ta is equal to Tm.

As understood from FIG 10, the permeance Pd increases along with a decrease of the air gap thickness ratio from one. If the permeance Pd increases, more d-axis magnetic flux (Ld·id) can be generated by the same d-axis current so that the field-weakening control can be performed effectively. As a result, increase of loss (copper loss) by the d-axis current in the field-weakening control can be decreased. For instance, if the permeance Pd increases by 20%, the d-axis current for generating the same d-axis magnetic flux (field-weakening magnetic flux) can be reduced by 20%, so that the loss (copper loss) can be reduced by the same ratio.

If the air gap thickness ratio is decreased with reference to the case of Ta=Tm, an increase of the permeance Pd can be expected. However, if the air gap thickness ratio is close to one, the effect of increasing the permeance Pd and the effect of reducing the loss due to the increase of the permeance Pd are small. On the other hand, as illustrated in FIG 10, the increase of the permeance Pd becomes conspicuous in the range where the air gap thickness ratio is 0.5 or smaller. Therefore, in this embodiment, a cross sectional structure of the rotor 20 is adopted so that the air gap thickness ratio is 0.5 or smaller. In other words, an air gap that satisfies Ta≦ 0.5 xTm is disposed between the inner circumferential laminated core and the outer circumferential laminated core.

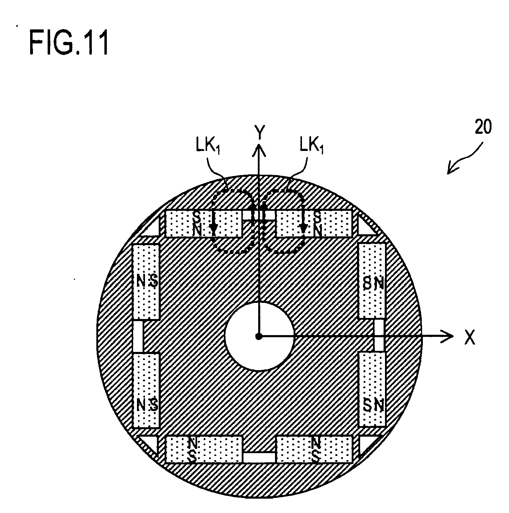

In addition, in order to obtain sufficiently beneficial loss reduction effect, specifically, for example, it is preferred to set the air gap thickness ratio to 0.2 or smaller if the air gap width ratio is 5% or smaller. If the air gap width ratio is 10% or smaller, it is preferred to set the air gap thickness ratio to 0.3 or smaller. If the air gap width ratio is 20% or smaller, it is preferred to set the air gap thickness ratio to 0.4 or smaller. If the air gap width ratio is 30% or smaller, it is preferred to set the air gap thickness ratio to 0.5 or smaller. However, if the air gap thickness ratio is set too small in the case where the air gap width ratio is relatively large, the permeance Pd becomes too large to that influence to a leakage of the magnet magnetic flux increases (the magnetic flux generated by the permanent magnet leaks through a leakage magnetic circuit along the broken line with arrows $LK_1$ illustrated in FIG 11). Therefore, it is desirable to set a lower limit of the air gap thickness ratio in accordance with the air gap width ratio. For instance, if the air gap width ratio is 20% or larger, it is desirable to set the air gap thickness ratio to 0.1 to 0.2 or larger.

As described above, the air gap satisfying Ta≦ 0.5 xTm is disposed between the inner circumferential laminated core and the outer circumferential laminated core, so that the permeance in the d-axis direction can be increased effectively. Thus, the d-axis current for obtaining necessary field-weakening magnetic flux can be reduced. As a result, loss (copper loss) in high speed rotation can be reduced. In addition, the magnetic flux generated by the d-axis current passes through the air gap side adjacent to the permanent magnet with priority, so that demagnetizing field is hardly applied to the permanent magnet itself, resulting in suppression of occurrence of demagnetization of the permanent magnet.

Further, when adopting the rotor structure in which the air gap is disposed between the inner circumferential laminated core and the outer circumferential laminated core, the thickness of the air gap is usually set to be the same as the thickness of the permanent magnet considering influence to leakage of the magnetic flux of the magnet through the air gap. In order to dispose the permanent magnet to be adjacent to the air gap at a desired position (for so-called positioning of permanent magnet), the thickness of the air gap may be a little smaller than the thickness of the permanent magnet in a conventional structure, but there has been no idea of setting positively the thickness of the air gap to a half or smaller of the thickness of the permanent magnet considering influence to leakage of the magnetic flux of the magnet.

It is possible to modify a part of the structure of the motor 1. As a variation example of the structure of the motor 1, first to sixth variation structures will be described. If the motor structure according to any one of the first to the sixth variation structures is adopted, the same action and effect can be obtained. Note that the above-mentioned structure of the motor 1 without modification is referred to as a "fundamental structure of the motor 1 "or simply a "fundamental structure" in the following description.

In description of each variation structure, difference from the fundamental structure is particularly noted. Concerning technical matters that are not mentioned in particular in description of each variation structure, the description of the fundamental structure is applied (or can be applied) to the same. Further, when the matter described in the description of the fundamental structure is applied to each variation structure, difference between numerals or symbols of the same name of part is neglected appropriately. For instance, the rotor is denoted by numeral 20a in the first variation structure, and when the matter described in the description of the fundamental structure is applied to the first variation structure, difference between numerals 20 and 20a is neglected as necessary.

[First variation structure]

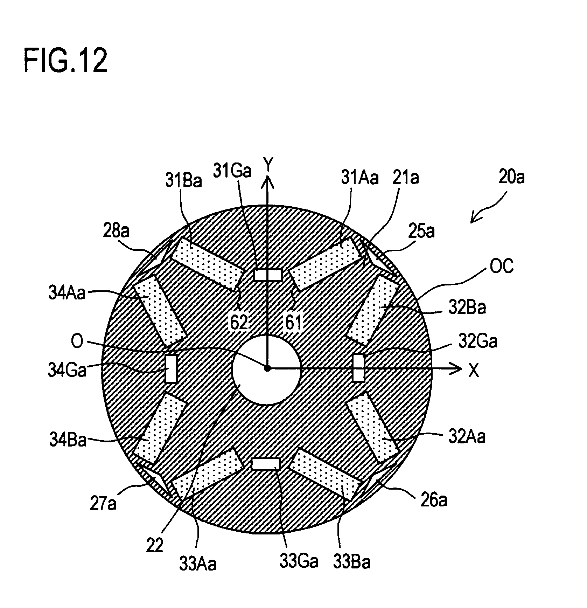

The first variation structure will be described. In the first variation structure, the cross sectional structure of the rotor 20 in the fundamental structure of the motor 1 is modified. The rotor with this modification is referred to as a rotor 20a. The rotation axis of the rotor 20a is the Z-axis. FIG 12 is a cross sectional view of the rotor 20a along any plane perpendicular to the Z-axis. The cross sectional structure of the rotor 20a is not changed when a cross sectional position in the Z-axis direction changes.

The rotor 20a includes a rotor laminated core 21 a constituted in the same manner as the rotor laminated core 21 of the fundamental structure, a cylindrical shaft 22 having the center axis identical to the Z-axis, plate-like permanent magnets 31Aa to 34Aa and 31Ba to 34Ba, and non-magnetic members 25a to 28a. The rotor laminated core 21a is provided with a shaft insertion hole, permanent magnet insertion holes and non-magnetic member insertion holes. The shaft 22, the permanent magnets 31Aa to 34Aa and 31Ba to 34Ba, and the non-magnetic members 25a to 28a are respectively inserted in the shaft insertion hole, the permanent magnet insertion holes and the non-magnetic member insertion holes, and they are connected to each other to be fixed so that the rotor 20a is formed.

It is supposed that the origin O of a rectangular coordinate system having the X-axis, the Y-axis and the Z-axis as coordinate axes exists at the center of the shaft 22 on the cross sectional view illustrated in FIG 12. FIG 12 is a cross sectional view of the rotor 20a taken along the XY coordinate plane. On the XY coordinate plane, a cross sectional shape (contour shape) of the rotor laminated core 21a is a circle and the center of the circle is identical to the origin O, while the cross sectional shape of the shaft 22 is a circle and the center of the circle is identical to the origin O. The outer circumferential circle OC of the rotor laminated core 21 a is the same as that of the rotor laminated core 21 in the fundamental structure.

The rotor 20a is obtained by replacing the rotor laminated core 21, the permanent magnets 31A to 34A and 31B to 34B, the non-magnetic members 25 to 28, and the air gaps 31G to 34G in the fundamental structure with the rotor laminated core 21 a, the permanent magnets 31Aa to 34Aa and 31Ba to 34Ba, the non-magnetic members 25a to 28a and the air gap 31Ga to 34Ga, respectively.

On the XY coordinate plane, the cross sectional shape of each permanent magnet is a rectangle. An air gap 31Ga is disposed between the permanent magnets 31Aa and 31Ba, an air gap 32Ga is disposed between the permanent magnets 32Aa and 32Ba, an air gap 33Ga is disposed between the permanent magnets 33Aa and 33Ba, and an air gap 34Ga is disposed between the permanent magnets 34Aa and 34Ba. On the XY coordinate plane, a cross sectional shape of each of the air gaps 31Ga to 34Ga is a rectangle. On the XY coordinate plane, the part of the rotor laminated core 21 a inside the outer circumferential circle OC except for the shaft, the permanent magnets, the air gaps and the non-magnetic members is filled with the magnetic material (steel sheet material) forming the rotor laminated core 21a.

For simple description, it is supposed that the shape and size of each permanent magnet in the fundamental structure and the shape and size of each permanent magnet in the first variation structure are the same. On the XY coordinate plane, the permanent magnet 31Aa is disposed at the position obtained by rotating the arrangement position of the permanent magnet 31A in the fundamental structure about the center of the permanent magnet 31A as a rotation axis counterclockwise by angle ε, and the permanent magnet 31Ba is disposed at the position obtained by rotating the arrangement position of the permanent magnet 31B in the fundamental structure about the center of the permanent magnet 31B as a rotation axis clockwise by angle $\varepsilon$ (here, $0<\varepsilon<90$ degrees, for example, $10<\varepsilon<40$ degrees). The air gap 31Ga is disposed between the permanent magnets 31Aa and 31Ba so as to have the center on the Y-axis. On the XY coordinate plane, supposing a trapezoid whose four vertexes include two end points of the side 61 closest to the origin O among four sides of the rectangle that is a cross sectional shape of the permanent magnet 31Aa and two end points of the side 62 closest to the origin O among four sides of the rectangle that is a cross sectional shape of the permanent magnet 31Ba, the air gap 31Ga is positioned inside the trapezoid, for example. In addition, a part of the rotor laminated core 21 a that connects the inner circumferential laminated core with the outer circumferential laminated core exists between the permanent magnet 31Aa and the air gap 31Ga as well as between the permanent magnet 31Ba and the air gap 31Ga.

Further, the rotor 20a has a structure of line symmetry with respect to the X-axis as an axis of symmetry and has a structure of line symmetry with respect to the Y-axis as an axis of symmetry. In other words, the permanent magnets 32Aa and 32Ba and the air gap 32Ga are disposed at positions obtained by rotating the arrangement positions of the permanent magnets 31Aa and 31Ba and the air gap 31Ga about the Z-axis as a center axis clockwise on the XY coordinate plane by 90 degrees; the permanent magnets 33Aa and 33Ba and the air gap 33Ga are disposed at positions obtained by rotating the same in the same manner by 180 degrees; and the permanent magnets 34Aa and 34Ba and the air gap 34Ga are disposed at positions obtained by rotating the same in the same manner by 270 degrees.

The direction of the magnetic flux generated by each permanent magnet is perpendicular to the Z-axis. The permanent magnet of one pole is constituted of the permanent magnets 31A and 31Ba, or the permanent magnets 32Aa and 32Ba, or the permanent magnets 33Aa and 33Ba, or the permanent magnets 34Aa and 34Ba. The direction of the magnetic flux of the permanent magnet of one pole generated by the permanent magnets 31Aa and 31Ba and the direction of the magnetic flux of the permanent magnet of one pole generated by the permanent magnets 33Aa and 33Ba are parallel to the Y-axis. The direction of the magnetic flux of the permanent magnet of one pole generated by the permanent magnets 32Aa and 32Ba and the direction of the magnetic flux of the permanent magnet of one pole generated by the permanent magnets 34Aa and 34Ba are parallel to the X-axis.

The arrangement positions of the non-magnetic members 25a to 28a on the XY coordinate plane are substantially the same as the arrangement positions of the non-magnetic members 25 to 28 in the fundamental structure, but since the permanent magnets are inclined with respect to the X-axis or the Y-axis in the first variation structure, a shape of the non-magnetic members 25a to 28a is changed from that in the fundamental structure appropriately.

When the permanent magnet of one pole constituted of the permanent magnets 31Aa and 31Ba is noted, widths of the permanent magnets 31Aa and 31Ba are handled respectively as $Wm_1$ and $Wm_2$, and each thickness of the permanent magnets 31Aa and 31Ba is handled as Tm, and lengths of the air gap 31a in the Y-axis direction and the X-axis direction are handled respectively as Ta and Wa, and the method of setting the air gap thickness ratio described above in the fundamental structure is applied to the first variation structure, too. Further, core portions between the permanent magnet 31Aa and the air gap 31Ga as well as between the permanent magnet 31Ba and the air gap 31Ga are considered to be saturated magnetically by the permanent magnet sufficiently, so that the portions can be neglected when the air gap thickness ratio is set.

[Second variation structure]

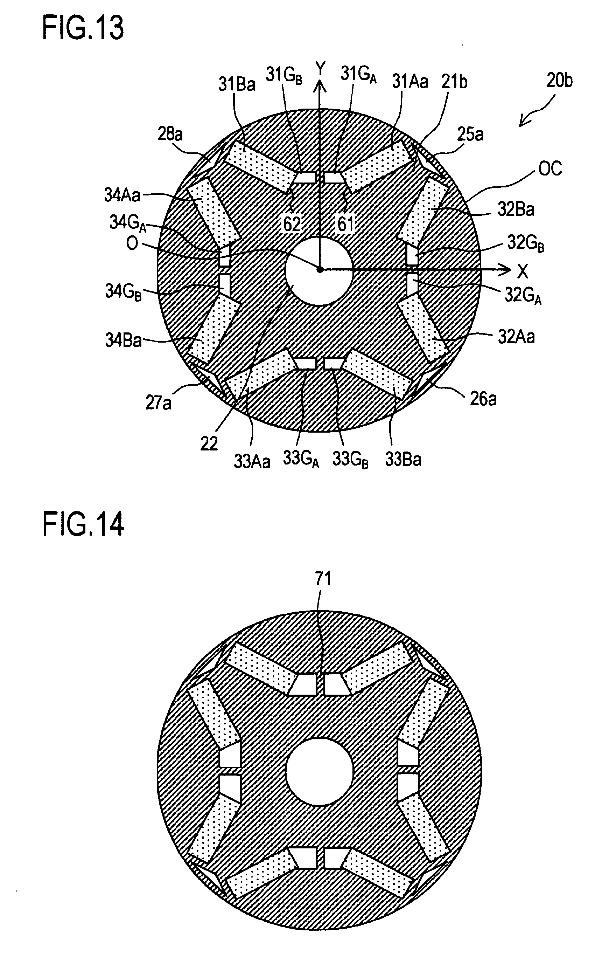

The first variation structure may be further modified as described below. The variation structure with further modification is regarded as a second variation structure, and a rotor according to the second variation structure is referred to as a rotor 20b. The rotation axis of the rotor 20b is supposed to be the Z-axis. FIG 13 is a cross sectional view of the rotor 20b taken along any plane perpendicular to the Z-axis. The cross sectional structure of the rotor 20b is not changed when a cross sectional position in the Z-axis direction changes. Concerning matters that are not mentioned in particular in description of the second variation structure, the description of the first variation structure is applied.

The rotor 20b includes a rotor laminated core 21b constituted in the same manner as the rotor laminated core 21 of the fundamental structure, a cylindrical shaft 22 having the Z-axis as the center axis, plate-like permanent magnets 31Aa to 34Aa and 31Ba to 34Ba, and non-magnetic members 25a to 28a.

It is supposed that the origin O of a rectangular coordinate system having the X-axis, the Y-axis and the Z-axis as coordinate axes exists at the center of the shaft 22 on the cross sectional view illustrated in FIG 13. FIG 13 is a cross sectional view of the rotor 20b taken along the XY coordinate plane. On the XY coordinate plane, a cross sectional shape (contour shape) of the rotor laminated core 21b is a circle and the center of the circle is identical to the origin O, while the cross sectional shape of the shaft 22 is a circle and the center of the circle is identical to the origin O. The outer circumferential circle OC of the rotor laminated core 21b is the same as that of the rotor laminated core 21 in the fundamental structure.

The rotor laminated core 21b of the rotor 20b is provided with the air gap $31G_A$ to $34G_A$ and $31G_B$ to $34G_B$. The rotor obtained by replacing the air gaps 31Ga, 32Ga, 33Ga, 34Ga of the rotor 20a illustrated in FIG 12 with the air gaps $31G_A$ and $31G_B$, the air gaps $32G_A$ and $32G_B$, the air gaps $33G_A$ and $33G_B$, and the air gaps $34G_A$ and $34G_B$,

respectively, corresponds to the rotor 20b. The shapes, sizes and arrangement positions of the permanent magnets and the non-magnetic members in the rotor laminated core 21b are the same as those in the rotor laminated core 21a illustrated in FIG 12. On the XY coordinate plane, the part of the rotor laminated core 21b inside the outer circumferential circle OC except for the shaft, the permanent magnets, the air gaps and the non-magnetic members is filled with the magnetic material (steel sheet material) forming the rotor laminated core 21b.

Supposing a trapezoid whose four vertexes include two end points of the side 61 and two end points of the side 62 on the XY coordinate plane as described above in the first variation structure, the air gaps $31G_A$ and $31G_B$ are disposed separately in the trapezoid, for example. The cross sectional shape of each of the air gaps $31G_A$ and $31G_B$ is a quadrangle. One side of the quadrangle of the cross sectional shape of the air gap $31G_A$ is on the side 61, and one side of the quadrangle of the cross sectional shape of the air gap $31G_B$ is on the side 62. In addition, between the air gaps $31G_A$ and $31G_B$, there is a part of the rotor laminated core 21b connecting the inner circumferential laminated core with the outer circumferential laminated core.

Further, the rotor 20b has a structure of line symmetry with respect to the X-axis as an axis of symmetry and has a structure of line symmetry with respect to the Y-axis as an axis of symmetry. In other words, the permanent magnets 32Aa and 32Ba and the air gaps $32G_A$ and $32G_B$ are disposed at positions obtained by rotating the arrangement positions of the permanent magnets 31Aa and 31Ba and the air gaps $31G_A$ and $31G_B$ on the XY coordinate plane about the Z-axis as a center axis clockwise by 90 degrees; the permanent magnets 33Aa and 33Ba and the air gaps $33G_A$ and $33G_B$ are disposed at positions obtained by rotating the same in the same manner by 180 degrees; and the permanent magnets 34Aa and 34Ba and the air gaps $34G_A$ and $34G_B$ are disposed at positions obtained by rotating the same in the same manner by 270 degrees.

When the permanent magnet of one pole constituted of the permanent magnets 31Aa and 31Ba is noted, widths of the permanent magnets 31Aa and 31Ba are handled respectively as $Wm_1$ and $Wm_2$, and each thickness of the permanent magnets 31Aa and 31Ba is handled as Tm. Further, a length of the air gap $31G_A$ or $31G_B$ in the Y-axis direction is handled as Ta, and a total length of a length (average length) of the air gap $31G_A$ in the X-axis direction and a length (average length) of the air gap 31GB in the X-axis direction is handled as Wa. In addition, the method of setting the air gap thickness ratio described above in the fundamental structure is applied to the second variation structure, too. Further, the core portion between the air gaps $31G_A$ and $31G_B$ is considered to be sufficiently saturated magnetically by the permanent magnet, so that it can be neglected when setting the air gap thickness ratio.

If the thickness of the air gap is set to substantially the same value as the thickness of the permanent magnet, the cross sectional view of the rotor is as illustrated in FIG 14. In this case too, a core connection portion (numeral 71 in FIG 14) connecting the inner circumferential laminated core with the outer circumferential laminated core exists between the neighboring air gaps. When a motor structure having such the core connection portion is adopted, d-axis inductance is increased a little (permeance in the d-axis direction is increased a little) compared with the case where the core connection portion is also an air gap. However, since the core connection portion is considered to be saturated magnetically as described above, contribution to a path of the field-weakening magnetic flux (Ld·id) is small. On the other hand, in the structure proposed in this embodiment, there is the air gap having a small gap length. Therefore, even if the core connection portion is saturated magnetically, high d-axis inductance can be obtained.

[Third variation structure]

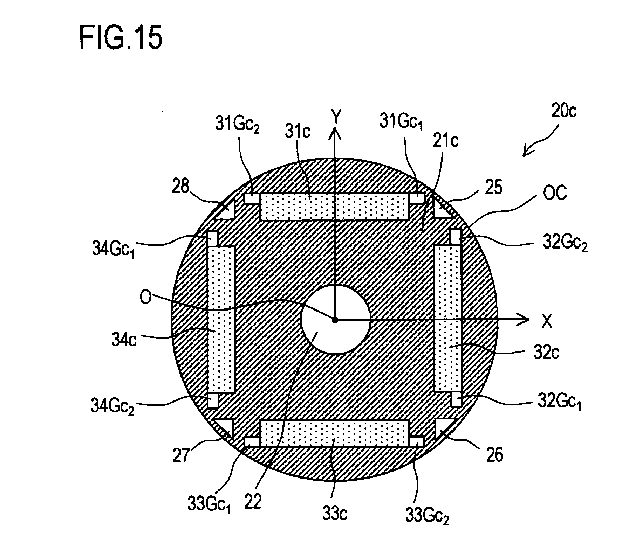

A third variation structure will be described. In the third variation structure, the cross sectional structure of the rotor 20 in the fundamental structure of the motor 1 is modified. The rotor with this modification is referred to as a rotor 20c. The rotation axis of the rotor 20c is the Z-axis. FIG 15 is a cross sectional view of the rotor 20c at any plane perpendicular to the Z-axis. If the cross sectional position in the Z-axis direction changes, the cross sectional structure of the rotor 20c is not changed.

The rotor 20c includes a rotor laminated core 21 c formed in the same manner as the rotor laminated core 21 in the fundamental structure, the cylindrical shaft 22 having the Z-axis as the center axis, plate-like permanent magnets 31c to 34c, and non-magnetic members 25 to 28. The rotor laminated core 21 c is provided with a shaft insertion hole, permanent magnet insertion holes and non-magnetic member insertion holes. The shaft 22, the permanent magnets 31c to 34c and the non-magnetic members 25 to 28 are respectively inserted in the shaft insertion hole, the permanent magnet insertion holes and the non-magnetic member insertion holes, and they are connected to each other to be fixed so that the rotor 20c is formed.

It is supposed that the origin O of the rectangular coordinate system having the X-axis, the Y-axis and the Z-axis as coordinate axes exists at the center of the shaft 22 on the cross sectional view illustrated in FIG 15. FIG 15 is a cross sectional view of the rotor 20c taken along the XY coordinate plane. On the XY coordinate plane, the cross sectional shape (contour shape) of the rotor laminated core 2 1 c is a circle and the center of the circle is identical to the origin O, while the cross sectional shape of the shaft 22 is a circle and the center of the circle is identical to the origin O. The outer circumferential circle OC of the rotor laminated core 21c is the same as that of the rotor laminated core 21 in the fundamental structure.

The rotor 20c is obtained by replacing the rotor laminated core 21, the permanent magnets 31A to 34A and 31B to 34B, and the air gap 31G to 34G in the fundamental structure with the rotor laminated core 21 c, the permanent magnet 31c to 34c, and the air gaps $31Gc_1$ to $34Gc_1$ and $31Gc_2$ to $34Gc_2$, respectively.

On the XY coordinate plane, if the permanent magnets 31A and 31B illustrated in FIG 4 are moved in parallel in the right and left direction so as to combine the both permanent magnets, the combined permanent magnet corresponds to the permanent magnet 31c. On the XY coordinate plane, if the permanent magnets 32A and 32B illustrated in FIG 4 are moved in parallel in the up and down direction so as to combine the both permanent magnets, the combined permanent magnet corresponds to the permanent magnet 32c. On the XY coordinate plane, if the permanent magnets 33A and 33B illustrated in FIG 4 are moved in parallel in the right and left direction so as to combine the both permanent magnets, the combined permanent magnet corresponds to the permanent magnet 33c. On the XY coordinate plane, if the permanent magnets 34A and 34B illustrated in FIG 4 are moved in parallel in the up and down direction so as to combine the both permanent magnets, the combined permanent magnet corresponds to the permanent magnet 34c. However, centers of the permanent magnets 3 1 c and 33c are positioned on the Y-axis, while centers of the permanent magnets 32c and 34c are positioned on the X-axis.

The air gaps $31Gc_1$ to $34Gc_1$ and $31Gc_2$ to $34Gc_2$ are disposed between the inner circumferential laminated core and the outer circumferential laminated core. On the XY coordinate plane, the air gap $31Gc_1$ is disposed so as to be adjacent to the right end of the permanent magnet 31c, and the air gap $31Gc_2$ is disposed so as to be adjacent to the left end of the permanent magnet 31c. On the XY coordinate plane, cross sectional shapes of the permanent magnets and the air gaps are rectangles. In the cross sectional view illustrated in FIG 15, the permanent magnet 31c and the air gap $31Gc_1$ are in contact directly with each other, but a part of the rotor laminated core 21 c may exist between them (the same is true for between the permanent magnet 31c and the air gap $31Gc_2$). On the XY coordinate plane, the part of the rotor laminated core 21 c inside the outer circumferential circle OC except for the shaft, the permanent magnets, the air gaps and the non-magnetic members is filled with the magnetic material (steel sheet material) forming the rotor laminated core 21c.

Further, the rotor 20c has a structure of line symmetry with respect to the X-axis as an axis of symmetry and has a structure of line symmetry with respect to the Y-axis as an axis of symmetry. In other words, the permanent magnet 32c and the air gaps $32Gc_1$ and $32Gc_2$ are disposed at positions obtained by rotating the arrangement positions of the permanent magnet 31c and the air gap $31Gc_1$ and $31Gc_2$ about the Z-axis as a center axis clockwise on the XY coordinate plane by 90 degrees; the permanent magnet 33c and the air gaps $33Gc_1$ and $33Gc_2$ are disposed at positions obtained by rotating the same in the same manner by 180 degrees; and the permanent magnet 34c and the air gaps $34Gc_1$ and $34Gc_2$ are disposed at positions obtained by rotating the same in the same manner by 270 degrees.

The direction of the magnetic flux generated by each permanent magnet is perpendicular to the Z-axis. In the third variation structure, each of the permanent magnet 31c to 34c solely forms the permanent magnet of one pole. The direction of the magnetic flux generated by each of the permanent magnets 31c and 33c is parallel to the Y-axis. The direction of the magnetic flux generated by each of the permanent magnets 32c and 34c is parallel to the X-axis.

On the XY coordinate plane, the non-magnetic member 25 is disposed on the right side of the air gap $31Gc_1$ and on the upper side of the air gap $32Gc_2$, and a bridge portion as a part of the rotor laminated core 21 c exists around the non-magnetic member 25 including between the air gap $31Gc_1$ and the non-magnetic member 25, as well as between the air gap $32Gc_2$ and the non-magnetic member 25, and the non-magnetic member 26 is disposed on the right side of the air gap $33Gc_2$ and on the lower side of the air gap $32Gc_1$, and a bridge portion as a part of the rotor laminated core 21c exists around the non-magnetic member 26 including between the air gap $33Gc_2$ and the non-magnetic member 26, as well as between the air gap $32Gc_1$ and the non-magnetic member 26, and
the non-magnetic member 27 is disposed on the left side of the air gap $33Gc_1$ and on the lower side of the air gap $34Gc_2$, and a bridge portion as a part of the rotor laminated core 21c exists around the non-magnetic member 27 including between the air gap $33Gc_1$ and the non-magnetic member 27, as well as between the air gap $34Gc_2$ and the non-magnetic member 27, and
the non-magnetic member 28 is disposed on the left side of the air gap $31Gc_2$ and on the upper side of the air gap $34Gc_1$, and a bridge portion as a part of the rotor laminated core 21 c exists around the non-magnetic member 28 including between the air gap $31Gc_2$ and the non-magnetic member 28, as well as between the air gap $34Gc_1$ and the non-magnetic member 28.

When the permanent magnet 31c is noted, a width of the permanent magnet 3 1 c (i.e., a length of the permanent magnet 31c in the X-axis direction) is handled as Wm, and a thickness of the permanent magnet 31c (i.e., a length of the permanent magnet 31c in the Y-axis direction) is handled as Tm. Further, a length of the air gap $31Gc_1$ or $31Gc_2$ in the Y-axis direction is handled as Ta, and a total length of a length of the air gap $31Gc_1$ in the X-axis direction and a length of the air gap $32Gc_2$ in the X-axis direction is handled as Wa. In addition, the method of setting the air gap thickness ratio described above in the fundamental structure is also applied to the third variation structure.

[Fourth variation structure]

A fourth variation structure will be described. In the fourth variation structure, and in a fifth variation structure described later, the direction of defining the width of the air gap is different from that in the fundamental structure and the first to the third variation structures. The rotor in the fourth variation structure is referred to as a rotor 20d, and a structure of the rotor 20d will be described in detail.

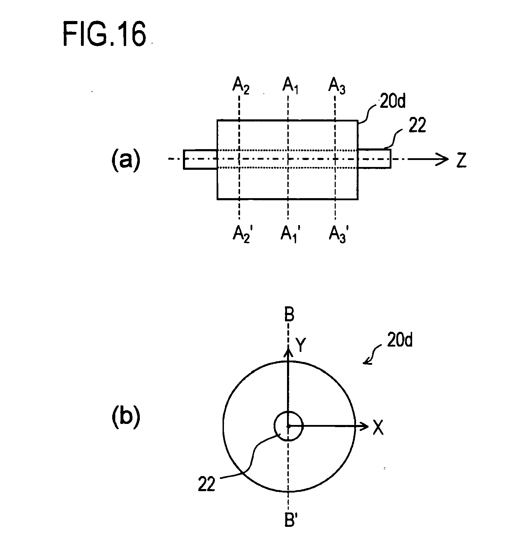

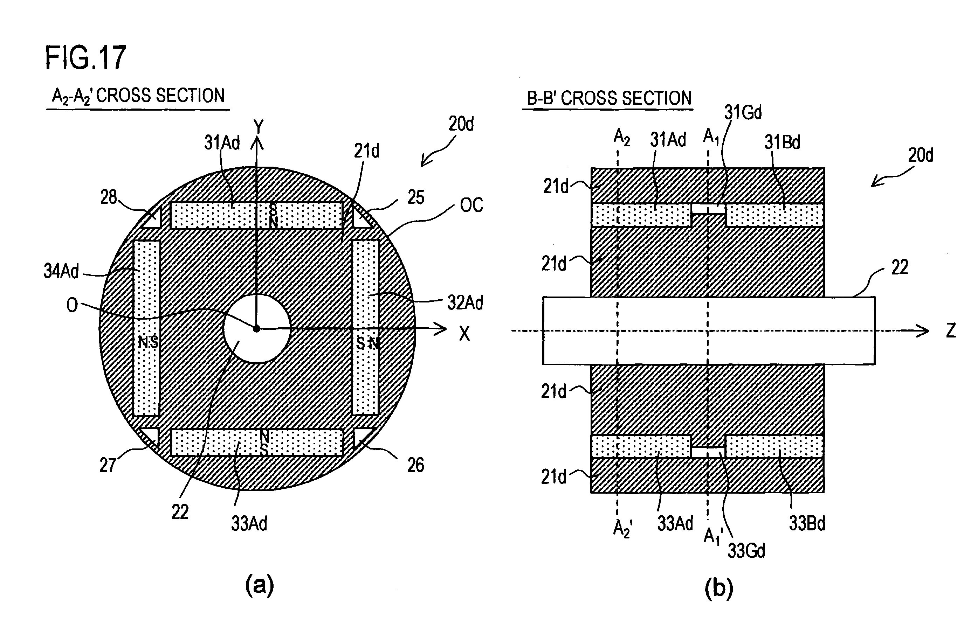

The rotation axis of the rotor 20d is the Z-axis. FIG 16(a) is an outline plan view of the rotor 20d viewed from the direction perpendicular to the rotation axis of the rotor 20d, and FIG 16(b) is an outline plan view of the rotor 20d viewed from the rotation axis direction of the rotor 20d. The cross section of the rotor 20d taken along the surface perpendicular to the Z-axis is different between the case where the cross sectional position is within a predetermined range close to the center of the rotor 20d and other case. The cross section in the former case is a cross section taken along the line $A_1$-$A_1$', while the cross section in the latter case is a cross section taken along the line $A_2$-$A_2$' or the line $A_3$-$A_3$'. FIG 17(a) is a cross sectional view of the rotor 20d corresponding to the latter case, taken along the surface perpendicular to the Z-axis. Here, FIG 17(a) is a cross sectional view of the rotor 20d taken along the line $A_2$-$A_2$'. The cross sectional structure of the rotor 20d taken along the line $A_3$-$A_3$' is the same as the cross sectional structure of the rotor 20d taken along the line $A_2$-$A_2$'.

The rotor 20d includes a rotor laminated core 21d formed in the same manner as the rotor laminated core 21 in the fundamental structure, the cylindrical shaft 22 having the Z-axis as the center axis, permanent magnets 31Ad to 34Ad, permanent magnets 31Bd to 34Bd (permanent magnet 31Bd to 34Bd are not shown in FIG 17(a)), and non-magnetic members 25 to 28. The rotor laminated core 21d is provided with a shaft insertion hole, permanent magnet insertion holes and non-magnetic member insertion holes. The shaft 22, the permanent magnets 31Ad to 34Ad, the permanent magnets 31Bd to 34Bd and non-magnetic members 25 to 28 are respectively inserted in the shaft insertion hole, the permanent magnet insertion holes and the non-magnetic member insertion holes, and they are connected to each other to be fixed so that the rotor 20d is formed.

It is supposed that the origin O of the rectangular coordinate system having the X-axis, the Y-axis and the Z-axis as coordinate axes exists at the center of the shaft 22 on the cross sectional view illustrated in FIG 17(a). FIG 17(a) is a cross section of the rotor 20d taken along the XY coordinate plane (i.e., the line $A_2$-$A_2$ in FIG 16(a) is supposed to be on the XY coordinate plane).

Here, as illustrated in FIG. 16(b), the line B-B' along the Y-axis is supposed, and a cross sectional view of the rotor 20d taken along the line B-B' is illustrated in FIG 17(b). In addition, the line $A_1$-$A_1$' and the line $A_2$-$A_2$' are superposed and displayed on the cross section illustrated in FIG 17(b).

On the XY coordinate plane, a cross sectional shape (contour shape) of the rotor laminated core 21d is a circle and the center of the circle is identical to the origin O, while the cross sectional shape of the shaft 22 is a circle and the center of the circle is identical to the origin O. The outer circumferential circle OC of the rotor laminated core 21d is the same as that of the rotor laminated core 21 in the fundamental structure. On the XY coordinate plane, a cross sectional shape of each of the permanent magnets 31Ad to 34Ad is a rectangle, the center of the rectangle of each of the permanent magnets 31Ad and 33Ad is positioned on the Y-axis while the center of the rectangle of each of the permanent magnets 32Ad and 34Ad is positioned on the X-axis. However, the permanent magnets 31Ad to 34Ad are respectively positioned on the positive side of the Y-axis, on the positive side of the X-axis, on the negative side of the Y-axis, and on the negative side of the X-axis, viewed from the origin O. On the XY coordinate plane, the rotor 20d has a structure of line symmetry with respect to the X-axis as an axis of symmetry and a structure of line symmetry with respect to the Y-axis as an axis of symmetry.

The direction of the magnetic flux generated by each permanent magnet is perpendicular to the Z-axis. Further, on the XY coordinate plane,

the north pole of the permanent magnet 31Ad is positioned on the lower side of the permanent magnet 31Ad,
the north pole of the permanent magnet 32Ad is positioned on the right side of the permanent magnet 32Ad,
the north pole of the permanent magnet 33Ad is positioned on the upper side of the permanent magnet 33Ad, and
the north pole of the permanent magnet 34Ad is positioned on the left side of the permanent magnet 34Ad.
The direction of the magnetic flux generated by the permanent magnets 31Ad and 33Ad (as well as 31Bd and 33Bd) is parallel to the Y-axis, and the direction of the magnetic flux generated by the permanent magnets 32Ad and 34Ad (as well as 32Bd and 34Bd) is parallel to the X-axis.

On the XY coordinate plane,
the non-magnetic member 25 is positioned on the right side of the permanent magnet 31Ad and on the upper side of the permanent magnet 32Ad, and a bridge portion that as a part of the rotor laminated core 21d exists around the non-magnetic member 25 including between the permanent magnet 31Ad and the non-magnetic member 25, as well as between the permanent magnet 32Ad and the non-magnetic member 25,
the non-magnetic member 26 is disposed on the right side of the permanent magnet 33Ad and on the lower side of the permanent magnet 32Ad, and a bridge portion as a part of the rotor laminated core 21d exists around the non-magnetic member 26 including between the permanent magnet 33Ad and the non-magnetic member 26, as well as between the permanent magnet 32Ad and the non-magnetic member 26,

the non-magnetic member 27 is disposed on the left side of the permanent magnet 33Ad and on the lower side of the permanent magnet 34Ad, and a bridge portion as a part of the rotor laminated core 21d exists around the non-magnetic member 27 including between the permanent magnet 33Ad and the non-magnetic member 27, as well as between the permanent magnet 34Ad and the non-magnetic member 27, and

the non-magnetic member 28 is disposed on the left side of the permanent magnet 31Ad and on the upper side of the permanent magnet 34Ad, and a bridge portion as a part of the rotor laminated core 21d exists around the non-magnetic member 28 including between the permanent magnet 31Ad and the non-magnetic member 28, as well as between the permanent magnet 34Ad and the non-magnetic member 28.

As illustrated in FIG 17(a), an air gap between the inner circumferential laminated core and the outer circumferential laminated core does not exist on the $A_2$-$A_2$' cross section of the rotor 20d, but the air gap exists on the B-B' cross section of the rotor 20d illustrated in FIG 17(b).

For simple description, the plurality of permanent magnets disposed in the rotor 20d have the same shape and size, and the plurality of air gaps disposed in the rotor 20d have the same shape and size. The permanent magnets 31Ad and 31Bd have the same direction of the magnetic flux, so that they form the permanent magnet of one pole. The permanent magnets 33Ad and 33Bd have the same direction of the magnetic flux, so that they form the permanent magnet of one pole. Similarly, The permanent magnets 32Ad and 32Bd have the same direction of the magnetic flux, so that they form the permanent magnet of one pole. The permanent magnets 34Ad and 34Bd have the same direction of the magnetic flux, so that they form the permanent magnet of one pole (permanent magnets 32Bd and 34Bd are not shown in FIG 17(a) or 17(b)).

On the B-B' cross section of the rotor 20d, cross sectional shapes of the permanent magnets and the air gaps are rectangles. In the Z-axis direction, the air gap 31Gd is disposed between the permanent magnet 31Ad and the permanent magnet 31Bd. Although the permanent magnet 31Ad and the air gap 31Gd contact directly with each other in the cross sectional view illustrated in FIG 17(b), a part of the rotor laminated core 21d may be disposed between them (the same is true for between the permanent magnet 31Bd and the air gap 31Gd).

The permanent magnets 31Ad and 31Bd and the air gap 31Gd are disposed between the inner circumferential laminated core and the outer circumferential laminated core in the rotor laminated core 21d. The permanent magnets 32Ad and 32Bd and the air gap 32Gd are disposed at positions obtained by rotating the arrangement positions of the permanent magnets 31Ad and 31Bd and the air gap 31Gd about the Z-axis as a center axis by 90 degrees; the permanent magnets 33Ad and 33Bd and the air gap 33Gd are disposed at positions obtained by rotating the same in the same manner by 180 degrees; and the permanent magnets 34Ad and 34Bd and the air gap 34Gd are disposed at positions obtained by rotating the same in the same manner by 270 degrees (the air gaps 32Gd and 34Gd are not shown in FIG 17(a) or 17(b)). The part of the rotor laminated core 21d inside the outer circumferential surface of the rotor laminated core 21d except for the shaft, the permanent magnets, the air gaps and the non-magnetic members is filled with the magnetic material (steel sheet material) forming the rotor laminated core 21d.

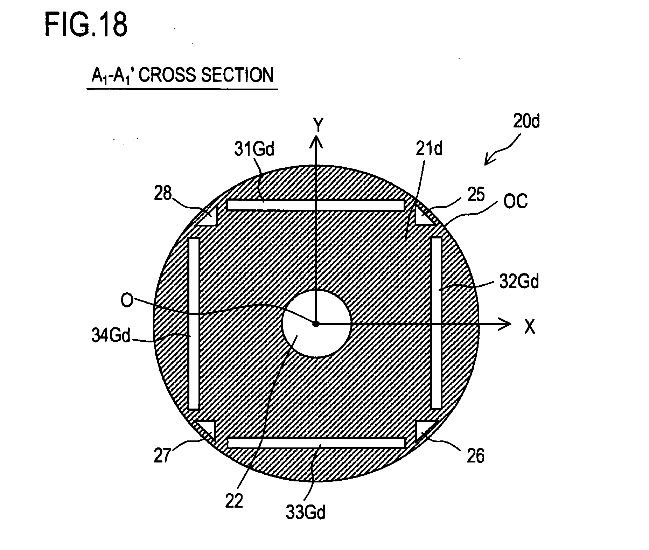

In addition, the $A_1$-$A_1$' cross sectional view of the rotor 20d is illustrated in FIG 18.

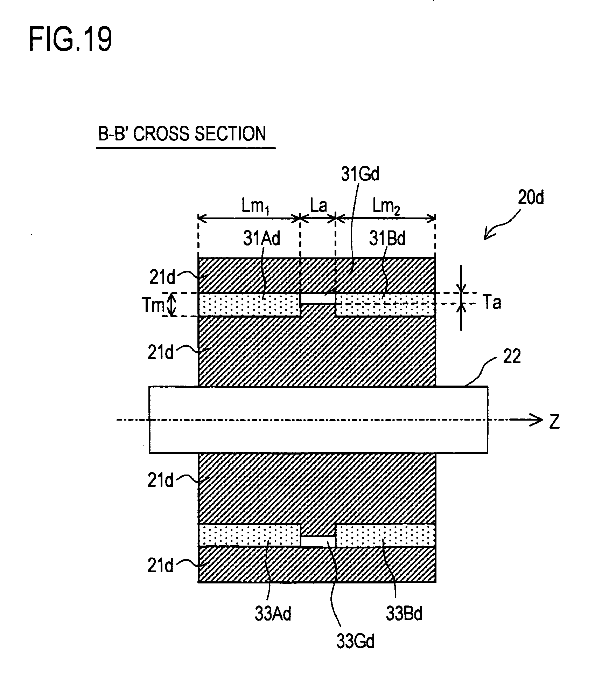

In the fourth variation structure, and in the fifth variation structure described later, a length in the Z-axis direction is regarded as a width direction. Then, as illustrated in FIG 19, widths of the two permanent magnets forming the permanent magnet of one pole are denoted by $Lm_1$ and $Lm_2$, and a total width Lm of the permanent magnet of one pole is expressed by $Lm=Lm_1+Lm_2$. Further, a thickness of the permanent magnet is denoted by Tm. The definition of the thickness of the permanent magnet is the same as that in the fundamental structure. In the fourth variation structure, and in the fifth variation structure described later, "width of the air gap" means a length of the air gap in the Z-axis direction. The definition of the thickness of the air gap is the same as that in the fundamental structure. The thickness and the width of the air gap are denoted by Ta and La.

Noting the permanent magnet of one pole constituted of the permanent magnets 31Ad and 31Bd, widths of the permanent magnets 31Ad and 31Bd (i.e., lengths thereof in the Z-axis direction) are $Lm_1$ and $Lm_2$, respectively, and each thickness of the permanent magnets 31Ad and 31Bd (i.e., a length in the Y-axis, direction) is Tm. Further, a width of the air gap 31Gd (i.e., a length in the Z-axis direction) is La, and a thickness of the air gap 31Gd (i.e., a length in the Y-axis direction) is Ta. Then, a combined magnetic reluctance Rm of the permanent magnets 31Ad and 31Bd and a magnetic reluctance Ra of the air gap 3 1 Gd are expressed by the equations (5a) and (5b) below, and the permeance Pd in the d-axis direction, which is approximated as the inverse number of parallel connection reluctance Rd of the magnetic reluctances Rm and Ra, is expressed by the equation (6) below. Here, W denotes a length of the permanent magnet in the direction perpendicular to the d-axis and the Z-axis. For instance, a length of the permanent magnet 31Ad in the X-axis direction is identical to W (see FIG 18). In addition, a length of the air gap 31Gd in the X-axis direction is also W.

[Expression 5]

$$Rm = \frac{Tm}{\mu_0 \cdot W \cdot Lm} \qquad (5a)$$

$$Ra = \frac{Ta}{\mu_0 \cdot W \cdot La} \qquad (5b)$$

[Expression 6]

$$Pd = \frac{1}{Rd} = \frac{\mu_0 \cdot W \cdot (Ta \cdot Lm + Tm \cdot La)}{Tm \cdot Ta}$$
$$= \mu_0 \cdot W \cdot (Lm/Tm + La/Ta) \qquad (6)$$

Therefore, in the fourth variation structure, a ratio of the air gap width La to (Lm+La) (i.e., La/(Lm+La)) is handled as an air gap width ratio, and the method of setting the air gap thickness ratio described above in the fundamental structure should be applied. The same is true in the fifth variation structure described later.

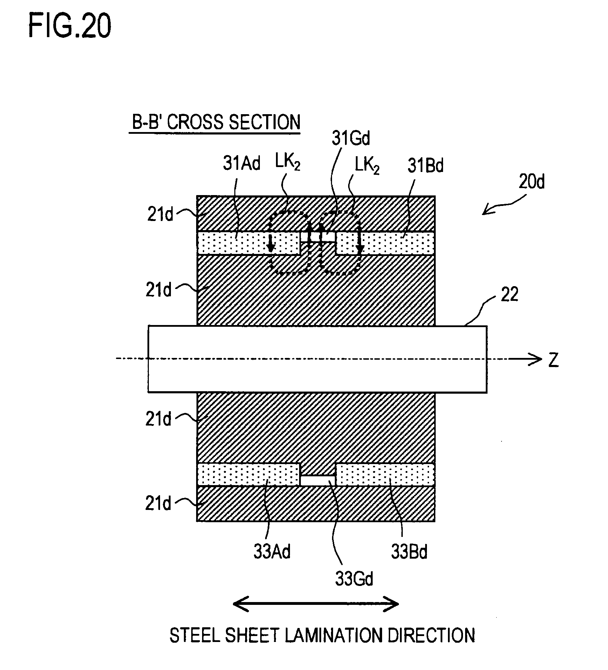

In the fundamental structure described above, the leakage magnetic circuit of the magnetic flux from the permanent magnet through the air gap in the rotor laminated core (the leakage magnetic circuit along the broken line with arrows $LK_1$ illustrated in FIG 11) is formed in the surface direction of the steel sheet forming the rotor laminated core. In other words, when the negative d-axis current is supplied to the armature winding, a magnetic circuit is formed from the inner circumferential laminated core through the air gap, the outer circumferential laminated core and the permanent magnet back to the inner circumferential laminated core. A part of the magnetic flux from the permanent magnet passes through this magnetic circuit, so that flux linkage of the armature winding decreases and that the field-weakening control is realized. The same is true for the first to the third variation structure. In contrast, in the fourth variation structure, the leakage magnetic circuit of the magnetic flux from the permanent magnet (the leakage magnetic circuit along the broken line with arrows $LK_2$ illustrated in FIG 20) is formed in the steel sheet lamination direction (the same is true for the fifth variation structure), so that iron loss is large. Therefore, considering the iron loss, it is preferred to adopt the fundamental structure and the first to third variation structures.

Note that the structure described in JP-A-8-51751 is similar to the fourth variation structure in that the leakage magnetic circuit of the magnetic flux from the permanent magnet is formed in the steel sheet lamination direction so that iron loss is large. In addition, since a magnetic attraction force acts between the permanent magnet and an end ring forming the leakage magnetic circuit, it is considered that a structural strength problem occurs.

[Fifth variation structure]

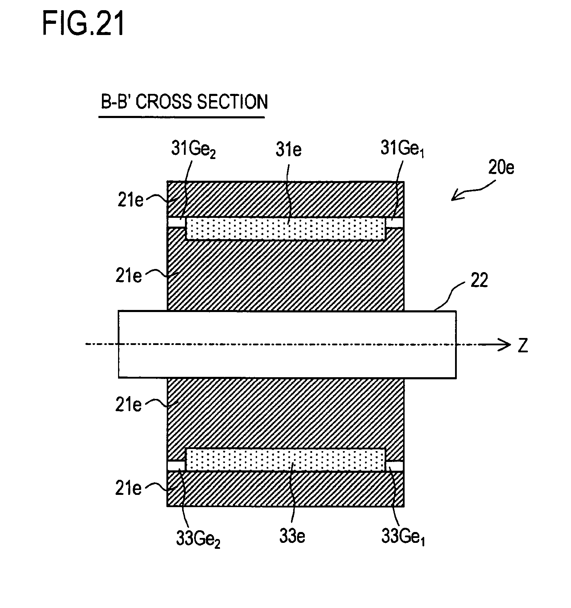

As the fundamental structure corresponding to FIG 4 is modified to the third variation structure corresponding to FIG 15, the rotor according to the fourth variation structure may be modified. With reference to FIG 21, the fifth variation structure with this modification will be described (matters that are not mentioned in particular are the same as those described above in the fourth variation structure). FIG 21 is a B-B' cross sectional view of a rotor 20e according to the fifth variation structure. Note that the cross sectional structure of the rotor 20e taken along the plane that is perpendicular to the Z-axis as the rotation axis of the rotor 20e and passes through the permanent magnet in the rotor 20e is the same as that of the rotor 20d according to the fourth variation structure (see FIG 17(a)).

In the fourth variation structure according to FIG 17(b), the air gap 31Gd disposed at the middle portion of the rotor is split into two gaps $31Ge_1$ and $31Ge_2$, which are disposed at end portions in the Z-axis direction of the rotor 20e. The permanent magnet 31e disposed in the rotor 20e corresponds to that obtained by moving in parallel the permanent magnets 31Ad and 31Bd in the fourth variation structure (see FIG 17(b)) in the Z-axis direction and combining them.

On the B-B' cross section of the rotor 20e, cross sectional shapes of the permanent magnets and the air gaps are rectangles. The air gaps $31Ge_1$ and $31Ge_2$ are disposed at one end surface and the other end surface of a permanent magnet 31e in the Z-axis direction. In the Z-axis direction, a part of one end surface of the permanent magnet 31e contacts with the air gap $31Ge_1$, and the other part of the one end surface contacts with the magnetic material forming the rotor laminated core 21e. In the Z-axis direction, a part of the other end surface of the permanent magnet 31e contacts with the air gap $31Ge_2$, and the other part of the other end surface contacts with the magnetic material forming the rotor laminated core 21e. Note that the permanent magnet 31e contacts directly with the air gap $31Ge_1$ in the cross sectional view illustrated in FIG 21, but a part of the rotor laminated core 21e of the rotor 20e may exists between them (the same is true for between the permanent magnet 31e and the air gap $31Ge_2$).

Similar modifications are performed also for other permanent magnets of three poles disposed in the rotor 20e. Specifically, for example, the permanent magnets 33Ad and 33Bd in the fourth variation structure (see FIG 17(b)) are moved in parallel in the Z-axis direction and are combined to each other so that the permanent magnet 33e is formed, and the permanent magnet 33e is embedded in the rotor laminated core 21e. On the other hand, the air gap 33Gd is split into two gaps $33Ge_1$ and $33Ge_2$, which are disposed at end surfaces in the Z-axis direction of the permanent magnet 33e.

The permanent magnet 31e and the air gaps $31Ge_1$ and $31Ge_2$ are disposed between the inner circumferential laminated core and the outer circumferential laminated core of the rotor laminated core 21e. The other permanent magnets of three poles and the other air gaps are disposed at positions obtained by rotating the arrangement positions of the permanent magnet 31e and the air gaps $31Ge_1$ and $31Ge_2$ about the Z-axis as the center axis by 90 degrees, by 180 degrees and by 270 degrees, respectively. The part of the rotor laminated core 21e inside the outer circumferential surface of the rotor laminated core 21e except for the shaft, the permanent magnets, the air gaps and the non-magnetic members is filled with the magnetic material (steel sheet material) forming the rotor laminated core 21e.

When the permanent magnet 31e is noted, a width of the permanent magnet 3 1 e (i.e., a length in the Z-axis direction of the permanent magnet 31e) is handled as Lm, and a thickness of the permanent magnet 3 1 e (i.e., a length in the Y-axis direction of the permanent magnet 31e) is handled as Tm. Further, a length in the Y-axis direction of the air gap $31Ge_1$ or $31Ge_2$ is handled as Ta, and a total length of a length in the Z-axis direction of the air gap $31Ge_1$ and a length in the Z-axis direction of the air gap $31Ge_2$ is handled as La. Then, the method of setting the air gap thickness ratio described above in the fundamental structure is applied also to the fifth variation structure.

[Sixth variation structure]

A sixth variation structure will be described. Usual field-weakening control is performed by supplying the negative d-axis current to the armature winding, but the field-weakening control can be performed in the motor 1 according to the sixth variation structure by applying the field magnetic flux from the field winding disposed outside of the rotor.

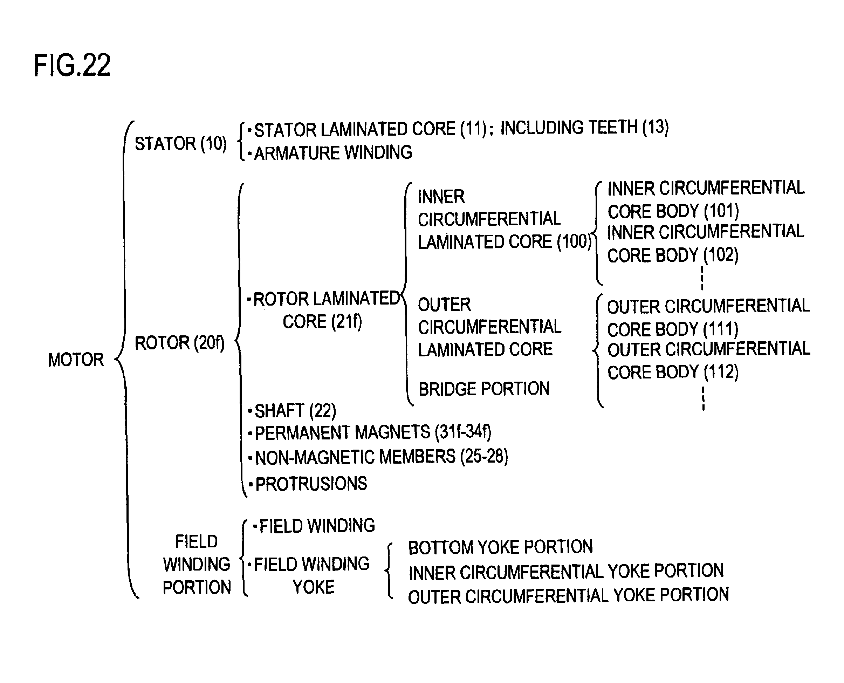

The rotor of the sixth variation structure is referred to as a rotor 20f. For easy understanding of description, names of structural elements of the motor 1 in the sixth variation structure are listed in FIG 22. Meanings of the names shown in FIG 22 will be clarified from the description later. First, a structure of the rotor 20f will be described in detail.

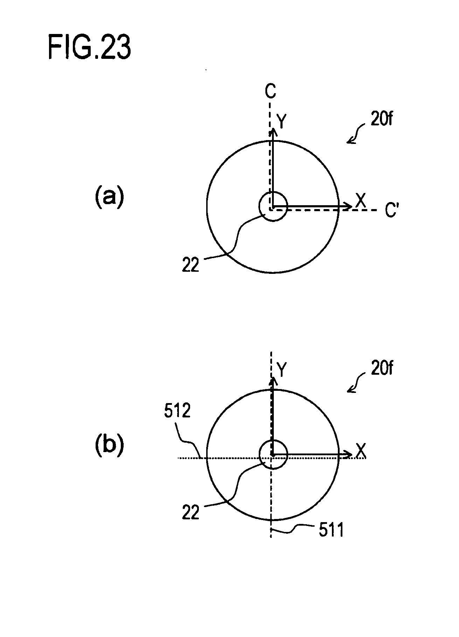

The rotation axis of the rotor 20f is the Z-axis. FIGS. 23(a) and 23(b) are outline plan views of the rotor 20f viewed from the rotation axis direction of the rotor 20f. Actually, the rotor 20f is provided with protrusions, which are to be shown in the outline plan views of FIGS. 23(a) and 23(b), but the protrusions are omitted in FIGS. 23(a) and 23(b) (details of the protrusions will be described later).

It is supposed that the origin O of a rectangular coordinate system having the X-axis, the Y-axis and the Z-axis as coordinate axes exists at the center of the cylindrical shaft 22 that has the Z-axis as the center axis and is provided to the rotor 20f. In order to describe a cross sectional structure of the rotor 20f, a cross section taken along the line C-C' in FIG 23(a) (hereinafter referred to as a C-C' cross section) is supposed. The line C-C' is a bent line that has a positive point on the Y-axis and a positive point on the X-axis as a start point and an end point and is bent at the Z-axis. In addition, a cross section taken along the broken line 511 in FIG 23(b), i.e., a cross section taken along the Y-axis (hereinafter referred to as a Y cross sectional view), and a cross section taken along the broken line 512 in FIG. 23(b), i.e., a cross section taken along the X-axis (hereinafter referred to as an X cross sectional view) are supposed. Note that the Y cross sectional view is equivalent to the B-B' cross section described above with reference to FIG 16(b).

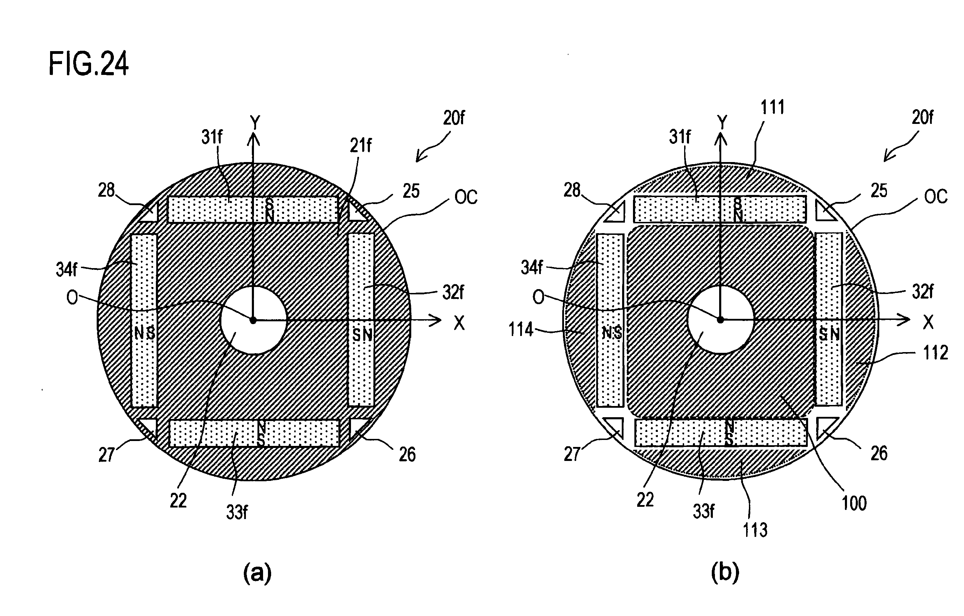

FIG 24(a) is a cross sectional view of the rotor 20f taken along a plane that is perpendicular to the Z-axis and does not cross the protrusion described later. In the case where the cross section perpendicular to the Z-axis does not cross the protrusion described later, the cross sectional structure of the rotor 20f is not changed when the cross sectional position in the Z-axis direction changes. The cross sectional structure of the rotor illustrated in FIG 24(a) is similar to that illustrated in FIG 17(a) for the fourth variation structure. As to matters that are not mentioned in particular, the description of the $A_2$-$A_2$' cross section of the rotor 20d according to the fourth variation structure is applied to the rotor 20f. In this application, numerals or symbols 20d, 21d, 31Ad, 32Ad, 33Ad and 34Ad in the fourth variation structure should be replaced by 20f, 21f, 31f, 32f, 33f and 34f, respectively.

The rotor 20f includes a rotor laminated core 21f formed in the same manner as the rotor laminated core 21 in the fundamental structure, a cylindrical shaft 22 having the Z-axis as the center axis, permanent magnets 31f to 34f, and non-magnetic members 25 to 28. The rotor laminated core 21f is provided with a shaft insertion hole, permanent magnet insertion holes and non-magnetic member insertion holes. The shaft 22, the permanent magnets 31f to 34f, and the non-magnetic members 25 to 28 are respectively inserted in the shaft insertion hole, the permanent magnet insertion holes and the non-magnetic member insertion holes, and they are connected to each other to be fixed.

The rotor laminated core 2 1 f is divided broadly into an inner circumferential laminated core positioned on the inner side of the permanent magnet, an outer circumferential laminated core positioned on the outer side of the permanent magnet, and the bridge portions. The inner circumferential laminated core means a portion of the rotor laminated core 21f positioned closer to the origin O (Z-axis) than the permanent magnets 31f to 34f, and the outer circumferential laminated core means a portion of the rotor laminated core 21f positioned closer to the outer circumferential circle OC of the rotor laminated core 21f than the permanent magnet 31f to 34f.

In FIG 24(b), the hatched region denoted by numeral 100 corresponds to the inner circumferential laminated core, while the entire of the hatched regions denoted by numerals 111 to 114 corresponds to the outer circumferential laminated core. The remainder regions obtained by removing the inner circumferential laminated core and the outer circumferential laminated core from the entire rotor laminated core 21f correspond to the bridge portions. Each of the hatched regions denoted by numerals 111 to 114 is a structural element of the outer circumferential laminated core and is referred to as an outer circumferential core body (see FIG 22 too).

On the XY coordinate plane, the outer circumferential core body 111 is adjacent to the permanent magnet 31f and is disposed on the positive direction side of the Y-axis than the permanent magnet 31f. The outer circumferential core body 112 is adjacent to the permanent magnet 32f and is disposed on the positive direction side of the X-axis than the permanent magnet 32f. The outer circumferential core body 113 is adjacent to the permanent magnet 33f and is disposed on the negative direction side of the Y-axis than the permanent magnet 33f. The outer circumferential core body 114 is adjacent to the permanent magnet 34f and is disposed on the negative direction side of the X-axis than the permanent magnet 34f.

The rotor 20f is formed by further combining protrusions to the above-mentioned member constituted of the rotor laminated core 21f, the shaft 22, the permanent magnets 31f to 34f and the non-magnetic members 25 to 28 that are combined to each other.

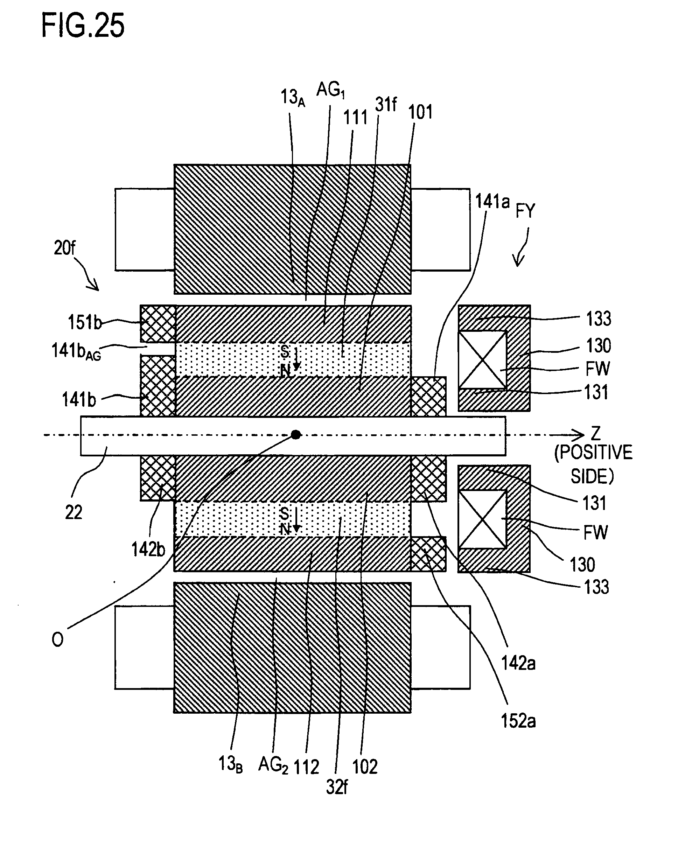

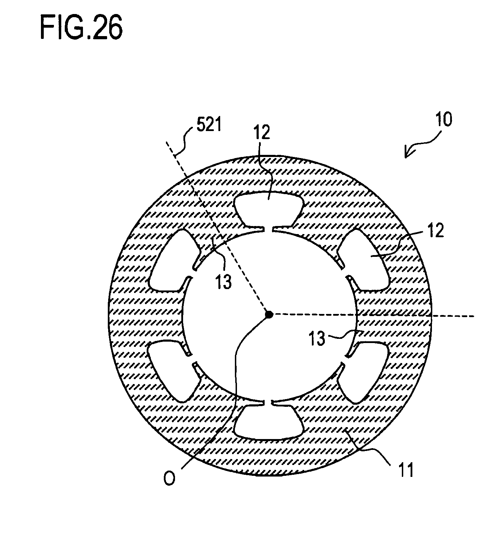

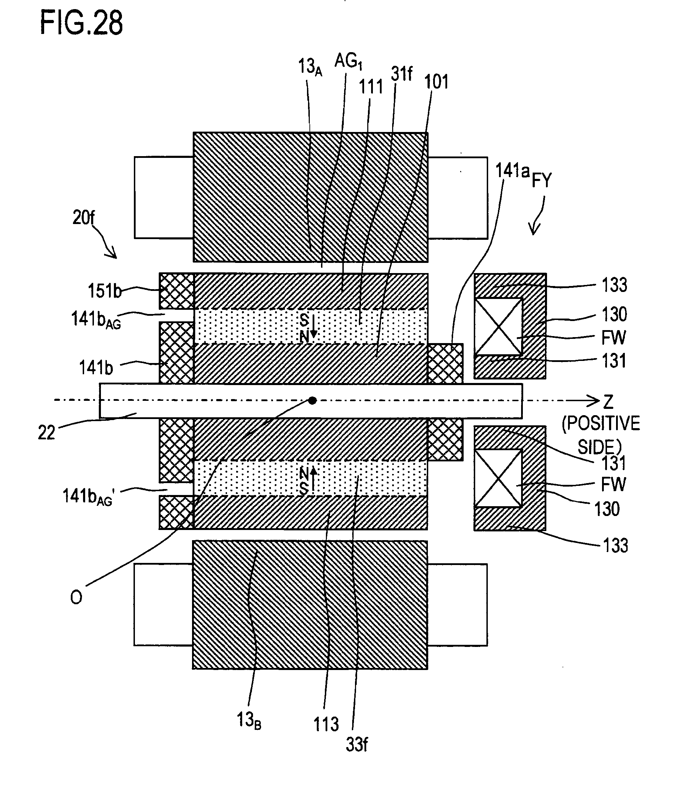

FIG 25 is a diagram in which the cross sectional view of the stator 10 and the C-C' cross sectional view of the rotor 20f and a field winding portion are combined. However, the cross section of the stator 10 in FIG 25 and in FIGS. 28, 29 and 33 that will be referred to later is a cross section of the stator 10 taken along the line 521 (see FIG 26) that passes through the center of a first teeth 13 (teeth $13_A$ in FIG 25) among six teeth 13 included in the stator 10, the origin O and the center of a second teeth 13 (teeth $13_B$ in FIG 25). The right and left direction in FIG 25 is the same as the Z-axis direction, and the right side in FIG 25 corresponds to the positive side of the Z-axis (the same is true in FIGS. 28, 29 and 33 that will be referred to later).

In the C-C' cross sectional view of the rotor 20f, a part of the inner circumferential laminated core 100 exists between the permanent magnet 31f and the shaft 22 and is referred to as an inner circumferential core body 101. Similarly, another part of the inner circumferential laminated core 100 exists between the permanent magnet 32f and the shaft 22 and is referred to as an inner circumferential core body 102.

On the cross section illustrated in FIG 25 (see also FIG 22, FIGS. 24(a) and 24(b)), there are illustrated permanent magnets 31f and 32f, outer circumferential core bodies 111 and 112 as parts of the outer circumferential laminated core, inner circumferential core bodies 101 and 102, an air gap $AG_1$ between the teeth $13_A$ and the outer circumferential core body 111, and an air gap $AG_2$ between the teeth $13_B$ and the outer circumferential core body 112. In addition, on the cross section illustrated in FIG 25 (see also FIG 22, FIGS. 24(a) and 24(b)), there are illustrated protrusions 141 a, 142a, 152a, 151b, 141b and 142b that are connected to the rotor laminated core 21f, and a field winding portion constituted of a field winding yoke FY and a field winding FW. The field winding portion is fixed and disposed on the right side of the rotor 20f (positive side in the Z-axis direction).

As illustrated in FIG 25, in which the cross sectional view of the stator 10 and the C-C' cross sectional view of the rotor 20f are combined, viewed from the teeth $13_A$, there are arranged the air gap $AG_1$, the outer circumferential core body 111, the permanent magnet 31f, the inner circumferential core body 101, the shaft 22, the inner circumferential core body 102, the permanent magnet 32f, the outer circumferential core body 112 and the air gap $AG_2$ in this order between the teeth $13_A$ and the teeth $13_B$. Note that arrows in the permanent magnet (permanent magnet 31f and the like) indicate the direction of the magnetic flux in the permanent magnet (the same is true in FIG 28 and others that will be referred to later). Each of the protrusion is made of pressed powder magnetic material obtained by press molding of powder magnetic material such as iron powder (however, it may be formed of steel sheet).

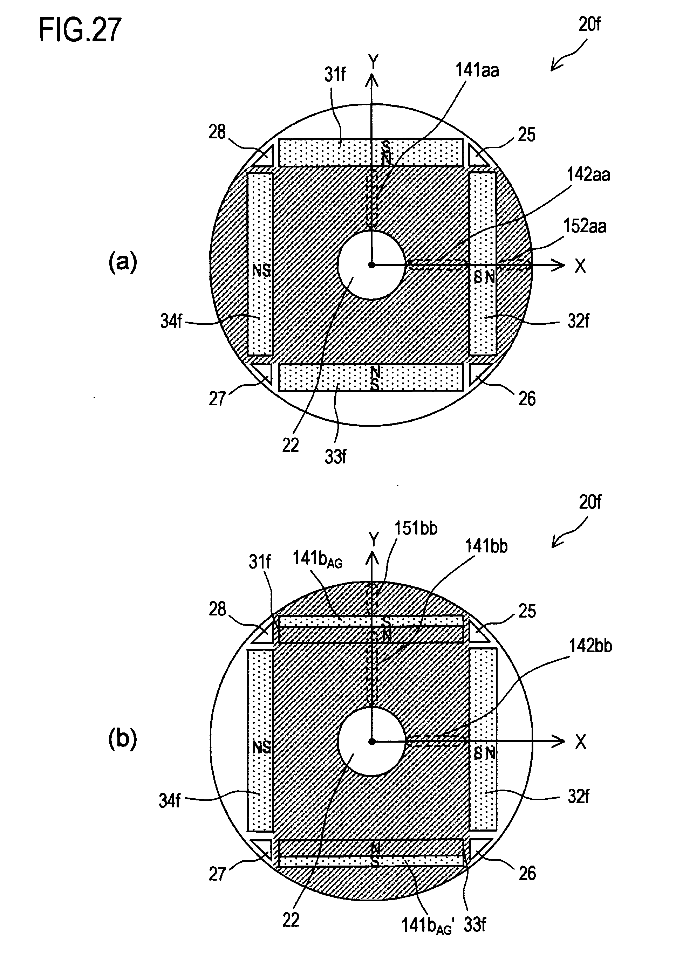

FIG 27(a) illustrates an outline plan view of the rotor 20f viewed from the positive side of the Z-axis. In FIG 27 (a), the hatched portion is a part protruding from the end surface of the rotor laminated core 21f toward the positive side of the Z-axis. The protrusions 141 a, 142a and 152a are positioned in the broken line regions denoted by numerals 141aa, 142aa and 152aa, respectively. FIG 27(b) illustrates an outline plan view of the rotor 20 viewed from the negative side of the Z-axis. In FIG 27(b), the hatched portion is a part protruding from the end surface of the rotor laminated core 21f toward the negative side of the Z-axis. The protrusions 151b, 141b and 142b are positioned in the broken line regions denoted by numerals 151bb, 141bb and 142bb, respectively. In addition, the protrusion 141b covers a part of the end surface of the permanent magnet 31f on the negative side of the Z-axis. In the Y-axis direction that is perpendicular to the Z-axis, there is an air gap $141b_{AG}$ between the protrusion 141b and the protrusion 151b. When viewing from the negative side of the Z-axis, the portion where the air gap $141b_{AG}$ exists does not protrude, and there is no pressed powder magnetic material forming the protrusion in the portion.

Each of the protrusions 141 a and 141b is bonded to the inner circumferential core body 101 so as to protrude from the end surface in the rotation axis direction of the inner circumferential core body 101 of the rotor 20f to the rotation axis direction. However, the protrusion 141 a protrudes from the end surface of the inner circumferential core body 101 on the positive side of the Z-axis to the positive direction side of the Z-axis, and the protrusion 141b protrudes from the end surface of the inner circumferential core body 101 on the negative side of the Z-axis to the negative direction side of the Z-axis.

Each of the protrusions 142a and 142b is bonded to the inner circumferential core body 102 so as to protrude from the end surface in the rotation axis direction of the inner circumferential core body 102 of the rotor 20f to the rotation axis direction. However, the protrusion 142a protrudes from the end surface of the inner circumferential core body 102 on the positive side of the Z-axis to the positive direction side of the Z-axis, and the protrusion 142b protrudes from the end surface of the inner circumferential core body 102 on the negative side of the Z-axis to the negative direction side of the Z-axis.

The protrusion 151b is bonded to the outer circumferential core body 111 so as to protrude from the end surface in the rotation axis direction of the outer circumferential core body 111 of the rotor 20f to the rotation axis direction. However, the protrusion 151b protrudes from the end surface of the outer circumferential core body 111 on the negative side of the Z-axis to the negative direction side of the Z-axis.

The protrusion 152a is bonded to the outer circumferential core body 112 so as to protrude from the end surface in the rotation axis direction of the outer circumferential core body 112 of the rotor 20f to the rotation axis direction. However, the protrusion 152a protrudes from the end surface of the outer circumferential core body 112 on the positive side of the Z-axis to the positive direction side of the Z-axis.

Note that along with the formation of the protrusions 142a and 152a, the permanent magnet 32f may also be protruded to the positive side of the Z-axis so that the end surface of the permanent magnet 32f on the positive side of the Z-axis meets with the end surfaces of the protrusions 142a and 152a.

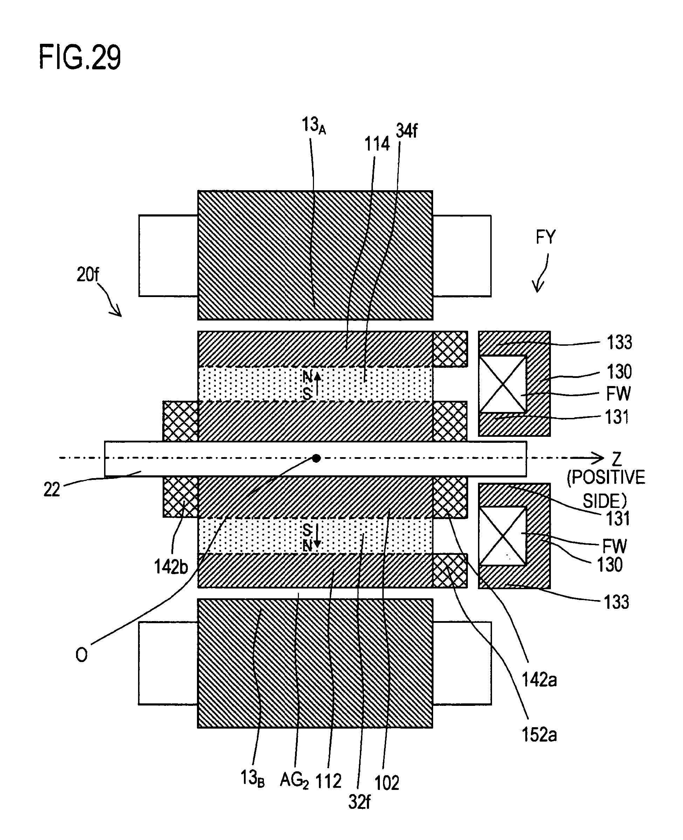

In addition, FIG 28 illustrates a diagram in which the cross section of the stator 10 is combined with the Y cross sectional view of the rotor 20f and the field winding portion (cross section along the broken line 511 in FIG 23(b)). FIG 29 illustrates a diagram in which the cross section of the stator 10 is combined with the X cross sectional view of the rotor 20f and the field winding portion (cross section along the broken line 512 in FIG 23(b)). The upper side in FIG 28 corresponds to the positive side of the Y-axis, while the lower side in FIG 28 corresponds to the negative side of the Y-axis. The upper side in FIG 29 corresponds to the negative side of the X-axis, while the lower side in FIG 28 corresponds to the positive side of the X-axis. As understood from FIGS. 27(a) and 27(b), too, on the XY coordinate plane, the rotor 20f has a structure of line symmetry with respect to the X-axis as an axis of symmetry and has a structure of line symmetry with respect to the Y-axis as an axis of symmetry. Therefore, on the cross section illustrated in FIG 28, in addition to the air gap $141b_{AG}$ positioned on the positive side of the Y-axis, an air gap $141b_{AG}$' positioned on the negative side of the Y-axis corresponding to the air gap $141b_{AG}$ is also viewed (see FIG 27(b) too).

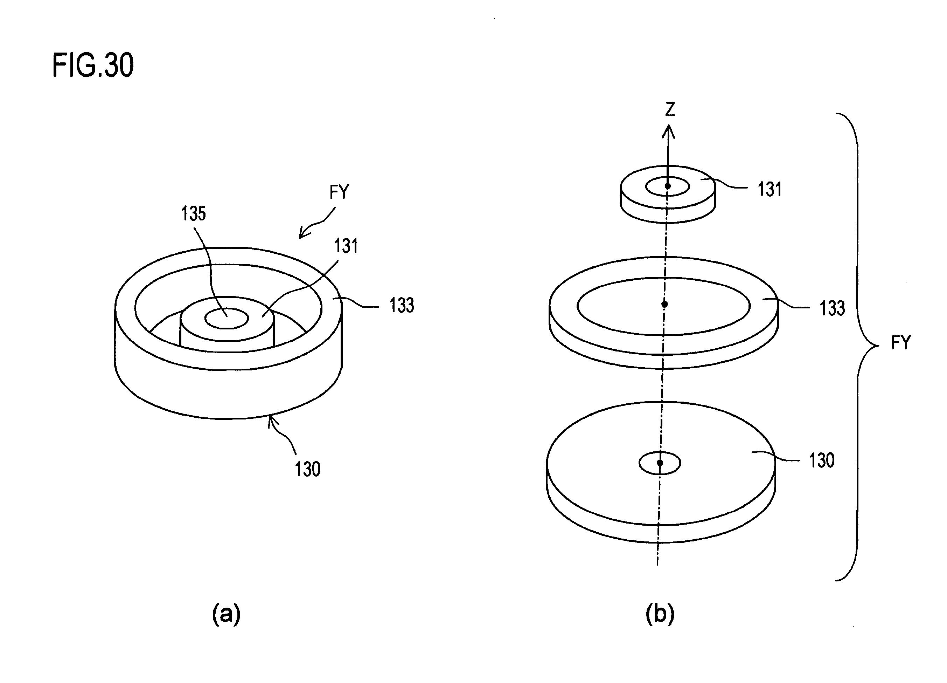

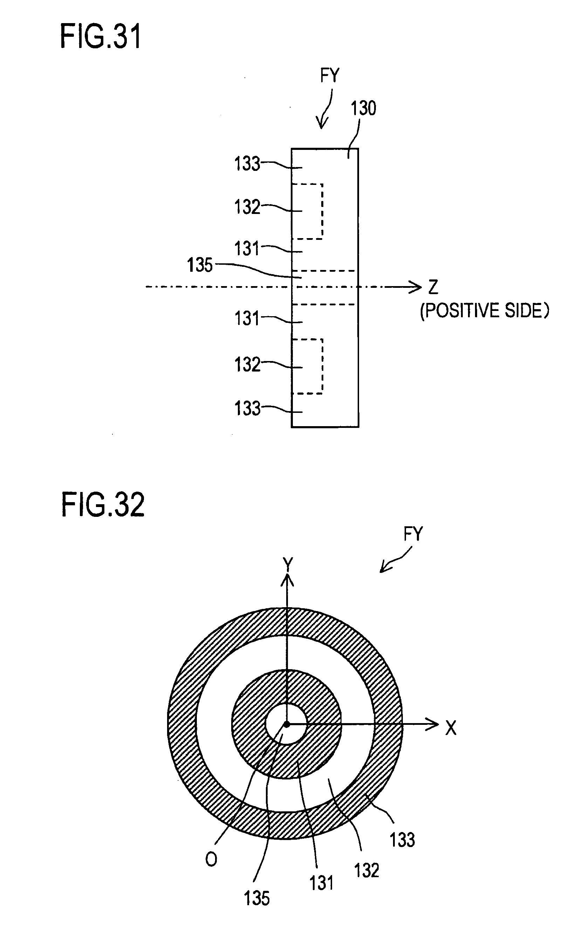

FIG 30(a) illustrates an outside perspective view of the field winding yoke FY. FIG 30(b) illustrates an exploded view of the field winding yoke FY FIG 31 illustrates an outside view of the field winding yoke FY viewed from a viewpoint such that the Z-axis direction corresponds to the right and left direction in the diagram. FIG 32 illustrates a projection view of the field winding yoke FY on the XY coordinate plane viewed from the negative side of the Z-axis.

The field winding yoke FY is constituted of a cylindrical magnetic material having the center of the circle on the Z-axis, in which a hole 135 extending in the Z-axis direction for the shaft 22 to pass through and a slot (recess) 132 for disposing the field winding FW are formed. From the exploded view, the field winding yoke FY can be considered to have a structure in which an inner circumferential yoke portion 131 and an outer circumferential yoke portion 133, each of which has a cylindrical shape, are combined onto a bottom yoke portion 130 having a cylindrical shape, so that the centers of circles thereof are all on the Z-axis. A radius of the circle of the inner circumferential side in the outer circumferential yoke portion 133 is larger than a radius of the circle of the outer circumferential side in the inner circumferential yoke portion 131. Viewed from the Z-axis direction, the outer circumferential yoke portion 133 is positioned outside the inner circumferential yoke portion 131, the slot 132 is positioned between the outer circumferential yoke portion 133 and the inner circumferential yoke portion 131. The field winding FW is wound around the Z-axis along the outer circumference of the inner circumferential yoke portion 131. In addition, end surfaces of the inner circumferential yoke portion 131 and the outer circumferential yoke portion 133 (end surfaces positioned on the opposite side of the bottom yoke portion 130) are on the same plane perpendicular to the Z-axis.

The field winding yoke FY is made of pressed powder magnetic material obtained by press molding of powder magnetic material such as iron powder (however, it may be formed of steel sheet).

With reference to FIG 25 again, the arrangement position of the field winding portion in the above-mentioned structure will be described in detail. Viewed from the Z-axis direction, a radius of the field winding yoke FY in the outer circumference (i.e., a radius of the circle of the outer circumferential side in the outer circumferential yoke portion 133) is the same or substantially the same as a radius of the outer circumference of the rotor 20.

Further, the field winding yoke FY is arranged so that the inner circumferential yoke portion 131 of the field winding yoke FY is opposed to the protrusions 141a and 142a, and that the outer circumferential yoke portion 133 of the field winding yoke FY is opposed to the protrusion 152a. The end surfaces of the protrusions 141a and 142a face the end surface of the inner circumferential yoke portion 131 via a minute air gap, and the end surface of the protrusion 152a faces the end surface of the outer circumferential yoke portion 133 via a minute air gap.

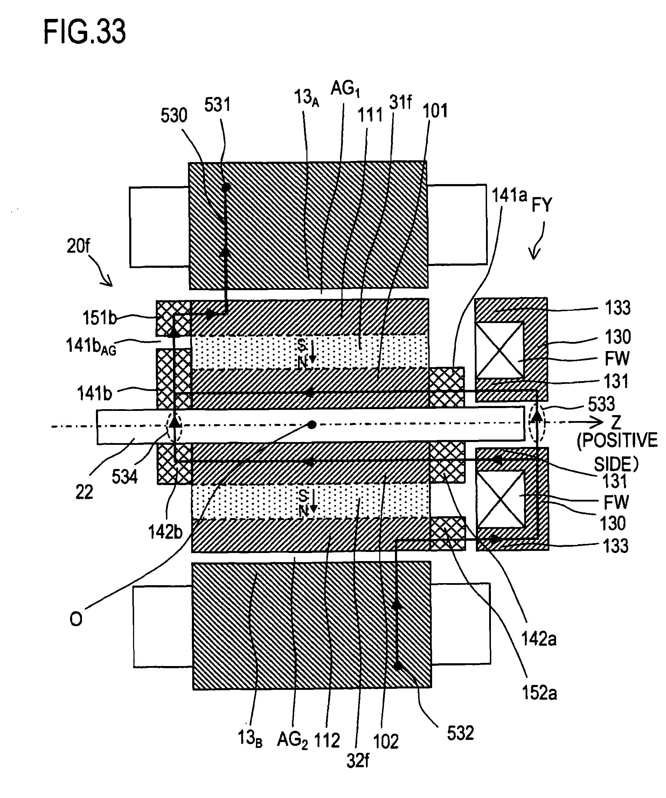

Next, with reference to FIG 33, a manner of the magnetic flux when current is supplied to the field winding FW will be described. The bent line with arrows 530 in FIG 33 indicates a magnetic path of the magnetic flux generated by supplying current to the field winding FW and the direction of the magnetic flux. Here, the direction in the bent line with arrows 530 shows the direction in the case where the current is supplied to the field winding FW in the direction of weakening the field magnetic flux of the permanent magnet.

Hereinafter, the field magnetic flux obtained from the permanent magnets 31f to 34f is referred to as a main field magnetic flux (first field magnetic flux), and the magnetic flux generated by supplying the current to the field winding FW is referred to as a sub field magnetic flux (second field magnetic flux). In addition, the current supplied to the field winding FW (and a field winding FW' described later) may be referred to as field current.

In FIG 33, a part of the bent line with arrows 530 positioned in the broken line 533 near the Z-axis indicates a manner in which the sub field magnetic flux passes through the bottom yoke portion 130 of the field winding yoke FY along the circumferential direction, and a part of the bent line with arrows 530 positioned in the broken line 534 near the Z-axis indicates a manner in which the sub field magnetic flux passes through the magnetic material between the protrusions 142b and 141b along the circumferential direction of the shaft 22. In addition, both ends 531 and 532 of the bent line with arrows 530 are connected to each other by the stator laminated core 11 including the teeth $13_B$ and $13_A$ with very small magnetic reluctance.

The relative permeability of the permanent magnet has a value close to one (e.g., 1.1), while relative permeability values of the stator laminated core, the field winding yoke, the rotor laminated core and the protrusions combined to the rotor laminated core are sufficiently large (e.g., a few hundreds to a few tens of thousands). Therefore, the magnetic path of the sub field magnetic flux has a first magnetic path and a second magnetic path described below as main paths for the magnetic flux. The second magnetic path corresponds to a branch of a part of the first magnetic path.

A start point is supposed at the bottom yoke portion 130 of the field winding yoke FY. The first magnetic path is a magnetic path including a portion corresponding to the broken line 534. Specifically, the first magnetic path starts from the bottom yoke portion 130 and reaches the bottom yoke portion 130 through a part of the inner circumferential yoke portion 131 facing the protrusion 142a, the protrusion 142a, the inner circumferential core body 102, the protrusion 142b, the protrusion 141b, the air gap $141b_{AG,}$ the protrusion 151b, the outer circumferential core body 111, the air gap $AG_1$, the stator laminated core 11 including the teeth $13_B$ and $13_A$, the air gap $AG_2$, the outer circumferential core body 112, the protrusion 152a, and a part of the outer circumferential yoke portion 133 facing the protrusion 152a.

The second magnetic path is a magnetic path including a part of the broken line 533. Specifically, second magnetic path is a magnetic path passing through the bottom yoke portion 130, a portion of the inner circumferential yoke portion 131 facing the protrusion 141 a, the protrusion 141 a, the inner circumferential core body 101, and the protrusion 141b. In the protrusion 141b, the first and the second magnetic paths join each other.

The inner circumferential laminated core 100 including the inner circumferential core bodies 101 and 102 and the protrusions (including 141 a, 141b, 142a and 142b) that are combined to the inner circumferential laminated core 100 form the "rotor inner circumferential core" as a whole. The outer circumferential laminated core including the outer circumferential core bodies 111 and 112 and the protrusions (including 151b and 152a) that are combined to the outer circumferential laminated core form the "rotor outer circumferential core" as a whole. Then, the rotor inner circumferential core, the rotor outer circumferential core and the field winding portion are formed and arranged so that the above-mentioned magnetic path of the sub field magnetic flux is formed. Thus, when the sub field magnetic flux is generated, combined magnetic flux of the main field magnetic flux generated by the permanent magnet and the sub field magnetic flux generated by the field winding becomes the flux linkage of the armature winding of the stator 10.

Further, when the above description concerning the fundamental structure and the like is applied to the sixth variation structure, terms of "inner circumferential laminated core" and "outer circumferential laminated core" should be replaced with terms of "rotor inner circumferential core" and "rotor outer circumferential core" appropriately (the same is true for the eighth variation structure in the second embodiment). In the fundamental structure, the rotor inner circumferential core is constituted of only the inner circumferential laminated core, while the rotor outer circumferential core is constituted of only outer circumferential laminated core (the same is true for the first variation structure and the like).

With the above-mentioned structure of the motor, the field-weakening control can be realized by supplying field current to the field winding disposed outside of the rotor end. In this case, magnetic field generated by the field winding is not directly added to the permanent magnet itself, so there is no risk of demagnetization of the permanent magnet. In addition, when the field-weakening control is realized, it is not necessary to supply the negative d-axis current to the armature winding. Therefore, increase of heat generation in the armature winding due to the d-axis current can be resolved (heat generating portion is dispersed). In addition, if the d-axis current is necessary, it is necessary to decrease q-axis current (current component related to a torque). However, according to the sixth variation structure, it is not necessary to decrease the q-axis current, so that decrease of generated torque in high speed rotation can be suppressed.

In addition, since the field winding yoke forming the magnetic circuit connecting the rotor inner circumferential core with the rotor outer circumferential core is disposed on the outside of the rotor end in the structure, it is sufficient to use only the space outside the rotor end, so that the motor can be downsized. Further, the magnetic circuit for the sub field magnetic flux does not include the back yoke (yoke that is positioned outside the stator winding so as to form a part of the motor frame). Therefore, there is no risk of leakage of the sub field magnetic flux through a peripheral member of the motor frame.

Further, as understood clearly from the above description, no protrusion is disposed on the field winding yoke FY side of the outer circumferential core body 111 (see FIG 33). If a protrusion is disposed also on the field winding yoke FY side of the outer circumferential core body 111, a closed magnetic path is formed by the rotor core portion disposed between the teeth $13_A$ and the shaft 22 on the cross section of FIG 33 and the field winding yoke FY, so that the sub field magnetic flux has no linkage with the armature winding of the stator 10. In order to avoid such situation, a length of an air gap between the outer circumferential core body 111 and the outer circumferential yoke portion 133 is set to a sufficiently large value. For instance, this length of the air gap is set to a value of five times to a few ten times the air gap length between the stator and the rotor (i.e., a length of each of the air gaps $AG_1$ and $AG_2$).

As illustrated in FIGS. 25 and 28, on the C-C' cross sectional view of the rotor 20f and the Y cross sectional view, a cross sectional shape of the permanent magnet and a cross sectional shape of the air gap between the protrusions ($141b_{AG}$ and $141b_{AG}$') are rectangles. In the sixth variation structure, similarly to the fourth and the fifth variation structures, a length in the Z-axis direction is regarded as the width direction. Therefore, similarly to the fourth and the fifth variation structures, a width of the permanent magnet of one pole (i.e., a length in the Z-axis direction of the permanent magnet 3 1 f, 32f, 33f or 34f) is regarded as the width Lm, a thickness of the permanent magnet of one pole (i.e., length in the inter-pole direction of the permanent magnet 31f, 32f, 33f or 34f) is regarded as the thickness Tm. In the sixth variation structure, the width of the air gap La indicates a length in the Z-axis direction of the air gap $141b_{AG}$ (or $141b_{AG}$'). In the sixth variation structure, the thickness of the air gap Ta indicates a length in the d-axis direction of the air gap $141b_{AG}$ (or $141b_{AG}$'),which is equal to a length in the Y-axis direction of the air gap $141b_{AG}$ (or $141b_{AG}$') (see also FIG 27(b)).

Also in the sixth variation structure, similarly to the fourth and the fifth variation structures, a ratio of the air gap width La to (Lm+La) (i.e., La/(Lm+La)) is handled as an air gap width ratio, and the method of setting the air gap thickness ratio described above in the fundamental structure should be applied.

<<Second embodiment>>

The structure of the inner rotor type motor is described above in the first embodiment, but the technical matter described above in the first embodiment may be applied to an outer rotor type motor. A structure of a motor 201 as the outer rotor type motor will be described as a second embodiment.

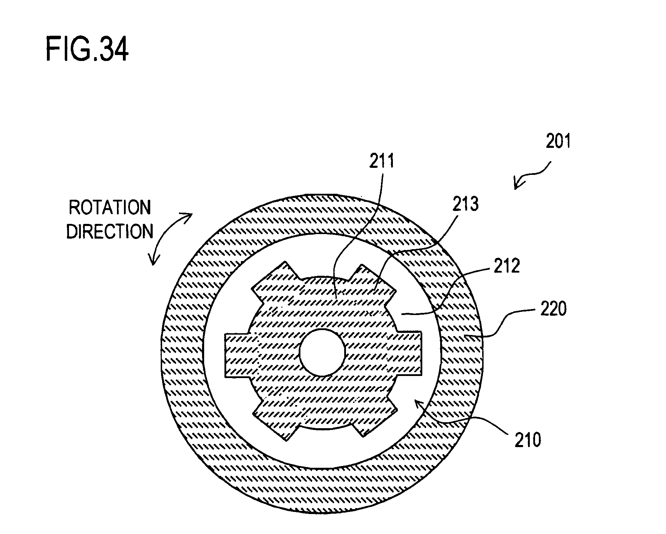

FIG. 34 is a schematic diagram illustrating a general structure of the motor 201 viewed from the rotation axis direction of the rotor. The motor 201 is a permanent magnet synchronization motor including a rotor 220 constituted of permanent magnets embedded in a core, a stator 210 fixed and arranged inside the rotor 220, and is particularly called an interior permanent-magnet synchronization motor. Since the rotor 220 is disposed outside the stator 210, the rotor 220 is an outer rotor. Further, in FIG 34, for convenience of illustration, a pattern is applied to the part where members of the stator 210 and the rotor 220 exist.

The stator 210 includes a stator laminated core 211 constituted of a plurality of steel sheets (such as silicon steel sheets) as magnetic material (ferromagnetic material) laminated in the rotation axis direction of the rotor 220. The stator laminated core 211 is provided with six slots 212 and six teeth 213 protruding toward the outer circumferential direction, which are disposed alternately. Then, utilizing the slot 212 for disposing a coil, the coil (not shown in FIG 34) is wound around the teeth 213 so that the armature winding of the stator 210 is formed. In other words, the stator 210 is a so-called six-coil concentrated winding stator. Note that the number of slots, the number of teeth and the number of coils may be other than six.

In addition, a hole is formed at the middle portion of the stator laminated core 211 along the rotation axis direction of the rotor 220.

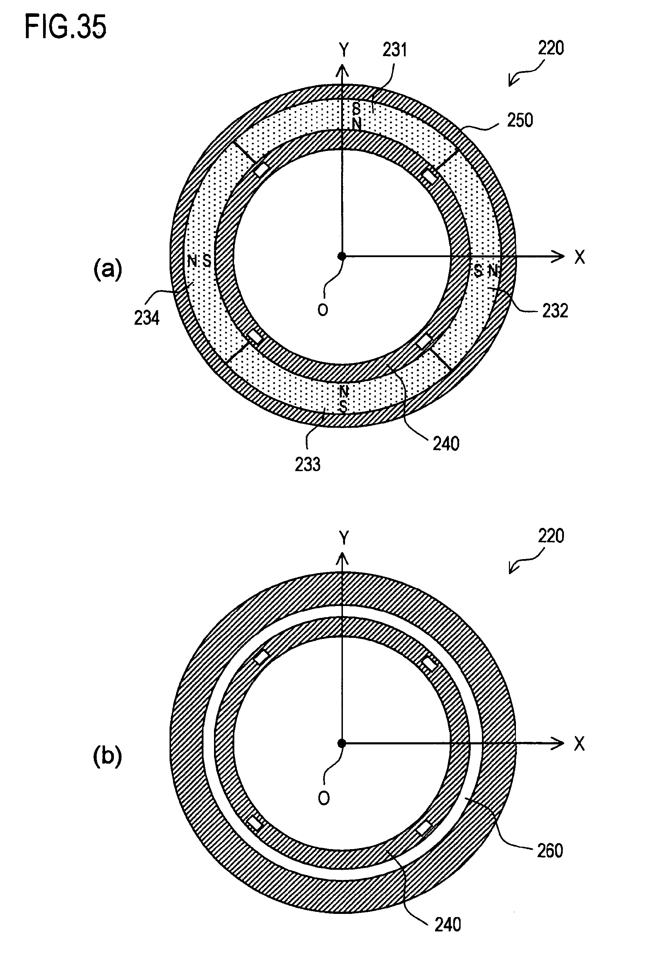

In the second embodiment, the rotation axis of the rotor 220 corresponds to the Z-axis. FIG 35(a) is a cross sectional view of the rotor 220 along the surface perpendicular to the Z-axis. Although a plurality of permanent magnets are embedded in the rotor 220, the cross section may not cross the permanent magnets depending on the cross sectional position. FIG 35(a) is a cross section of the rotor 220 taken along the cross section that crosses the permanent magnets.

Here, it is supposed that the origin O exists at the center on the cross section illustrated in FIG 35(a), and a rectangular coordinate system having the X-axis, the Y-axis and the Z-axis on the real space is defined. The X-axis is perpendicular to the Y-axis and the Z-axis while the Y-axis is perpendicular to the X-axis and the Z-axis. The X-axis, the Y-axis and the Z-axis cross at the origin O. With respect to the origin O as a boundary, polarity of an X-axis coordinate value of any point is classified into positive or negative, and polarity of a Y-axis coordinate value of any point is classified into positive or negative. In the cross sectional views illustrated in FIG 35(a) and in FIG 35(b) that will be referred to later, the right side and the left side respectively correspond to the positive side and the negative side of the X-axis, while the upper side and the lower side respectively correspond to the positive side and the negative side of the Y-axis.

The rotor 220 includes a rotor laminated core constituted of a plurality of steel sheets (such as silicon steel sheets) having a predetermined shape of magnetic material laminated via insulator films in the Z-axis direction, and four permanent magnets 231 to 234, which are combined to each other. The permanent magnets 231 to 234 correspond to those obtained by dividing a permanent magnet having a cylindrical shape with the center of circle on the Z-axis into four equally along cut surfaces parallel to the Z-axis. The permanent magnets 231 to 234 have the same shape and size. Viewed from the origin O, centers of the permanent magnets 231 to 234 are positioned on the positive side of the Y-axis, the positive side of the X-axis, the negative side of the Y-axis and the negative side of the X-axis, respectively. A distance between the origin O and the center of the permanent magnet is the same among the permanent magnets 231 to 234. The north pole of the permanent magnet 231 is closer to the origin O than the south pole of the permanent magnet 231 is, and the south pole of the permanent magnet 232 is closer to the origin O than the north pole of the permanent magnet 232 is. The north pole of the permanent magnet 233 is closer to the origin O than the south pole of the permanent magnet 233 is, and the south pole of the permanent magnet 234 is closer to the origin O than the north pole of the permanent magnet 234 is.

The rotor laminated core is constituted of an inner circumferential laminated core 240, and outer circumferential laminated core 250, and a bridge portion (not shown) for connecting them with each other. The inner circumferential laminated core 240 is positioned on the inner circumferential side of the permanent magnets 231 to 234 (positioned on the origin O side of the permanent magnets 231 to 234), while the outer circumferential laminated core 250 is positioned on the outer circumferential side of the permanent magnets 231 to 234. The outer circumferential laminated core 250 and the inner circumferential laminated core 240 are both members having a cylindrical shape with the center of the circle on the Z-axis. Since the inner circumferential laminated core 240 is a cylindrical member having a thickness in the radial direction, the inner circumferential laminated core 240 has a radius of the inner circumferential circle and a radius of the outer circumferential circle. The same is true for the outer circumferential laminated core 250. The radius of the inner circumferential circle of the outer circumferential laminated core 250 is larger than the radius of the outer circumferential circle of the inner circumferential laminated core 240, and the permanent magnets 231 to 234 are sandwiched between them so that they are combined. Thus, the rotor laminated core and the permanent magnets 231 to 234 become one unit that rotates about the Z-axis. In FIG 35(a) and in FIG 35(b) that will be referred to, four quadrangles illustrated in the inner circumferential laminated core 240 are non-magnetic members disposed in the inner circumferential laminated core 240 so as to be positioned adjacent to between neighboring permanent magnets.

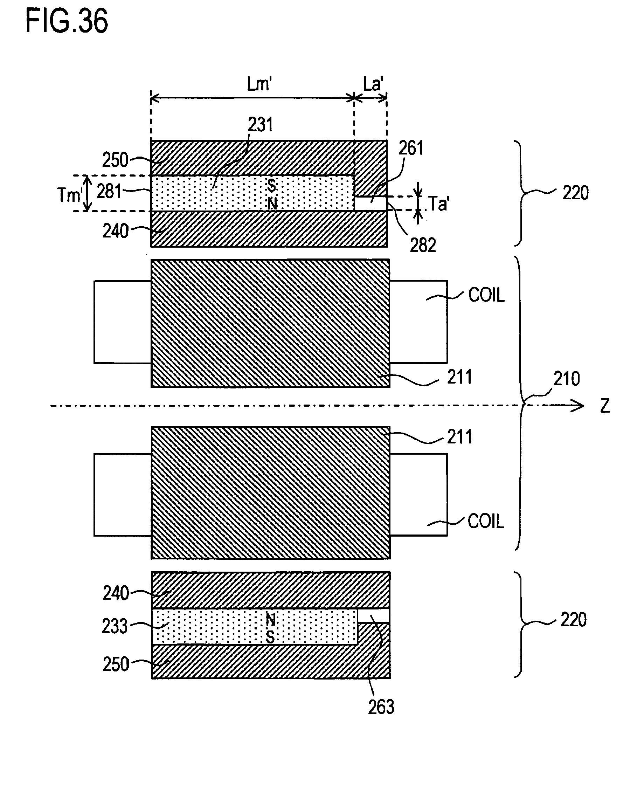

Between the inner circumferential laminated core 240 and the outer circumferential laminated core 250, an air gap having a cylindrical shape with the center of the circle on the Z-axis is disposed, which is not illustrated in the cross section of FIG 35(a). FIG 35(b) illustrates a cross section of the rotor 220 along a surface perpendicular to the Z-axis that crosses this air gap. In FIG 35(b), white region denoted by numeral 260 indicates the arrangement position of the air gap. Note that the arrangement position and shape of the air gap 260 will be clarified by referring FIG 36 later.

Since the air gap 260 is a cylindrical gap having a thickness in the radial direction, the air gap 260 has a radius of the inner circumferential circle and a radius of the outer circumferential circle. On the XY coordinate plane, the inner circumferential circle of the air gap 260 is the same as the outer circumferential circle of the inner circumferential laminated core 240, while the radius of the outer circumferential circle of the air gap 260 is smaller than the radius of the inner circumferential circle of the outer circumferential laminated core 250. However, it is not essential that the inner circumferential circle of the air gap 260 is the same as the outer circumferential circle of the inner circumferential laminated core 240.

The part between the inner circumferential surface of the inner circumferential laminated core 240 and the outer circumferential surface of the outer circumferential laminated core 250 except for the permanent magnets and the air gaps is filled with the magnetic material (steel sheet material) forming the rotor laminated core.

FIG 36 is a cross sectional view of the rotor 220 and the stator 210 obtained by cutting the rotor 220 and the stator 210 by the cross section along the Y-axis. Although not illustrated, the cross sectional view of the rotor 220 and the stator 210 taken along the cross section along the X-axis are also the same as FIG 36.

On the cross section illustrated in FIG 36, an air gap 261 as one cross section of the air gap 260 appears in the part adjacent to the permanent magnet 231, and an air gap 263 as one cross section of the air gap 260 appears in the part adjacent to the permanent magnet 233. The permanent magnets 231 and 233 and the air gaps 261 and 263 appearing on the cross section illustrated in FIG 36 each have a rectangular contour. On the cross section illustrated in FIG 36, one side 281 of the rectangle as a contour of the permanent magnet 231 is positioned on one end surface of the rotor 220, and one side 282 of the rectangle as a contour of the air gap 261 is positioned on the other end surface of the rotor 220 (here, the end surface of the rotor 220 means an end surface in the Z-axis direction of the rotor 220). In addition, on the cross section illustrated in FIG 36, a part of the side positioned on the opposite side of the side 281 among four sides of the rectangle as a contour of the permanent magnet 231 is the same as the side positioned on the opposite side of the side 282 among four sides of the rectangle as the contour of the air gap 261. The remaining two sides of the permanent magnet 231 adjacent to the side 281 are parallel to the Z-axis, and the remaining two sides of the air gap 261 adjacent to the side 282 are parallel to the Z-axis.

On the XY coordinate plane, the rotor 220 has a structure of line symmetry with respect to the X-axis as an axis of symmetry and has a structure of line symmetry with respect to the Y-axis as an axis of symmetry.

In this way, the permanent magnet 231 has an arcuate contour viewed from the Z-axis direction (see FIG 35 (a)). Apart of one end surface of the permanent magnet 231 viewed from the Z-axis direction contacts with the air gap 260 and the rest part of the one end surface contacts with the magnetic material forming the rotor laminated core (see FIG 35(b) and FIG 36). Similarly, a part of one end surface of each of the permanent magnets 232 to 234 viewed from the Z-axis direction contacts with the air gap 260, and the rest part of the one end surface contacts with the magnetic material forming the rotor laminated core. Further, although the permanent magnet and the air gap contact directly with each other in the cross section illustrated in FIG 36, a part of the rotor laminated core of the rotor 220 may be disposed between them.

In the rotor 220, each of the permanent magnets 231 to 234 solely forms the permanent magnet of one pole. The direction of the magnetic flux of each permanent magnet is perpendicular to the Z-axis.

Similarly to the first embodiment, in the second embodiment too, a thickness of the permanent magnet is regarded as a length in the inter-pole direction of the permanent magnet. On the other hand, a width of the permanent magnet is regarded as a length in the Z-axis direction of the permanent magnet. The thickness and the width of the permanent magnet are denoted by Tm' and Lm'. In addition, similarly to the first embodiment, the d-axis is set in the direction of the magnetic flux generated by the noted permanent magnet of one pole. Then, a length in the d-axis direction of an air gap disposed for the permanent magnet of one pole is defined as "thickness of the air gap", which is denoted by Ta'. Further, the length of the air gap in the Z-axis direction is referred to as "width of the air gap", which is denoted by La'.

Specifically, Tm' denotes a thickness of the permanent magnet 231 in the direction perpendicular to the Z-axis, and Lm' denotes a length in the Z-axis direction of the permanent magnet 231. Ta' denotes a thickness of the air gap 260 in the direction perpendicular to the Z-axis, and La' denotes a length in the Z-axis direction of the air gap 260.

Further, a quarter of the length of the outer circumferential circle of the air gap 260 on the XY coordinate plane is denoted by W'. Then, equations concerning the magnetic circuit hold, which are obtained by replacing Tm, Lm, Ta, La and W in the above equations (5a), (5b) and (6) with Tm', Lm', Ta', La' and W', respectively. Therefore, a ratio of the air gap width La' to (Lm'+La') (i.e., La'/(Lm'+La')) is handled as an air gap width ratio, and a ratio of the air gap thickness Ta' to Tm' (i.e., Ta'/Tm') is handled as an air gap thickness ratio. Then, the method of setting the air gap thickness ratio described above in the fundamental structure of the first embodiment should be applied. In other words, an air gap such that Ta'$\leqq$ 0.5 xTm' holds is disposed between the inner circumferential laminated core and the outer circumferential laminated core, and a lower limit of the air gap thickness ratio should be set in accordance with the air gap width ratio.

[Seventh variation structure]

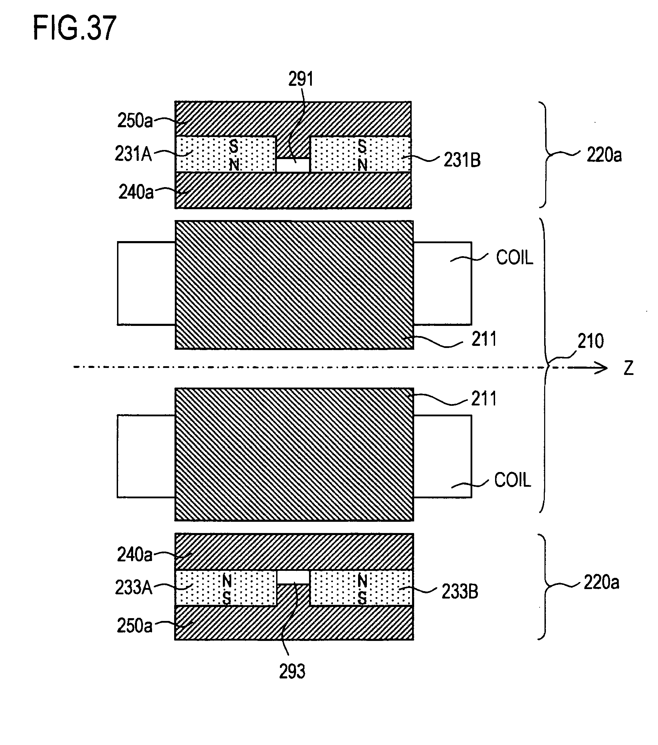

Note that in the above-mentioned motor structure, the air gap between the inner circumferential laminated core and the outer circumferential laminated core is disposed at the rotor end in the Z-axis direction, but the air gap may be moved in parallel in the Z-axis direction. A variation structure of the motor with this modification is referred to as a seventh variation structure. The seventh variation structure will be described below (as to matters that are not mentioned in particular, the above descriptions are applied). Along with this parallel movement, the permanent magnets 231, 232, 233 and 234 are split into permanent magnets 231A and 231B, permanent magnets 232A and 232B, permanent magnets 233A and 233B, and permanent magnets 234A and 234B, respectively (the permanent magnets 232A, 232B, 234A and 234B are not illustrated in FIG 37 below). The rotor according to the seventh variation structure is referred to as a rotor 220a.

FIG 37 is a cross sectional view of the rotor 220a and the stator 210 obtained by cutting the rotor 220a and the stator 210 by the cross section along the Y-axis. A cylindrical air gap 290 having the center of circle on the Z-axis is disposed between the inner circumferential laminated core 240a and the outer circumferential laminated core 250a of the rotor 220a, and the air gap 290 is sandwiched between the plurality of permanent magnets in the Z-axis direction (the entire of the air gap 290 is not shown). In the cross section illustrated in FIG 37, a rectangle of a broken line denoted by numeral 291 indicates one cross section of the air gap 290 sandwiched between the permanent magnets 231A and 231B, and a rectangle of a broken line denoted by numeral 293 indicates one cross section of the air gap 290 sandwiched between the permanent magnets 233A and 233B.

In the seventh variation structure, Lm' is handled as a total width of the permanent magnet of one pole. In other words, Lm' is handled as a total sum of the widths of the permanent magnets 231A and 231B in the Z-axis direction. Tm' is a thickness of the permanent magnet 231A or 231B in the direction perpendicular to the Z-axis. Ta' is a thickness of the air gap 290 in the direction perpendicular to the Z-axis, and La' is a length of the air gap 290 in the Z-axis direction.

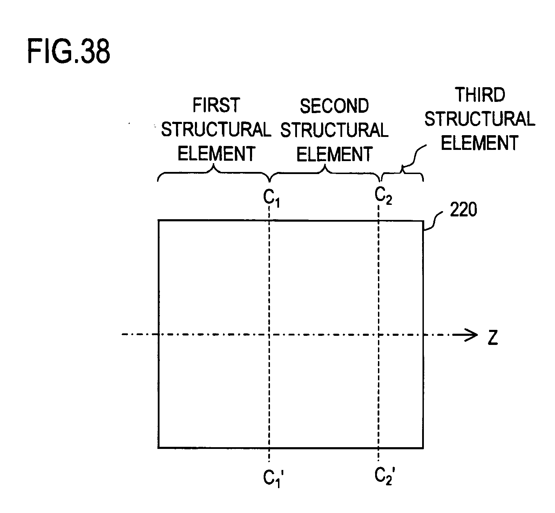

With reference to FIG 38, the structure of the rotor 220a will be described supplementarily. FIG 38 is an outline plan view of the rotor 220 corresponding to FIG 36, viewed from the direction in which the Z-axis agrees with the right and left direction of the drawing. As two cross sections perpendicular to the rotation axis of the rotor 220, the $C_1$-$C_1$' cross section and the $C_2$-$C_2$' cross section are supposed. The $C_1$-$C_1$' cross section is a cross section that divides each of the four permanent magnets 231 to 234 disposed in the rotor 220 in equal manner, and the $C_2$-$C_2$' cross section is a cross section passing through a boundary surface between the air gap 260 and the permanent magnets 231 to 234 in the rotor 220. When the rotor 220 is cut along the $C_1$-$C_1$' cross section and the $C_2$-$C_2$' cross section, the rotor 220 is split into first and second structural elements with the permanent magnet portion and a third structural element without the permanent magnet. Then, the third structural element is sandwiched between the first and the second structural elements so as to generate a new rotor. This newly generated rotor structure corresponds to the structure of the rotor 220a. When each of the permanent magnet 231, 232, 233 and 234 are split into two equally along the $C_1$-$C_1$' cross section, the permanent magnets 231A and 231B, the permanent magnets 232A and 232B, the permanent magnets 233A and 233B, and the permanent magnets 234A and 234B are obtained from the permanent magnet 231, 232, 233 and 234, respectively.

[Eighth variation structure]

In addition, in an outer rotor type motor too, similarly to the sixth variation structure of the first embodiment, the motor may be provided with the field winding portion, and the air gap between the rotor inner circumferential core and the rotor outer circumferential core may be provided between the protrusions combined to the rotor laminated core. A variation structure of the motor 201 with this modification is referred to as an eighth variation structure. The eighth variation structure will be described below (as to matters that are not mentioned in particular, the above descriptions are applied).

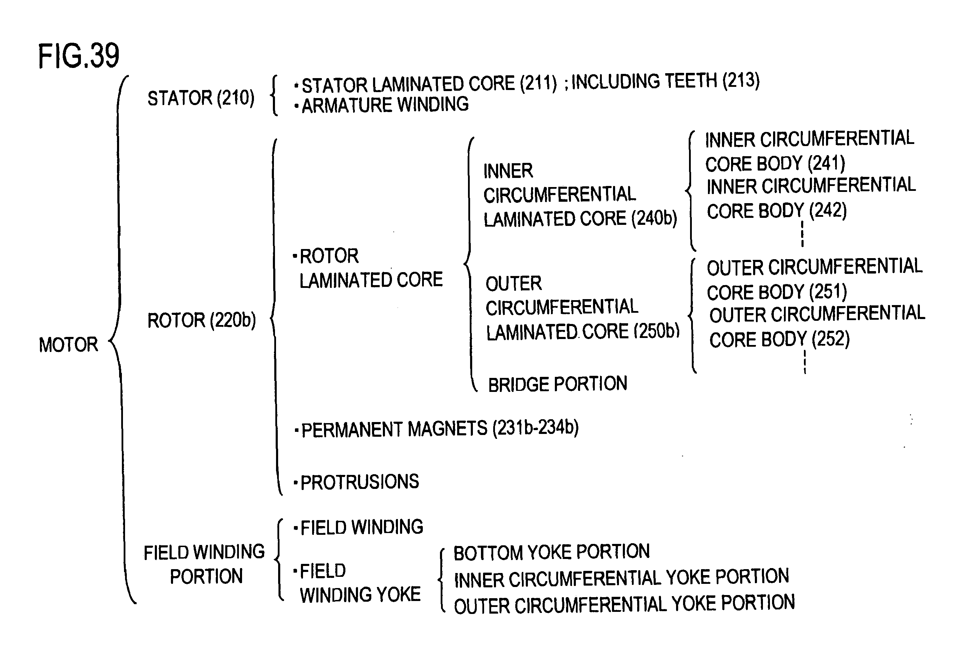

The rotor of the eighth variation structure is referred to as a rotor 220b. For easy understanding of the description, names of structural elements of the motor 201 in the eighth variation structure are listed in FIG 39. Meanings of the names shown in FIG 39 will be clarified from the description later.

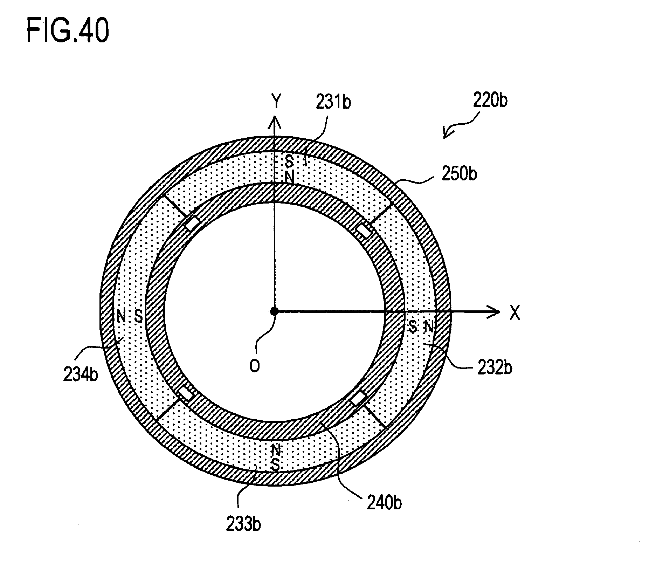

The rotation axis of the rotor 220b is the Z-axis. FIG. 40 is a cross sectional view of the rotor 220b along the cross section that does not cross the protrusion described later and is perpendicular to the Z-axis. The rotor 220b is constituted of a rotor laminated core formed by laminating a plurality of steel sheets (such as silicon steel sheets) having a predetermined shape made of magnetic material via insulator films in the Z-axis direction, and four permanent magnets 231b to 234b, which are combined to each other. The rotor laminated core of the rotor 220b is constituted of an inner circumferential laminated core 240b, an outer circumferential laminated core 250b, and a bridge portion (not shown) for connecting them.

When numerals 220, 231 to 234, 240 and 250 in FIG 35(a) are replaced with numerals 220b, 231b to 234b, 240b and 250b, respectively, the cross sectional structure of the rotor 220f illustrated in FIG 40 is the same as the cross sectional structure of the rotor 220 illustrated in FIG 35(a). The matters described above for the rotor 220 are applied to the rotor 220b too, as long as no contradiction arises (a difference in numerals between portions having the same name is neglected appropriately). However, although the air gap is disposed between the inner circumferential laminated core and the outer circumferential laminated core in the above-mentioned structure of the motor 201, an air gap is not disposed between the inner circumferential laminated core and the outer circumferential laminated core in the eighth variation structure.

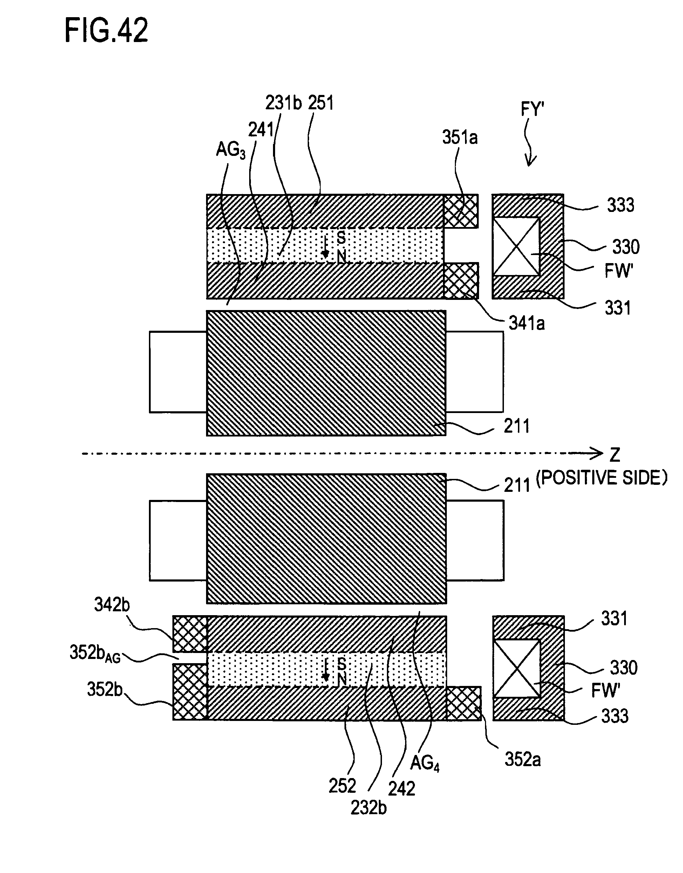

In other words, as understood from comparison between FIG 36 and FIG 42 that will be referred to later, the permanent magnet 231b corresponds to that obtained by enlarging the width Lm' of the permanent magnet 231 so that first and second end surfaces of the permanent magnet in the Z-axis direction and first and second end surfaces of the rotor laminated core in the Z-axis direction are respectively positioned on the same plane (the same is true for the permanent magnets 232b to 234b). Except for the difference between the width of the permanent magnets, shapes of the permanent magnets 231b to 234b, a positional relationship between magnetic poles and the origin O, and the like are the same as those of the permanent magnets 231 to 234. Along with enlargement of the width of the permanent magnet, the cross sectional shape of the outer circumferential laminated core is modified from that illustrated in FIG 36 to that illustrated in FIG 42. In the eighth variation structure, if the cross section perpendicular to the Z-axis does not cross the protrusion that will be described later, the cross sectional structure of the rotor 220f does not change when the cross sectional position changes in the Z-axis direction.

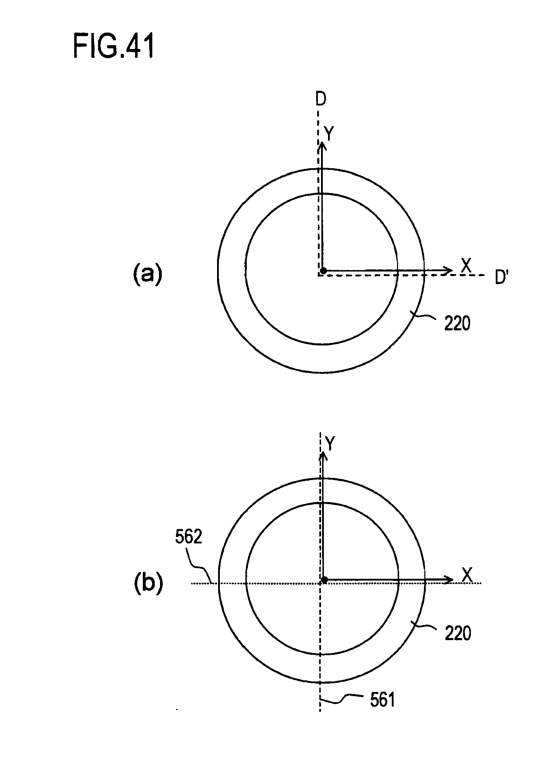

FIGS. 41(a) and 41(b) are outline plan views of the rotor 220b viewed from the rotation axis direction of the rotor 220b. Actually, the rotor 220b is provided with protrusions, and the protrusions are to appear also in the outline plan views illustrated in FIGS. 41(a) and 41(b), but the protrusions are omitted in FIGS. 41(a) and 41(b) (details of the protrusions will be described later).

As described above, the X-axis, the Y-axis and the Z-axis cross each other at right angles at the origin O. In order to describe a cross sectional structure of the rotor 220b, the cross section taken along the line D-D' illustrated in FIG 41(a) (hereinafter referred to as a D-D' cross sectional view) is supposed. The line D-D' is a bent line that has a start point at a positive point on the Y-axis and an end point at a positive point on the X-axis, and is bent on the Z-axis. In addition, a cross section taken along a broken line 561 illustrated in FIG 41(b), namely a cross section taken along the Y-axis (hereinafter referred to as a Y cross sectional view), and a cross section taken along the broken line 562 illustrated in FIG 41(b), namely a cross section taken along the X-axis (hereinafter referred to as an X cross sectional view) are supposed.

Further, the protrusions are combined to the above-mentioned member in which the rotor laminated core and the permanent magnet 231b to 234b are combined, so that the rotor 220b is formed.

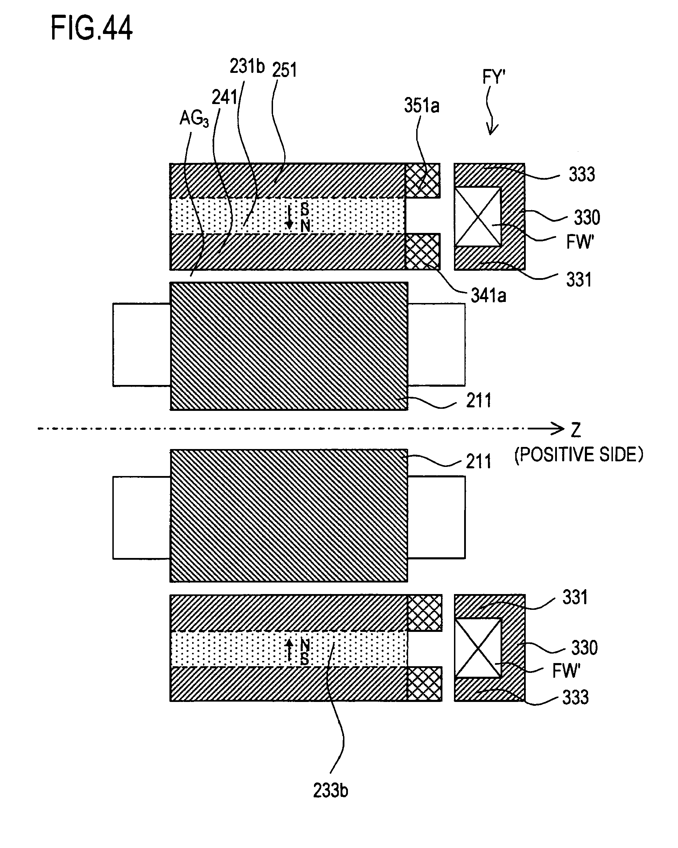

FIG 42 is a diagram in which the cross sectional view of the stator 210 and a D-D' cross sectional view of the rotor 220b and the field winding portion are combined. However, the cross sections of the stator 210 in FIG 42 and in FIGS. 44, 45 and 48 that will be referred to are cross sectional views of the stator 210 taken along the line passing through the centers of two teeth 213 of the stator 210 and the origin O similarly to the sixth variation structure (see also FIG 26). The right and left direction in FIG 42 agrees with the Z-axis direction, and the right side in FIG 42 corresponds to the positive side of the Z-axis (the same is true in FIGS. 44, 45 and 48 that will be referred to later).

In the D-D' cross sectional view of the rotor 220b, a part of the inner circumferential laminated core 240b exists between the permanent magnet 231b and the stator 210, and this part is referred to as an inner circumferential core body 241. Similarly, other part of the inner circumferential laminated core 240b existing between the permanent magnet 232b and the stator 210 is referred to as an inner circumferential core body 242 (see FIG 39). In addition, in the D-D' cross sectional view of the rotor 220b, a part of the outer circumferential laminated core 250b exists on the outer circumferential side of the permanent magnet 231b, and this part is referred to as an outer circumferential core body 251. Similarly, other part of the outer circumferential laminated core 250b existing on the outer circumferential side of the permanent magnet 232b is referred to as an outer circumferential core body 252 (see also FIG 39). Further, an air gap between the inner circumferential core body 241 and the stator laminated core 211 is denoted by $AG_3$, and an air gap between the inner circumferential core body 242 and the stator laminated core 211 is denoted by $AG_4$. Note that the arrow shown in the permanent magnet 231b indicates a direction of the magnetic flux in the permanent magnet 231b (the same is true in other permanent magnets).

On the cross section of FIG 42, in addition to the rotor laminated core and the like, there are illustrated protrusions 351a, 341a, 352a, 342b and 352b combined to the rotor laminated core, and the field winding portion constituted of a field winding yoke FY' and the field winding FW'. The field winding portion in the rotor 220b is arranged to be fixed to the right side of the rotor 220b (on the positive side in the Z-axis direction). Each protrusion is made of pressed powder magnetic material obtained by press molding of powder magnetic material such as iron powder (however, it may be formed of steel sheet).

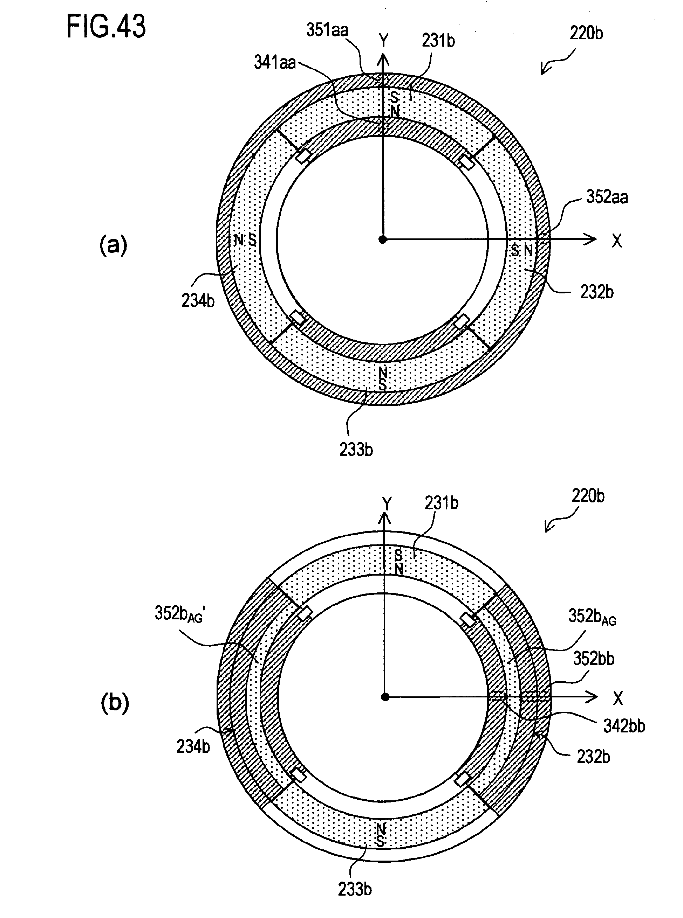

In addition, FIG 43(a) illustrates an outline plan view of the rotor 220b viewed from the positive side of the Z-axis. In FIG 43(a), the hatched portions are parts protruding from the end surface of the rotor laminated core (the inner circumferential laminated core 240b and the outer circumferential laminated core 250b) to the positive side of the Z-axis, the protrusions 351a, 341a and 352a are positioned respectively in the broken line regions denoted by numerals 351aa, 341 aa and 352aa. FIG 43(b) illustrates an outline plan view of the rotor 220b viewed from the negative side of the Z-axis. In FIG 43(b), the hatched portions are parts protruding from the end surface of the rotor laminated core (inner circumferential laminated core 240b and the outer circumferential laminated core 250b) toward the negative side of the Z-axis, protrusions 342b and 352b are positioned respectively in the broken line regions denoted by numerals 342bb and 352bb. In addition, the protrusion 352b covers a part of the end surface of the permanent magnet 232b on the negative side of the Z-axis, and an air gap $352b_{AG}$ exists between the protrusion 342b and the protrusion 352b in the X-axis direction that is a direction perpendicular to the Z-axis. When viewing from the negative side of the Z-axis, a part where the air gap $352b_{AG}$ is positioned does not protrude, and the pressed powder magnetic material forming the protrusion does not exist in this part.

The protrusions 351a, 341a and 352a are combined respectively to the outer circumferential core body 251, the inner circumferential core body 241 and the outer circumferential core body 252 so as to protrude in the rotation axis direction from the end surfaces of the outer circumferential core body 251, the inner circumferential core body 241 and the outer circumferential core body 252 in the rotation axis direction. Here, the protrusions 351a, 341a and 352a protrude to the positive direction side of the Z-axis respectively from the end surfaces of the outer circumferential core body 251, the inner circumferential core body 241 and the outer circumferential core body 252 in the positive side of the Z-axis.

The protrusions 342b and 352b are combined respectively to the inner circumferential core body 242 and the outer circumferential core body 252 so as to protrude to the rotation axis direction from the end surfaces of the inner circumferential core body 242 and the outer circumferential core body 252 in the rotation axis direction. Here, the protrusions 342b and 352b protrude to the negative direction side of the Z-axis respectively from the end surfaces of the inner circumferential core body 242 and outer circumferential core body 252 in the negative side of the Z-axis.

Note that along with the formation of the protrusions 351a and 341a, the permanent magnet 231b may also be protruded to the positive side of the Z-axis so that the end surface of the permanent magnet 231b on the positive side of the Z-axis meets with the end surfaces of the protrusions 351a and 341a.

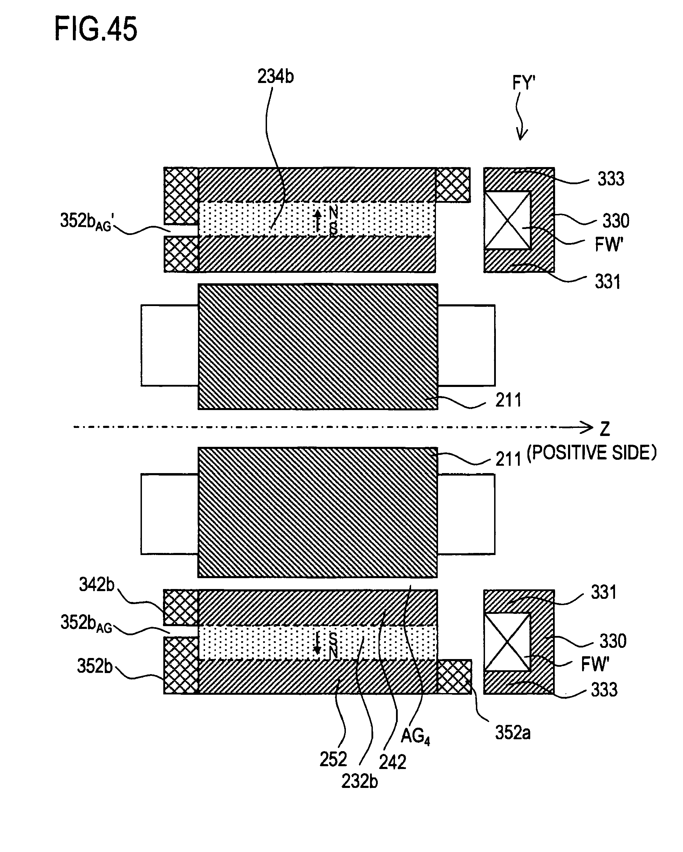

In addition, FIG 44 illustrates a diagram in which the cross sectional view of the stator 210 and the Y cross sectional view of the rotor 220b and the field winding portion (the cross sectional view taken along the broken line 561 in FIG 41(b)) are combined, and FIG 45 illustrates a diagram in which the cross sectional view of the stator 210 and the X cross sectional view of the rotor 220b and the field winding portion (the cross sectional view taken along the broken line 562 in FIG 41(b)) are combined. The upper side of FIG 44 corresponds to the positive side of the Y-axis while the lower side of FIG 44 corresponds to the negative side of the Y-axis. The upper side of FIG 45 corresponds to the negative side of the X-axis while the lower side of FIG 45 corresponds to the positive side of the X-axis. As understood from FIGS. 43(a) and 43(b), on the XY coordinate plane, the rotor 220b has a structure of line symmetry with respect to the X-axis as an axis of symmetry and has a structure of line symmetry with respect to the Y-axis as an axis of symmetry. Therefore, on the cross section illustrated in FIG 45, in addition to the air gap $352b_{AG}$ positioned on the positive side of the X-axis, an air gap $352b_{AG}$' positioned on the negative side of the X-axis corresponding to the air gap $352b_{AG}$ is also observed (see also FIG. 43(b)).

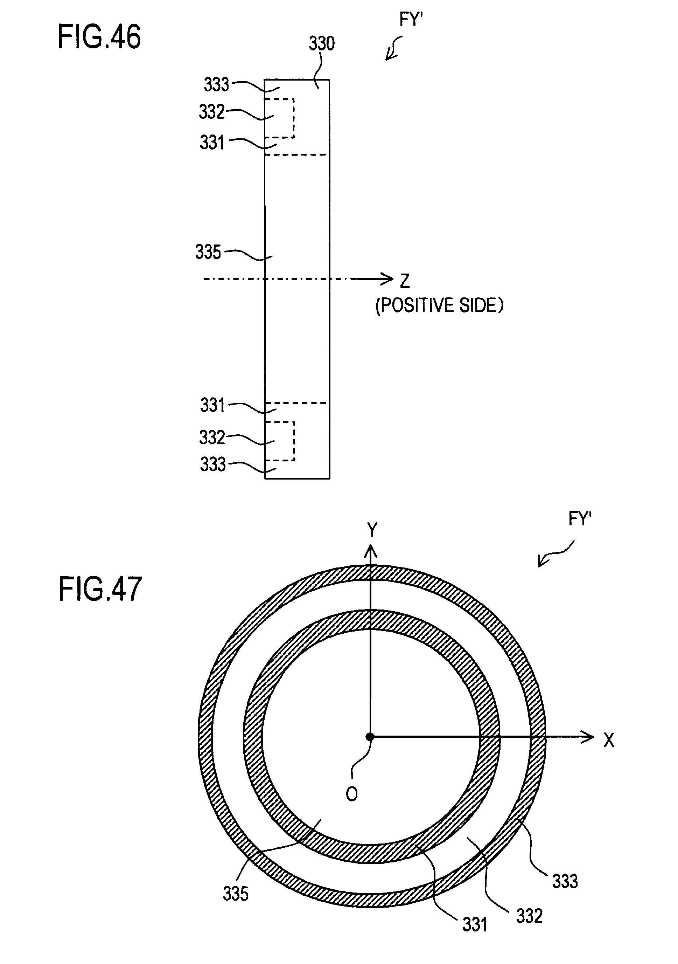

FIG 46 illustrates an outside view of the field winding yoke FY' viewed from a viewpoint such that the Z-axis direction meets with the right and left direction in the diagram. FIG 47 illustrates a projection view of the field winding yoke FY' onto the XY coordinate plane viewed from negative side of the Z-axis.

The field winding yoke FY' is a cylindrical magnetic material with the center of circle on the Z-axis, which has a hole 335 with the rotation axis of the rotor 220b as the center line, and a slot (recess) 332 for disposing the field winding FW'. The stator 210 is disposed in the hole 335. Imaging the exploded view, the field winding yoke FY' can be regarded to have a structure in which the inner circumferential yoke portion 331 and the outer circumferential yoke portion 333 each of which has a cylindrical shape are combined onto the bottom yoke portion 330 having a cylindrical shape so that the centers of circles thereof are all on the Z-axis. A radius of circle of the inner circumferential side of the outer circumferential yoke portion 333 is larger than the radius of circle of the outer circumferential side of the inner circumferential yoke portion 331. When viewed from the Z-axis direction, the outer circumferential yoke portion 333 is positioned outside of the inner circumferential yoke portion 331, and the slot 332 is positioned between the outer circumferential yoke portion 333 and the inner circumferential yoke portion 331. The field winding FW' is wound around the Z-axis along the outer circumference of the inner circumferential yoke portion 331. In addition, end surfaces of the inner circumferential yoke portion 331 and the outer circumferential yoke portion 333 (end surfaces positioned on the opposite side of the bottom yoke portion 330) are on the same plane perpendicular to the Z-axis.

The field winding yoke FY' is made of pressed powder magnetic material obtained by press molding of powder magnetic material such as iron powder (however, it may be formed of steel sheet).

With reference to FIG 42 again, the arrangement position of the field winding portion with the above-mentioned structure will be described in detail. When viewed from the Z-axis direction, a radius of the outer circumference of the field winding yoke FY' (in other words, a radius of circle of the outer circumferential side of the outer circumferential yoke portion 333) is the same or substantially the same as the radius of the outer circumference of the rotor 220b.

Further, the field winding yoke FY' is disposed so that the protrusion 341a and the inner circumferential yoke portion 331 of the field winding yoke FY' are opposed to each other, and that the protrusions 351a and 352a and the outer circumferential yoke portion 333 of the field winding yoke FY' are opposed to each other. The end surface of the protrusion 341a and the end surface of the inner circumferential yoke portion 331 are opposed to each other via a minute air gap, while the end surfaces of the protrusions 351a and 352a and the end surface of the outer circumferential yoke portion 333 are opposed to each other via a minute air gap.

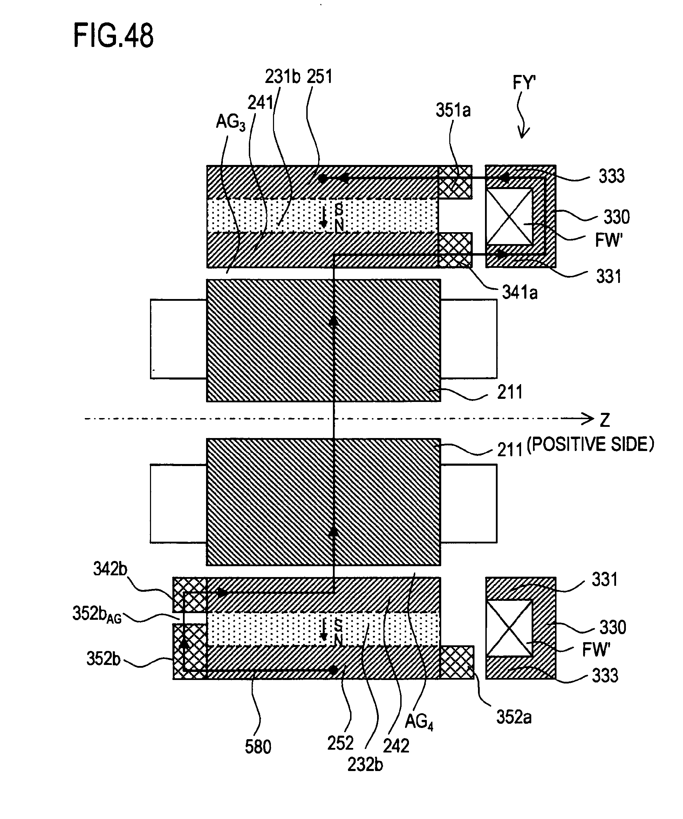

Next, with reference to FIG 48, a manner of the magnetic flux when current is supplied to the field winding FW' will be described. The bent line with arrows 580 illustrated in FIG 48 indicates a magnetic path of the magnetic flux generated by supplying current to the field winding FW' and the direction of the magnetic flux. Here, the direction of the bent line with arrows 580 is a direction when the current is supplied to the field winding FW' in the direction of weakening the field magnetic flux generated by the permanent magnet. In the eighth variation structure, the field magnetic flux obtained from the permanent magnets 231b to 234b functions as the main field magnetic flux (first field magnetic flux), and the magnetic flux generated by supplying current to the field winding FW' functions as the sub field magnetic flux (second field magnetic flux).

A magnetic path of the sub field magnetic flux is considered to start from the bottom yoke portion 330 of the field winding yoke FY'. This magnetic path starts from the bottom yoke portion 330 and reaches the bottom yoke portion 330 through a part of the outer circumferential yoke portion 333 facing the protrusion 351a, the protrusion 351a, the outer circumferential core bodies 251 and 252, the protrusion 352b, the air gap $352b_{AG}$, the protrusion 342b, the inner circumferential core body 242, the air gap $AG_4$, the stator laminated core 211, the air gap $AG_3$, the inner circumferential core body 241, the protrusion 341a, a part of the inner circumferential yoke portion 331 facing the protrusion 341a, and the inner circumferential yoke portion 331.

The inner circumferential laminated core 240b including the inner circumferential core bodies 241 and 242 and the protrusions (including 341 a and 342b) combined to the inner circumferential laminated core 240b constitute the "rotor inner circumferential core" as a whole, while the outer circumferential laminated core 250b including the outer circumferential core bodies 251 and 252 and the protrusions (including 351a, 352a and 352b) combined to the outer circumferential laminated core 250b constitute the "rotor outer circumferential core" as a whole. Further, the rotor inner circumferential core, the rotor outer circumferential core and the field winding portion are formed and arranged so that the above-mentioned magnetic path of the sub field magnetic flux is formed. Thus, when the sub field magnetic flux is generated, the combined magnetic flux of the main field magnetic flux by the permanent magnet and the sub field magnetic flux by the field winding forms the flux linkage of the armature winding of the stator 210.

According to the motor of the eighth variation structure too, the same action and effect can be obtained as the motor of the sixth variation structure (see FIG 25 and the like).

In addition, as clarified from the above description, the protrusions are not disposed on the field winding yoke FY' side of the inner circumferential core body 242 (see FIG 48). If the protrusion are disposed also on the field winding yoke FY' side of the inner circumferential core body 242, the field winding portion and the rotor core portion positioned below the stator 210 in the cross section illustrated in FIG 48 may form a closed magnetic path so that the sub field magnetic flux has no linkage with the armature winding of the stator 210. In order to avoid such situation, an air gap length between the inner circumferential core body 242 and the inner circumferential yoke portion 331 is set to a sufficiently large value. For instance, this air gap length is set to a value of five times to a few ten times the air gap length between the stator and the rotor (i.e., a length of each of the air gaps $AG_3$ and $AG_4$).

Description is added for the air gap ($352b_{AG}$ or $352b_{AG}$') disposed between the rotor inner circumferential core and the rotor outer circumferential core. Since the shape is the same between the air gap $352b_{AG}$ and the air gap $352b_{AG}$', the air gap $352b_{AG}$ is noted for description. As illustrated in FIG 43(b), on the XY coordinate plane, the air gap $352b_{AG}$ has a bow figure obtained by removing a second fan shape from a first fan shape. The central angles of the first and the second fan shapes are 90 degrees each. On the XY coordinate plane, a radius of the second fan shape is the same as the radius of the outer circumferential circle of the inner circumferential laminated core 240b (though this agreement is not essential), and a radius of the first fan shape is larger than the radius of the outer circumferential circle of the inner circumferential laminated core 240b but is smaller than the radius of the inner circumferential circle of the outer circumferential laminated core 250b.

In the eighth variation structure (see also FIGS. 36 and 42), the length of the permanent magnet 232b in the inter-pole direction of the permanent magnet 232b (i.e., the length of the permanent magnet 231b in the direction perpendicular to the Z-axis) is regarded as a thickness of the permanent magnet Tm', and the length of the permanent magnet 232b in the Z-axis direction is regarded as a width of the permanent magnet Lm'. Further, the length of the air gap $352b_{AG}$ in the direction perpendicular to the Z-axis (i.e., a length of the air gap $352b_{AG}$ in the up and down direction in FIG 42) is regarded as a thickness of the air gap Ta', and a length of the air gap $352b_{AG}$ in the Z-axis direction (i.e., a length of the air gap $352b_{AG}$ in the right and left direction illustrated in FIG 42) is regarded as a width of the air gap La'. The thickness of the air gap is a length of the air gap $352b_{AG}$ in the d-axis direction as described above.

Further, a ratio of the air gap width La' to (Lm'+La') (i.e., La'/(Lm'+La')) is handled as an air gap width ratio, and a ratio of the air gap thickness Ta' to Tm' (i.e., Ta'/Tm') is handled as an air gap thickness ratio. Then, the method of setting the air gap thickness ratio described in the above description of the fundamental structure of the first embodiment should be applied. In other words, an air gap such that Ta'$\leqq 0.5 \times$Tm' holds ($352b_{AG}$ or $352b_{AG}$') is disposed between the rotor inner circumferential core and the rotor outer circumferential core, and the lower limit of the air gap thickness ratio should be set in accordance with the air gap width ratio.

«Third embodiment»

Next, a third embodiment of the present invention will be described. In the third embodiment, a motor drive system using the motor described above in the first or the second embodiment will be described.

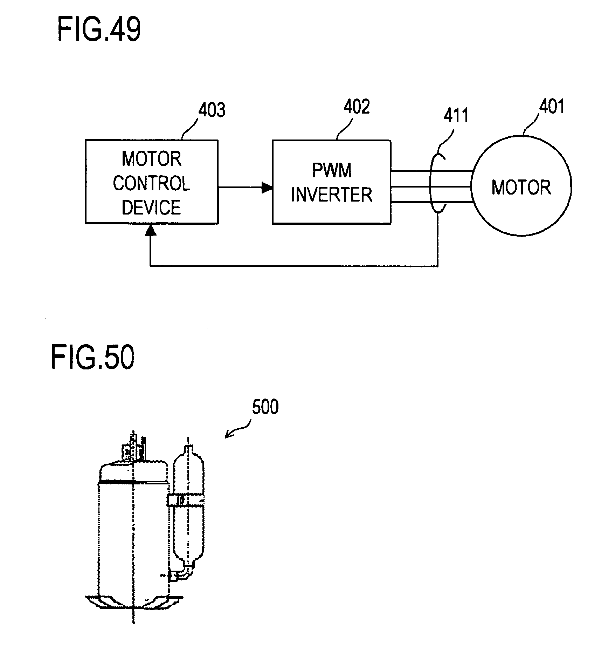

FIG 49 is a general block diagram of the motor drive system according to the third embodiment. The motor drive system is constituted of a motor 401, a pulse width modulation (PWM) inverter 402 that supplies armature current to the armature winding of the motor 401 so as to drive the rotor of the motor 401 to rotate, a motor control device 403 that drives the motor 401 via the PWM inverter 402 and is built with a microcomputer or the like, and a current sensor 411.

The motor 401 is any motor described in the first or the second embodiment. The coils are wound in the slots of the stator provided to the motor 401, and the coils are connected appropriately, so that the motor 401 is constituted as a three-phase permanent magnet synchronization motor. Therefore, the stator of the motor 401 is provided with U-phase, V-phase and W-phase armature windings.

A U-phase component, a V-phase component and a W-phase component of the armature current supplied to the motor 401 from the PWM inverter 402 are detected by the current sensor 411, and the motor control device 403 controls the PWM inverter 402 so that the rotor of the motor 410 rotates at a desired rotation speed based on the detection value. The PWM inverter 402 applies a three-phase AC voltage according to the control to the armature windings so as to supply the armature current for driving the rotor to rotate.

The motor control device 403 can use known vector control when the PWM inverter 402 is controlled. Further, in high speed rotation of the motor 401, the motor control device 403 controls the PWM inverter 402 so that negative d-axis current is supplied to the armature windings of the motor 401 as necessary for realizing the field-weakening control. Note that the phase of the d-axis to be derived in the vector control (so-called a magnetic pole position) is derived by an estimation process based on the detection value of the current sensor 411, or by a detection process using a magnetic pole position sensor (a Hall element, a resolver or the like). In addition, when the motor having the field winding portion (the above-mentioned motor according to the sixth or the eighth variation structure) is used as the motor 401, a field magnet circuit for supplying field current to the field winding FW or FW' is included in the PWM inverter 402. Then, instead of supplying the negative d-axis current to the armature winding, the field current is supplied to the field winding FW or FW' so as to realize the field-weakening control.

In addition, as equipment to which the above-mentioned motor drive system is applied, a compressor 500 is illustrated in FIG 50. FIG 50 is an outside view of the compressor 500. The motor drive system illustrated in FIG 49 is disposed in the compressor 500. The compressor 500 compresses refrigerant gas (not shown) by a rotation force of the motor 401 (exactly, the rotation force of the rotor in the motor 401) as a drive power source. The type of the compressor 500 can be any type. For instance, the compressor 500 can be a scroll compressor, a reciprocating compressor or a rotary compressor.

«Variations»

The specific values in the above description are merely examples, which can be changed variously as a matter of course. As variation examples or annotations of the above embodiments, Notes 1 to 3 are described below. Contents of the Notes can be combined in any manner as long as no contradiction arises.

[Note 1]

In the first and the second embodiment, there is described the case where a plurality of permanent magnets in one rotor have the same shape and size, but the plurality of permanent magnets may have different shapes and sizes. Similarly, although the case where a plurality of the air gaps in one rotor have the same shape and size is described in the first embodiment, the plurality of the air gaps may have different shapes and sizes.

[Note 2]

The non-magnetic member (non-magnetic members 25 to 28 and the like in FIG 4) disposed in the rotor described above in the first and the second embodiment may be a simple space to be filled with air.

[Note 3]

Some or all the functions of the motor control device 403 can be realized by using software (program) incorporated in an all-purpose microcomputer or the like. As a matter of course, it is possible to constitute the motor control device 403 not by software (program) but by hardware or by a combination of software and hardware.

**Claims**

1.  A permanent magnet synchronization motor comprising a rotor formed as a combination of a permanent magnet, an inner circumferential core disposed inward of the permanent magnet and an outer circumferential core disposed outward of the permanent magnet, wherein
    when $T_M$ denotes a thickness of the permanent magnet in an inter-pole direction of the permanent magnet, an air gap having a thickness that is $1/2 \times T_M$ or smaller is disposed between the outer circumferential core and the inner circumferential core of the rotor.

2.  A permanent magnet synchronization motor according to claim 1, wherein when a d-axis is set to a direction of the magnetic flux generated by the permanent magnet, the thickness of the air gap that is $1/2 \times T_M$ or smaller is a length of the air gap in the d-axis direction.

**3.** A permanent magnet synchronization motor according to claim 1, wherein the thickness of the air gap is $1/5 \times T_M$ or smaller.

**4.** A permanent magnet synchronization motor according to any one of claims 1 to 3, wherein the permanent magnet forms a permanent magnet of one pole including two permanent magnets, and the air gap is disposed between the two permanent magnets.

**5.** A permanent magnet synchronization motor according to any one of claims 1 to 3, wherein the air gap is adjacent to an end surface of the permanent magnet in a direction perpendicular to the inter-pole direction of the permanent magnet.

**6.** A permanent magnet synchronization motor according to any one of claims 1 to 3, wherein the air gap and the permanent magnet are adjacent to each other in a plane direction perpendicular to the rotation axis of the rotor.

**7.** A permanent magnet synchronization motor according to claim 6, wherein the inner circumferential core and the outer circumferential core of the rotor are formed by laminating a plurality of steel sheets in a rotation axis direction of the rotor.

**8.** A permanent magnet synchronization motor according to any one of claims 1 to 3, wherein
the inner circumferential core and the outer circumferential core of the rotor respectively include an inner circumferential laminated core and an outer circumferential laminated core that are formed by laminating a plurality of steel sheets in a rotation axis direction of the rotor,
a protrusion made of magnetic material protruding in the rotation axis direction of the rotor is combined to each of the inner circumferential laminated core and the outer circumferential laminated core, and
the air gap is disposed between the protrusion combined to the inner circumferential laminated core and the protrusion combined to the outer circumferential laminated core.

**9.** A permanent magnet synchronization motor according to claim 8, further comprising a field winding portion constituted of a field winding and a field winding yoke, the field winding portion being disposed outside of an end portion in the rotation axis direction of the rotor, wherein
when the field winding portion generates a magnetic flux, a combined magnetic flux of a magnetic flux generated by the permanent magnet and the magnetic flux generated by the field winding portion has a linkage with an armature winding of a stator of the permanent magnet synchronization motor.

**10.** A permanent magnet synchronization motor according to claim 9, wherein the protrusion and the field winding yoke are formed so that the magnetic flux generated by the field winding portion passes through the protrusion and the air gap, while passing through a magnetic path via the field winding yoke, the inner circumferential core, the outer circumferential core and a core of the stator.

**11.** A motor drive system, comprising:

the permanent magnet synchronization motor according to any one of claims 1 to 3;
an inverter which supplies armature current to the motor so as to drive the motor; and
a motor control device which controls the motor via the inverter.

**12.** A compressor which uses a drive power source that is a rotation force of the permanent magnet synchronization motor provided to the motor drive system according to claim 11.

**Amended claims under Art. 19.1 PCT**

**1.** (Amended) A permanent magnet synchronization motor comprising:

a rotor formed as a combination of a permanent magnet, an inner circumferential core disposed inward of the permanent magnet, and an outer circumferential core disposed outward of the permanent magnet; and
a stator including an armature winding, wherein
the armature winding is supplied with current in a direction of weakening flux linkage of the armature winding by the permanent magnet, and

when $T_M$ denotes a thickness of the permanent magnet in an inter-pole direction of the permanent magnet, an air gap having a thickness that is $1/2 \times T_M$ or smaller is disposed between the outer circumferential core and the inner circumferential core of the rotor.

2. A permanent magnet synchronization motor according to claim 1, wherein when a d-axis is set to a direction of the magnetic flux generated by the permanent magnet, the thickness of the air gap that is $1/2 \times T_M$ or smaller is a length of the air gap in the d-axis direction..

3. A permanent magnet synchronization motor according to claim 1, wherein the thickness of the air gap is $1/5 \times T_M$ or smaller.

4. A permanent magnet synchronization motor according to any one of claims 1 to 3, wherein the permanent magnet forms a permanent magnet of one pole including two permanent magnets, and the air gap is disposed between the two permanent magnets.

5. A permanent magnet synchronization motor according to any one of claims 1 to 3, wherein the air gap is adjacent to an end surface of the permanent magnet in a direction perpendicular to the inter-pole direction of the permanent magnet.

6. A permanent magnet synchronization motor according to any one of claims 1 to 3, wherein the air gap and the permanent magnet are adjacent to each other in a plane direction perpendicular to the rotation axis of the rotor.

7. A permanent magnet synchronization motor according to claim 6, wherein the inner circumferential core and the outer circumferential core of the rotor are formed by laminating a plurality of steel sheets in a rotation axis direction of the rotor.

8. A permanent magnet synchronization motor according to any one of claims 1 to 3, wherein
the inner circumferential core and the outer circumferential core of the rotor respectively include an inner circumferential laminated core and an outer circumferential laminated core that are formed by laminating a plurality of steel sheets in a rotation axis direction of the rotor,
a protrusion made of magnetic material protruding in the rotation axis direction of the rotor is combined to each of the inner circumferential laminated core and the outer circumferential laminated core, and
the air gap is disposed between the protrusion combined to the inner circumferential laminated core and the protrusion combined to the outer circumferential laminated core.

9. (Amended) A permanent magnet synchronization motor according to claim 8, further comprising a field winding portion constituted of a field winding and a field winding yoke, the field winding portion being disposed outside of an end portion in the rotation axis direction of the rotor, wherein
when the field winding portion generates a magnetic flux, a combined magnetic flux of a magnetic flux generated by the permanent magnet and the magnetic flux generated by the field winding portion has a linkage with the armature winding.

10. A permanent magnet synchronization motor according to claim 9, wherein the protrusion and the field winding yoke are formed so that the magnetic flux generated by the field winding portion passes through the protrusion and the air gap, while passing through a magnetic path via the field winding yoke, the inner circumferential core, the outer circumferential core and a core of the stator.

11. A motor drive system, comprising:

the permanent magnet synchronization motor according to any one of claims 1 to 3;
an inverter which supplies armature current to the motor so as to drive the motor; and
a motor control device which controls the motor via the inverter.

12. A compressor which uses a drive power source that is a rotation force of the permanent magnet synchronization motor provided to the motor drive system according to claim 11.

FIG.1

FIG.2

# FIG.3

# FIG.4

## FIG.5

## FIG.6

$$Wa = Wm_1 + Wm_2$$

# FIG.7

# FIG.8

## FIG.9

## FIG.10

# FIG.11

EP 2 270 957 A1

# FIG.12

## FIG.13

## FIG.14

FIG.15

FIG.16

(a)

$A_2$  $A_1$  $A_3$

20d

22

Z

$A_2'$  $A_1'$  $A_3'$

(b)

B

Y

20d

X

22

B'

# FIG.17

EP 2 270 957 A1

A₂-A₂' CROSS SECTION

(a)

B-B' CROSS SECTION

(b)

# FIG.18

A₁-A₁' CROSS SECTION

# FIG.19

### B-B' CROSS SECTION

# FIG.20

B-B' CROSS SECTION

STEEL SHEET LAMINATION DIRECTION

FIG.21

B-B' CROSS SECTION

# FIG.22

MOTOR
- STATOR (10)
  - STATOR LAMINATED CORE (11); INCLUDING TEETH (13)
  - ARMATURE WINDING
- ROTOR (20f)
  - ROTOR LAMINATED CORE (21f)
    - INNER CIRCUMFERENTIAL LAMINATED CORE (100)
      - INNER CIRCUMFERENTIAL CORE BODY (101)
      - INNER CIRCUMFERENTIAL CORE BODY (102)
        ⋮
    - OUTER CIRCUMFERENTIAL LAMINATED CORE
      - OUTER CIRCUMFERENTIAL CORE BODY (111)
      - OUTER CIRCUMFERENTIAL CORE BODY (112)
        ⋮
    - BRIDGE PORTION
  - SHAFT (22)
  - PERMANENT MAGNETS (31f-34f)
  - NON-MAGNETIC MEMBERS (25-28)
  - PROTRUSIONS
- FIELD WINDING PORTION
  - FIELD WINDING
  - FIELD WINDING YOKE
    - BOTTOM YOKE PORTION
    - INNER CIRCUMFERENTIAL YOKE PORTION
    - OUTER CIRCUMFERENTIAL YOKE PORTION

EP 2 270 957 A1

# FIG.23

(a)

(b)

FIG.24

(a)

(b)

EP 2 270 957 A1

# FIG.25

# FIG.26

FIG.27

(a)

(b)

## FIG.28

# FIG.29

FIG.30

(a)

(b)

EP 2 270 957 A1

FIG.31

FY

130

133

132

131

135 — — — → Z
(POSITIVE SIDE)

131

132

133

FIG.32

FY

Y

X

O

135

131

132

133

# FIG.33

FIG.34

ROTATION
DIRECTION

211
213
201
212
220
210

FIG.35

(a)

(b)

# FIG.36

# FIG.37

# FIG.38

FIRST STRUCTURAL ELEMENT   SECOND STRUCTURAL ELEMENT   THIRD STRUCTURAL ELEMENT

$C_1$     $C_2$     220

$\longrightarrow Z$

$C_1'$     $C_2'$

# FIG.39

MOTOR

STATOR (210)
- STATOR LAMINATED CORE (211) ; INCLUDING TEETH (213)
- ARMATURE WINDING

ROTOR (220b)
- ROTOR LAMINATED CORE

INNER CIRCUMFERENTIAL LAMINATED CORE (240b)
- INNER CIRCUMFERENTIAL CORE BODY (241)
- INNER CIRCUMFERENTIAL CORE BODY (242)

OUTER CIRCUMFERENTIAL LAMINATED CORE (250b)
- OUTER CIRCUMFERENTIAL CORE BODY (251)
- OUTER CIRCUMFERENTIAL CORE BODY (252)

BRIDGE PORTION

- PERMANENT MAGNETS (231b-234b)

- PROTRUSIONS

FIELD WINDING PORTION
- FIELD WINDING
- FIELD WINDING YOKE

BOTTOM YOKE PORTION
INNER CIRCUMFERENTIAL YOKE PORTION
OUTER CIRCUMFERENTIAL YOKE PORTION

FIG.40

# FIG.41

(a)

(b)

# FIG.42

FIG.43

(a)

(b)

# FIG.44

# FIG.45

FIG.46

FY'

330

333

332

331

335

Z
(POSITIVE SIDE)

331

332

333

FY'

FIG.47

Y

X

O

335

333

331  332

# FIG.48

## FIG.49

## FIG.50

## INTERNATIONAL SEARCH REPORT

| | International application No. |
|---|---|
| | PCT/JP2009/055286 |

A.   CLASSIFICATION OF SUBJECT MATTER
*H02K1/27*(2006.01)i, *H02K1/22*(2006.01)i, *H02K21/14*(2006.01)i, *H02P27/06*
(2006.01)i

According to International Patent Classification (IPC) or to both national classification and IPC

B.   FIELDS SEARCHED

Minimum documentation searched (classification system followed by classification symbols)
H02K1/27, H02K1/22, H02K21/14, H02P27/06

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2007-336671 A  (Toshiba Mitsubishi-Electric<br>Industrial Systems Corp.),<br>27 December, 2007 (27.12.07),<br>All pages<br>(Family: none) | 1-7<br>8-12 |
| Y | JP 2003-274591 A  (Sanyo Electric Co., Ltd.),<br>26 September, 2003 (26.09.03),<br>All pages<br>& CN 1445910 A          & TW 272753 B | 8-10,12 |
| Y | JP 2008-43099 A  (Toyota Motor Corp.),<br>21 February, 2008 (21.02.08),<br>All pages<br>& US 2008/0036331 A1    & DE 102007000429 A<br>& CN 101123370 A | 9,10 |

| ☒   Further documents are listed in the continuation of Box C. | ☐   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 June, 2009 (04.06.09) | 16 June, 2009 (16.06.09) |

| Name and mailing address of the ISA/<br>Japanese Patent Office | Authorized officer |
|---|---|
| Facsimile No. | Telephone No. |

Form PCT/ISA/210 (second sheet) (April 2007)

| | INTERNATIONAL SEARCH REPORT | International application No. |
|---|---|---|
| | | PCT/JP2009/055286 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2008/013167 A1  (Toshiba Corp.),<br>31 January, 2008 (31.01.08),<br>Fig. 11<br>& EP 2048772 A | 11,12 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7298587 A

- JP 8051751 A